(19) Europäisches Patentamt
European Patent Office
Office européen des brevets

(11) **EP 2 638 367 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **11771172.1**

(22) Anmeldetag: **20.10.2011**

(51) Int Cl.:
**G01F 1/84** *(2006.01)*    **G01F 15/02** *(2006.01)*

(86) Internationale Anmeldenummer:
**PCT/EP2011/068366**

(87) Internationale Veröffentlichungsnummer:
**WO 2012/062551 (18.05.2012 Gazette 2012/20)**

(54) **MESSSYSTEM MIT EINEM MESSWANDLER VOM VIBRATIONSTYP**

MEASURING SYSTEM HAVING A VIBRATION-TYPE MEASURING TRANSDUCER

SYSTÈME DE MESURE COMPRENANT UN CONVERTISSEUR DE MESURE DU TYPE À VIBRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2010 DE 102010044179**
**11.11.2010 DE 102010050927**

(43) Veröffentlichungstag der Anmeldung:
**18.09.2013 Patentblatt 2013/38**

(60) Teilanmeldung:
**19209687.3**

(73) Patentinhaber: **Endress+Hauser Flowtec AG**
**4153 Reinach (CH)**

(72) Erfinder:
• **DRAHM, Wolfgang**
**85435 Erding (DE)**
• **ZHU, Hao**
**85354 Freising (DE)**
• **RIEDER, Alfred**
**84032 Landshut (DE)**
• **WIESMANN, Michael**
**85356 Freising (DE)**
• **OUDOIRE, Patrick**
**F-68360 Soultz (FR)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 1 876 428          WO-A1-2009/134830
WO-A2-2007/045539     DE-A1-102005 044 008
US-A- 5 576 500

• Timothy J Cunningham: "An In-Situ Verification Technology for Coriolis Flowmeters", 7th international symposium on fluid flow measurement (ISFFM 2009), 13 August 2009 (2009-08-13), XP055473648,

**Beschreibung**

Die Erfindung betrifft ein, insb. als ein Kompakt-Meßgerät und/oder ein Coriolis-Massedurchfluß-Meßgerät ausgebildetes, Meßsystem für fließfähige, insb. fluide, Medien, das einen im Betrieb zumindest zeitweise von Medium durchströmten, von wenigstens einer das strömende Medium charakterisierenden Meßgröße, insb. einem Massendurchfluß, einer Dichte, einer Viskosität etc., beeinflußte Schwingungssignale generierenden Meßwandler vom Vibrationstyp sowie eine mit dem Meßwandler elektrisch gekoppelte und vom Meßwandler gelieferte Schwingungssignale zu Meßwerten verarbeitende Umformer-Elektronik umfaßt.

In der industriellen Meßtechnik werden, insb. auch im Zusammenhang mit der Regelung und Überwachung von automatisierten verfahrenstechnischen Prozessen bzw. Prozeßanlagen, zur Ermittlung von charakteristischen Meßgrößen von in einer Prozeßleitung, beispielsweise einer Rohrleitung, strömenden Medien, beispielsweise Flüssigkeiten und/oder Gasen, Pasten oder Pulver oder anderen fließfähigen Meßstoffen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen das Medium entsprechend charakterisierenden Mediumsparameter, entsprechend repräsentierende Meßwerte erzeugen.

Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 317 340, der EP-A 816 807, der JP-A 8-136311, der JP-A 9-015015, der US-A 2006/0112774, der US-A 2007/0062308, der US-A 2007/0113678, der US-A 2007/0119264, der US-A 2007/0119265, der US-A 2007/0151370, der US-A 2007/0151371, der US-A 2007/0186685, der US-A 2008/0034893, der US-A 2008/0041168, der US-A 2008/0141789, der US-A 2010/0050783, der US-A 2010/0139416, der US-A 2010/0139417, der US-A 2010/0236338, der US-A 2010/0242623, der US-A 2010/0242624, der US-A 2010/0011882, der US-A 2010/0251830, der US-A 46 80 974, der US-A 47 38 144, der US-A 47 77 833, der US-A 48 01 897, der US-A 48 23 614, der US-A 48 79 911, der US-A 50 09 109, der US-A 50 24 104, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 34 112, der US-A 57 96 010, der US-A 57 96 011, der US-A 57 96 012, der US-A 58 04 741, der US-A 58 61 561, der US-A 58 69 770, der US-A 59 45 609, der US-A 59 79 246, der US-A 60 47 457, der US-A 60 92 429, der US-A 60 73 495, der US-A 63 111 36, der US-B 62 23 605, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 16 550, der US-B 72 99 699, der US-B 73 05 892, der US-B 73 60 451, der US-B 73 92 709, der US-B 74 06 878, der US-B 75 62 586, der WO-A 00/14485, der WO-A 01/02816, der WO-A 03/021205, der WO-A 2004/072588, der WO-A 2005/040734, der WO-A 2005/050145, der WO-A 2007/097760, der WO-A 2008/013545, der WO-A 2008/077574, der WO-A 95/29386, der WO-A 95/16897, der WO-A 96/05484, der WO-A 99/40394 oder den eigenen, nicht vorveröffentlichten deutschen Patentanmeldungen DE102009055069.0 bzw. DE102010039627.3 beschrieben. Jeder der darin gezeigten Meßwandler umfaßt wenigstens ein in einem Meßwandler-Gehäuse untergebrachtes, im wesentlichen gerades oder gekrümmtes Meßrohr zum Führen des, gegebenenfalls auch extrem schnell oder extrem langsam strömenden, Mediums. Das wenigstens eine Meßrohr, das an einem mit der jeweiligen Prozeßleitung kommunizierenden einlaßseitigen ersten Meßrohrende und einem gleichermaßen mit der Prozeßleitung kommunizierenden auslaßseitigen zweiten Meßrohrende jeweils mit dem Meßwandler-Gehäuse mechanischen gekoppelt ist und das sich zwischen den beiden Meßrohrenden mit einer im wesentlichen freien Nutz-Schwinglänge erstreckt, wird zwecks Generierung von durch das hindurchströmende Medium, mithin dem davon jeweils zu messenden Mediumsparameter beeinflußten Schwingungen bzw. zwecks Generierung von damit entsprechend korrespondierenden Schwingungssignalen im Betrieb in dem Fachmann an und für sich bekannter Weise aktiv zu Vibrationen um eine Ruhelage in einer für die jeweilige Messung geeigneten Schwingungsform - dem sogenannten Nutzmode - angeregt.

Bei Meßwandlern mit zwei oder mehr Meßrohren sind diese zumeist über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehaltert, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Bei Meßsystemen der in Rede stehenden Art dient als Nutzmode üblicherweise einer von einer Vielzahl von dem Meßrohr innewohnenden natürlichen Schwingungsmoden, d.h. das wenigstens eine Meßrohr wird vornehmlich zu Schwingungen in Resonanz aktiv angeregt, so daß es im Nutzmode überwiegend Eigenschwingungen mit einer seiner momentanen Eigenfrequenzen ausführt. Zumeist dient als Nutzmode ein natürlicher Schwingungsmode erster Ordnung, der sogenannte Grundmode, des wenigstens einen Meßrohrs, in dem das wenigstens eine Meßrohr Eigenschwingungen um seine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen. Im besonderen wird bei Meßwandlern mit gekrümmtem, z.B. U-, V- oder $\Omega$-artig geformtem, Meßrohr bzw. gekrümmten Meßrohren als Nutzmode üblicherweise jene, auch als Biegeschwingungsgrundmode bezeichnete, Eigenschwingungsform gewählt, bei denen das jeweilige Meßrohr zumindest anteilig um eine gedachte Längsachse des Meßwandlers nach Art eines lediglich endseits eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß eines natürlichen Schwingungsmode höherer Ordnung, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jenem Schwingungsmode, in dem das wenigstens eine Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher natürlicher Schwingungsmode als Nutzmode gewählt, bei dem das Meßrohr zumindest anteilig Biegeschwingungen im wesentlichen in einer einzigen gedachten Schwingungsebene ausführt, beispielsweise wiederum einem einen einzigen Schwingungsbauch aufweisenden Biegeschwingungsgrundmode, so daß die Schwingungen im Coriolismode dementsprechend als komplanare, mithin zu den Nutzmodeschwingungen frequenzgleiche Biegeschwingungen ausgebildet sind, die hinsichtlich ihrer Schwingungsform im wesentlichen einem Biegeschwingungsmode zweiter Ordnung entsprechen. Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf.

Üblicherweise werden die Meßrohre derartiger, z.B. in Coriolis-Massedurchflußmessern eingesetzte, Meßwandler im Betrieb ausschließlich oder zumindest überwiegend auf einer momentanen Eigenfrequenz der für den Nutzmode gewählten Schwingungsform angeregt, beispielsweise also einer niedrigsten Eigenfrequenz, mithin also in Resonanz vibrieren gelassen, dies zumeist auch bei konstantgeregelter Schwingungsamplitude. Da die Eigenfrequenz jedes natürlichen Schwingungsmoden des wenigstens einen Meßrohrs im besonderen auch von der momentanen Dichte des Mediums abhängig ist, kann mittels marktüblicher Coriolis-Massedurchflußmesser neben dem Massedurchfluß zusätzlich so auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten, als primäre Meßwerte dienende Mediumsparameter Massendurchflußrate, Dichte und Viskosität abgeleitete Meßgrößen, wie etwa gemäß der US-B 65 13 393 die Reynoldszahl zu ermittelt werden.

Zum aktiven Anregen von Schwingungen des wenigstens einen Meßrohrs weisen Meßwandler vom Vibrationstyp des weiteren eine im Betrieb von einem von einer in der erwähnten Umformer-Elektronik vorgesehenen Treiberschaltung generierten und entsprechend konditionierten elektrischen Treibersignal, z.B. mit einem hinsichtlich Frequenz, Phasenlage und Amplitude geregelten Strom, angesteuerte Erregeranordnung auf, die das Meßrohr mittels wenigstens eines im Betrieb von einem Strom durchflossenen, auf das Meßrohr praktisch direkt einwirkenden elektro-mechanischen, insb. elektro-dynamischen, Schwingungserregers zu Schwingungen im Nutzmode, mithin zu Schwingungen in Resonanz anregt. Desweiteren umfassen derartige Meßwandler eine Sensoranordnung mit, insb. elektro-dynamischen, Schwingungssensoren zum zumindest punktuellen Erfassen einlaßseitiger und/oder auslaßseitiger Schwingungen des wenigstens einen Meßrohrs, insb. denen im Coriolismode, und zum Erzeugen von vom zu erfassenden Mediumsparameter, wie etwa dem Massedurchfluß oder der Dichte, beeinflußten, als Schwingungssignale des Meßwandlers dienenden elektrischen Spannungen. Wie beispielsweise in der US-B 72 16 550 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Zwecks Antreiben des erwähnten Nutzmodes in der eingangs erwähnten Weise weist bei den meisten, nicht zuletzt auch marktgängigen, konventionellen Meßsystemen der in Rede stehenden Art das von der Umformer-Elektronik gelieferte Treibersignal zumindest zeitweise eine einzige oder zumindest dominierende Signalkomponente mit einer Signalfrequenz auf, die einer momentanen Eigenfrequenz des erwähnten natürlichen Schwingungsmodes erster Ordnung, beispielsweise also des Biegeschwingungsgrundmodes, des wenigstens einen Meßrohrs entspricht. Im Ergebnis dessen führt somit das wenigstens eine Meßrohr, angeregt vom wenigstens einen Schwingungserreger, zumindest anteilig, zumeist auch überwiegend, Schwingungen in Resonanz, nämlich mit einer der momentanen Eigenfrequenz des Schwingungsmodes erster Ordung entsprechenden Schwingungsfrequenz aus, und weist auch das wenigstens eine Schwingungssignal dementsprechend zumindest zeitweise eine Signalkomponente mit einer Signalfrequenz auf, die der Signalfrequenz der Signalkomponente des Treibersignals, mithin der momentanen Eigenfrequenz des damit angeregten Schwingungsmodes erster Ordnung entspricht.

Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder ein ggf. vorhandenes anderes Meßrohr einwirkenden Schwingungserreger zum Konvertieren von elektrischer Erregerleistung in Vibrationen des wenigstens einen Meßrohrs auf, während die Sensoranordnung wenigstens einen, zumeist ebenfalls elektrodynamischen, Schwingungssensor zum Erfassen von Vibrationen des wenigstens einen Meßrohrs, beispielsweise also einlaßseitigen oder auslaßseitigen Biegeschwingungen, und zum Erzeugen eines nämliche - etwa einlaßseitige bzw. auslaßseitige - Vibrationen zumindest des wenigstens einen Meßrohrs repräsentierenden Schwingungssignals umfaßt. Überwiegend, nicht zuletzt aber für den erwähnten Fall, daß das Meßsystem als ein dem Erfassen von Massendurchflußraten bzw. Massendurchflüssen dienendes Coriolis-Masendurchfluß-Meßgerät ausgebildet ist, weist die Sensoranordnung zusätzlich zu dem einen - einlaßseitigen - Schwingungssensor wenigstens einen dazu im wesentlichen baugleichen - auslaßseitigen - Schwingungssensor auf. Solche elektrodynamischen und/oder differentiellen Schwingungserreger marktgängiger Meßwandler vom Vibrationstyp, mithin marktgängiger Meßsysteme der in Rede stehenden Art sind mittels einer zumindest zeitweise von einem Wechselstrom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohrwirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden. Bei den meisten marktgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch der wenigstens eine Schwingungssensor bzw. die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen über den Gegenschwinger hin zum Meßwandler-Gehäuse geführt sind.

Wie u.a. in den eingangs erwähnten der US-B 73 92 709, der US-B 75 62 586, der US-A 2007/0113678, der WO-A 99/39164 bzw. der WO-A 03/021205 diskutiert, können Meßwandler vom Vibrationstyp, mithin die damit gebildeten Meßsysteme während ihrer, zumeist mehrere Jahre umfassenden, Laufzeit einer Vielzahl von Belastungen ausgesetzt sein, die erhebliche Abweichungen des Meßsystems von einem dafür vorab, etwa bei einer Kalibrierung im Herstellerwerk und/oder bei einer Inbetriebnahme des Meßsystems, ermittelten Referenzzustand bewirken und damit einhergehend die Meßgenauigkeit des Meßsystems, mit der dieses die zu erfassenden Mediumsparameter in die entsprechenden Meßwerte schlußendlich abbildet, signifikant herabsetzen können. Als Beispiele für solche, im Ergebnis ein Schwingungsverhalten des wenigstens einen Meßrohrs insgesamt irreversible verändernde Belastungen, seien sie nun einmalig oder mehrfach wiederkehrend bzw. dauerhaft oder nur kurzzeitig auftretend, können exemplarisch Übertemperaturen, hohe Temperaturshocks oder andere thermisch bedingte Überbelastungen des wenigstens einen Meßrohrs, hohe Druckstöße im Medium, seitens der Prozeßleitung auf den Meßwandler ausgeübte zu hohe Einspannkräfte und/oder Rüttelkräfte und damit einhergehende Rißbildung und/oder plastische Deformation im wenigstens einen Meßrohr, seitens des im Meßwandler geführten Mediums, beispielsweise durch Korrosion und/oder Abrasion, bewirkte Erodierung des wenigstens einen Meßrohrs von Innen heraus, mithin eine Reduzierung von dessen Wandstärke, die Bildung von Belag auf der mediumsberührenden Innenseite des wenigstens einen Meßrohrs, Materialermüdung oder andere Abnutzungserscheinungen am wenigstens einen Meßrohr zu nennen. Darüberhinaus können während der Laufzeit des Meßsystems auch der wenigstens einen Schwingungserreger wie auch jeder der Schwingungssensoren, etwa durch thermisch bedingte Überlastung bzw. Alterung, für die Meßgenauigkeit relevanten Veränderungen unterworfen sein, etwa derart, daß im Ergebnis auch eine elektrische Impedanz des Meßwandlers verändert ist. Im Ergebnis solcher Belastungen variiert schlußendlich stets eine dem Meßwandler immanente Meßwandler-Übertragungsfunktion, gemäß der der vom wenigstens einen Treibersignal angesteuerte Meßwandler letztlich den jeweils zu erfassenden Mediumsparameter in die jeweiligen Schwingungssignale konvertiert, in einer zunächst nicht ohne weiteres erkenn- oder vorhersehbaren, jedoch gelegentlich hinsichtlich der angestrebten hohen Meßgenauigkeit nicht mehr zu vernachlässigenden Weise, arbeitet also das Meßsystem insgesamt fehlerhaft. Zudem müssen infolge solcher, nicht zuletzt auch die strukturelle Integrität des Meßwandlers insgesamt beeinflussende Überlastungen, Beeinträchtigungen der Funktionstüchtigkeit des Meßsystems oder unter Umständen sogar auch zu Leckage oder Explosion führenden Zerstörungen des Meßwandlers besorgt werden. Solche auch die Betriebssicherheit von Meßsystemen der in Rede stehenden Art betreffenden Veränderungen gegenüber dem Referenzzustand, können, nicht zuletzt im Falle toxischer und/oder leicht entflammbarer Medien bzw. im Falle von unter hohem Druck stehenden Gasen, durchaus auch katastrophale Folgen für die gesamte Prozeßanlage sowie sich darin aufhaltende Personen haben. Dem Rechnung tragend werden Meßsysteme der in Rede stehenden Art üblicherweise wiederkehrend entsprechenden Nachprüfungen unterzogen, etwa im Zuge von mit der vorausschauenden Instandhaltung verbundenen Maßnahmen, und bei Bedarf, etwa bei diagnostizierte erhöhter Meßungenauigkeit, gelegentlich entsprechend nachkalibriert oder ausgetauscht.

Zwecks möglichst frühzeitiger Erkennung einer ein vorgegebenes Toleranzmaß überschreitenden Abweichung des Meßsystems vom dafür vorab ermittelten Referenzzustand, mithin einer Diagnose von seitens des Meßwandlers bedingten Fehlern des Meßsystems, und der damit einhergehend sich anbahnenden signifikanten Verringerung der Meßgenauigkeit bzw. der Betriebssicherheit von Meßsystemen der in Rede stehenden Art ist beispielsweise in der US-A 2010/0011882, der US-A 2007/0062308, der US-A 2007/0113678, WO-A 96/05484, WO-A 99/39164, der WO-A 03/021205 oder der EP-A 816 807 Meßsystem vorgeschlagen, vorgenannte Veränderungen von solchen Meßsystemen anhand von Vergleichen aktueller, nämlich im Betrieb ermittelter, Schwingungsantworten ausgewählter Komponenten des Meßwandlers bzw. nämliche Schwingungsantworten repräsentierender Systemparameter, beispielsweise eine Meßrohrsteifigkeit, eine Vielzahl von, ggf. auch frequenzselektiv erfaßten, Dämpfungsfaktoren, Verhältnisse von mechanischen Eigenfrequenzen des wenigstens Meßrohrs oder andere, vorbestimmte Meßwandler-Übertragungsfunktionen beschreibende, mithin das Meßsystem charakterisierende Systemparameter etc., auf ausgewählte - breitbandige bzw. frequenzselektive - Schwingungsanregungen, wie etwa eine Schlag oder eine kontinuierliche, ggf. auch multimodale, Schwingungsanregung einer bzw. mehrerer der Eigenfrequenzen des wenigstens Meßrohrs, mit dafür zuvor im Referenzzustand des Meßsystems passend ermittelten Meßwandler-Übertragungsfunktionen bzw. diese repräsentierende Referenz-Systemparameter zu vergleichen, um beispielsweise bei Überschreiten eines entsprechend vorgegebenen, ein noch akzeptables Toleranzmaß repräsentierenden, Schwellenwerts, mithin bei Diagnostizieren eines Fehlers, eine dies entsprechend signalisierende Systemstatusmeldung, beispielsweise ein Alarm, zu generieren. Alternativ zu solchen, schlußendlich jeweils immer auf Messungen von Resonanz-Schwingungen des wenigstens einen Meßrohrs beruhenden, mithin in erheblichem Maße auch von Mediumsparametern, insb. Dichte und Viskosität, abhängigen Diagnoseverfahren ist darüberhinaus in der US-A 2007/0113678 ferner vorgeschlagen, eine - nicht näher spezifizierte - Komponente des Meßsystems, etwa das Meßwandler-Gehäuse, mit einer erzwungene Schwingung anzuregen, nämlich auf genau einer Schwingungsfrequenz, die außerhalb einer Resonanzfrequenz nämlicher Komponenten liegt, um bestimmte - allerdings ebenfalls nicht näher spezifizierte - Charakteristiken des Meßsystems zu ermitteln, die ansonsten, nämlich über die Beobachtung von Eigenfrequenzen, nur schwer zugänglich sind. Ob oder inwieweit bzw. anhand welcher Faktoren damit schlußendlich eine Abweichung des Meßsystems vom Referenzzustand überhaupt festzustellen, nicht zuletzt aber auch ein Fehlerzustand des Meßsystems im Betrieb desselben tatsächlich zu diagnostizieren wäre, ist allerdings nicht

Die WO2009134830 offenbart ein Coriolis-Massendurchflußmeßgerät, das simultan oder sequentiell bei einer Reihe von diskreten Resonanz- und Nicht-Resonanzfrequenzen angeregt werden kann.

Ein Aufgabe der Erfindung besteht daher darin, mittels Meßwandler vom Vibrationstyp gebildet Meßsysteme dahingehend zu verbessern, daß damit - nicht zuletzt aber auch mit den bereits konventionellen, mithin etablierten Meßsystemen der in Rede stehenden Art "bordeigenen" Schwingungserregern und -sensoren und möglichst auch ohne den eigentlichen Meßbetrieb nennenswert zu beeinflussen oder gar unterbrechen zu müssen - das Auftreten von die Meßgenauigkeit und/oder die Betriebssicherheit herabsetzenden Verschleiß- bzw. Alterungserscheinungen des jeweiligen Meßwandlers möglichst frühzeitig und zuverlässig detektiert, ggf. auch signalisiert werden können; dies im besonderen auch weitgehend unabhängig vom im Meßwandler strömenden Medium sowie unter weitgehender, ggf. auch ausschließlicher Verwendung der für solche Meßsystemen, nicht zuletzt auch für die darin bis anhin verbauten Meßwandler, bewährten Designs wie auch unter gleichermaßen weitgehender Beibehaltung bewährten Technologien und Architekturen etablierter Umformer-Elektroniken.

Die Aufgabe wird durch die Merkmale von Anspruch 1 gelöst.

Zur Lösung der Aufgabe besteht die Erfindung in einem Meßsystem für, beispielsweise in Rohrleitungen, strömende Medien, welches Meßsystem einen im Betrieb von einem Medium, beispielsweise einem Gas und/oder einer Flüssigkeit, einer Paste oder einem Pulver oder einem anderen fließfähigem Material, durchströmten Meßwandler vom Vibrationstyp zum Erzeugen von mit Mediumsparametern des strömenden Mediums, beispielsweise einer Massendurchflußrate, einer Dichte und/oder einer Viskosität, korrespondierenden Schwingungssignalen sowie eine mit dem Meßwandler elektrisch gekoppelte Umformer-Elektronik zum Ansteuern des Meßwandlers und zum Auswerten von vom Meßwandler gelieferten Schwingungssignalen umfaßt. Der Meßwandler weist wenigstens ein, beispielsweise V-förmiges, U-förmiges oder gerades, sich zwischen einem einlaßseitigen ersten Meßrohrende und einem auslaßseitigen zweiten Meßrohrende mit einer Nutz-Schwinglänge erstreckendes Meßrohr, dem eine Vielzahl von natürlichen Schwingungsmoden innewohnen, zum Führen von strömendem Medium, wenigstens einen, beispielsweise elektrodynamischen, Schwingungserreger zum Konvertieren von elektrischer Erregerleistung in Vibrationen des wenigstens einen Meßrohrs, beispielsweise derart, daß das wenigstens eine Meßrohrs zumindest anteilig und/oder zumindest zeitweise Schwingungen um eine Ruhelage, mit einer momentanen Eigenfrequenz eines dem Meßrohr immanenten natürlichen Schwingungsmodes ausführt, und wenigstens einen, beispielsweise elektrodynamischen, Schwingungssensor zum Erfassen von, beispielsweise einlaßseitigen oder auslaßseitigen, Vibrationen des wenigstens einen Meßrohrs und zum Erzeugen eines, beispielsweise einlaßseitige bzw. auslaßseitige, Vibrationen zumindest des wenigstens einen Meßrohrs repräsentierenden Schwingungssignals des Meßwandlers auf. Die Umformer-Elektronik liefert ein dem Einspeisen von elektrischer Erregerleistung in den wenigstens einen Schwingungserreger, mithin dem Bewirken von Vibrationen des wenigstens einen Meßrohrs dienendes Treibersignal für den wenigstens einen Schwingungserreger, derart, daß das Treibersignal zumindest zeitweise eine, beispielsweise mehrere Schwingungsperioden aufweisende, sinusförmige Signalkomponente erster Art mit einer Signalfrequenz, $f_{drv,I}$, aufweist, die einer momentanen Eigenfrequenz, $f_1$, eines natürlichen Schwingungsmodes erster Ordnung des wenigstens einen Meßrohrs entspricht, in dem das wenigstens eine Meßrohr Eigenschwingungen um eine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen, wodurch das wenigstens eine Meßrohr, angeregt vom wenigstens einen Schwingungserreger, zumindest anteilig, beispielsweise auch überwiegend, Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, ausführt, und das wenigstens eine Schwingungssignal zumindest zeitweise eine, beispielsweise mehrere Schwingungsperioden aufweisende, sinusförmige Signalkomponente erster Art mit einer Signalfrequenz, $f_{sens,I}$, aufweist, die der Signalfrequenz, $f_{drv,I}$, der Signalkomponente erster Art des Treibersignals, mithin der momentanen Eigenfrequenz, $f_1$, des Schwingungsmodes erster Ordnung entspricht, und, derart daß das Treibersignal zumindest zeitweise eine, beispielsweise hinsichtlich einer Signalleistung momentan dominierende und/oder mehrere Schwingungsperioden aufweisende, sinusförmige Signalkomponente zweiter Art mit einer Signalfrequenz, $f_{drv,II}$, aufweist, die von jeder momentanen Eigenfrequenz jedes natürlichen Schwingungsmodes des wenigstens einen Meßrohrs jeweils um mehr als 1Hz, beispielsweise auch um mehr als 10Hz, und/oder um mehr als 1%, beispielsweise auch mehr als 10%, nämlicher Eigenfrequenz, abweicht, wodurch das wenigstens eine Meßrohr, angeregt vom wenigstens einen Schwingungserreger, zumindest anteilig erzwungene Schwingungen außer Resonanz ausführt, und das wenigstens eine Schwingungssignal zumindest zeitweise eine, beispielsweise mehrere Schwingungsperioden aufweisende, sinusförmige Signalkomponente zweiter Art mit einer Signalfrequenz, $f_{sens,II}$, aufweist, die der Signalfrequenz, $f_{drv,II}$, der Signalkomponente zweiter Art des Treibersignals, mithin keiner momentanen Eigenfrequenz irgendeines natürlichen Schwingungsmodes des wenigstens einen Meßrohrs entspricht.

Nach einer ersten Ausgestaltung der Erfindung ist ferner vorgesehen, daß die Umformer-Elektronik die Signalfrequenz der Signalkomponente zweiter Art des Treibersignals in Abhängigkeit von der Signalkomponente erster Art des Treibersignals und/oder in Abhängigkeit von der Signalkomponente erster Art des Schwingungssignals einstellt, beispielsweise derart, daß die Umformer-Elektronik die Signalfrequenz der Signalkomponente zweiter Art des Treibersignals in einem, beispielsweise bereits seitens des Herstellers fest, vorgegebenen Frequenz-Verhältnis zur momentanen Eigenfrequenz, $f_1$, des Schwingungsmodes erster Ordnung bzw. zur momentanen Signalfrequenz der Signalkomponente erster Art des Treibersignals einstellt. Diese Ausgestaltung der Erfindung weiterbildend ist ferner vorgesehen, daß die Umformer-Elektronik die Signalfrequenz der Signalkomponente zweiter Art des Treibersignals in einem vorgegebenen, beispielsweise in einem nicht-flüchtigen Datenspeicher für als einen Referenzzustand des Meßsystems repräsentierende Referenzwerte dienende Meßwerte vorgehaltenen, Frequenz-Verhältnis zur momentanen Eigenfrequenz, $f_1$, des Schwingungsmodes erster Ordnung bzw. zur momentanen Signalfrequenz der Signalkomponente erster Art des Treibersignals einstellt.

Nach einer zweiten Ausgestaltung der Erfindung ist ferner vorgesehen, daß die Umformer-Elektronik mittels der Signalkomponente zweiter Art des wenigstens einen Schwingungssignals eine, beispielsweise als ein Alarm deklarierte, Systemstatusmeldung generiert, die eine, beispielsweise durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz und/oder eine elektro-mechanische Wandlerkonstante des wenigstens einen Schwingungserregers verändernde thermische Belastungen des Meßwandlers bedingte und/oder durch eine elektrische Impedanz und/oder eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von einem dafür vorab, beispielsweise bei einer Kalibrierung und/oder bei einer Inbetriebnahme des Meßsystems, ermittelten Referenzzustand, beispielsweise visuell und/oder akustisch wahrnehmbar, signalisiert.

Nach einer dritten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die eine ein vorgegebenes Toleranzmaß überschreitende Abnutzung des Meßrohrs, beispielsweise visuell und/oder akustisch wahrnehmbar, signalisiert. Diese Ausgestaltung der Erfindung weiterbildend ist ferner vorgesehen, daß die von der Systemstatusmeldung signalisierte Abweichung daraus resultiert, daß auf einer das zu messende Medium im Betrieb kontaktierenden Innenseite des Meßrohrs ein daran haftender Belag gebildet ist, und/oder daß eine strukturelle Integrität des wenigstens einen Meßrohrs nicht mehr gewährleistet ist, beispielsweise infolge von Materialabtragung und/oder infolge von Überlastung und/oder infolge von Rißbildung und/oder infolge von Materialermüdung.

Nach einer vierten Ausgestaltung der Erfindung ist ferner vorgesehen, daß die Umformer-Elektronik mittels der Signalkomponente zweiter Art des wenigstens einen Schwingungssignals eine, beispielsweise als ein Alarm deklarierte, Systemstatusmeldung generiert, die, beispielsweise visuell und/oder akustisch wahrnehmbar, signalisiert, daß eine strukturelle Integrität des wenigstens einen Meßrohrs nicht mehr gewährleistet ist, beispielsweise infolge von Materialabtragung und/oder infolge von Überlastung und/oder infolge von Rißbildung und/oder infolge von Materialermüdung.

Nach einer fünften Ausgestaltung der Erfindung ist ferner vorgesehen, daß die Umformer-Elektronik mittels der Signalkomponente zweiter Art des wenigstens einen Schwingungssignals eine, beispielsweise als ein Alarm deklarierte, Systemstatusmeldung generiert, die, beispielsweise visuell und/oder akustisch wahrnehmbar, signalisiert, daß auf einer das zu messende Medium im Betrieb kontaktierenden Innenseite des Meßrohrs ein daran haftender Belag gebildet ist.

Nach einer sechsten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die eine ein vorgegebenes Toleranzmaß überschreitende Abtragung von Material des Meßrohrs, beispielsweise visuell und/oder akustisch wahrnehmbar, signalisiert.

Nach einer siebenten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die Rißbildung im wenigstens einen Meßrohr, beispielsweise visuell und/oder akustisch wahrnehmbar, signalisiert.

Nach einer achten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die eine ein vorgegebenes Toleranzmaß überschreitende Veränderung der Schwingungseigenschaften des wenigstens einen Meßrohrs, beispielsweise infolge Deformation und/oder infolge von Materialabtragung und/oder infolge von Rißbildung und/oder infolge von Materialermüdung, signalisiert.

Nach einer neunten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die eine ein vorgegebenes Toleranzmaß überschreitende Veränderung einer elektrischen Impedanz des Meßwandlers, beispielsweise visuell und/oder akustisch wahrnehmbar, signalisiert.

Nach einer zehnten Ausgestaltung der Erfindung ist ferner vorgesehen, daß die Umformer-Elektronik mittels der Signalkomponente zweiter Art des wenigstens Schwingungssignals eine, beispielsweise als ein Alarm deklarierte, Systemstatusmeldung generiert, die eine ein vorgegebenes Toleranzmaß überschreitende Veränderung einer elektrischen Impedanz und/oder eine elektro-mechanische Wandlerkonstante des wenigstens einen Schwingungserregers und/oder einer elektrischen Impedanz und/oder eine elektro-mechanische Wandlerkonstante des wenigstens einen Schwingungssensors, beispielsweise visuell und/oder akustisch wahrnehmbar, signalisiert.

Nach einer elften Ausgestaltung der Erfindung ist ferner vorgesehen, daß die Umformer-Elektronik mittels der Signalkomponente zweiter Art des Treibersignals, beispielsweise basierend auf einem im wenigstens einen Schwingungserreger fließenden, als Signalkomponente zweiter Art des Treibersignals dienenden Strom oder einer diesen treibende, als Signalkomponente zweiter Art des Treibersignals dienende Spannung, und mittels der Signalkomponente zweiter Art des wenigstens einen Schwingungssignals, beispielsweise basierend auf einer mittels des wenigstens einen Schwingungssensors generierten, als Signalkomponente zweiter Art des Schwingungssignals dienenden Spannung und/oder basierend auf einer Phasendifferenz der Signalkomponente zweiter Art des Schwingungssignals relativ zur Signalkomponente zweiter Art des Treibersignals, detektiert, ob und/oder inwieweit das Meßsystem im Vergleich zu einem dafür vorab, beispielsweise bei einer Kalibrierung und/oder bei einer Inbetriebnahme des Meßsystems, ermittelten Referenzzustand, beispielsweise infolge Alterung und/oder infolge Belastung des Meßwandlers, verändert ist, beispielsweise derart, daß ein im Betrieb des Meßsystems anhand der Signalkomponente zweiter Art des Treibersignals und/oder anhand der Signalkomponente zweiter Art des wenigstens einen Schwingungssignals ermittelter Systemparameter-Meßwert für wenigstens einen das Meßsystem charakterisierenden Systemparameter von einem im Referenzzustand des Meßsystems für nämlichen Systemparameter ermittelten Systemparameter-Referenzwert um mehr als ein vorgegebenes Toleranzmaß, beispielsweise um mehr als 0.1% des nämlichen Referenzwerts, abweicht.

Nach einer zwölften Ausgestaltung der Erfindung ist ferner vorgesehen, daß das Treibersignal die Signalkomponente erster Art und die Signalkomponente zweiter Art gleichzeitig aufweist, wodurch das wenigstens eine Meßrohr, angeregt vom wenigstens einen Schwingungserreger, gleichzeitig sowohl anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, als auch anteilig erzwungene Schwingungen außer Resonanz ausführt.

Nach einer dreizehnten Ausgestaltung der Erfindung ist ferner vorgesehen, daß die Signalfrequenz, $f_{drv,II}$, der Signalkomponente zweiter Art des Treibersignals größer als 5Hz, beispielsweise größer als 10Hz, ist und/oder daß die Signalfrequenz, $f_{drv,II}$, der Signalkomponente zweiter Art des Treibersignals größer als ein 0.1-faches der momentanen Eigenfrequenz des Schwingungsmodes erster Ordnung ist.

Nach einer vierzehnten Ausgestaltung der Erfindung ist ferner vorgesehen, daß die Signalfrequenz der Signalkomponente zweiter Art des Treibersignals mehr als einem 1.01-fachen, beispielsweise mehr als einem 1.15-fachen, und weniger als einem 2.7-fachen, beispielsweise weniger als einem 2.4-fachen, einer momentanen Eigenfrequenz, $f_1$, des Schwingungsmodes erster Ordnung entspricht, wodurch das wenigstens eine Meßrohr, angeregt vom wenigstens einen Schwingungserreger zumindest anteilig erzwungene Schwingungen außer Resonanz mit einer in einem Frequenzbereich, $| 1.01 \cdot f_1 < f_{drv,II}, < 2.7 \cdot f_1 |$, oberhalb des 1.01-fachen, beispielsweise oberhalb des 1.15-fachen, und unterhalb des 2.7-fachen, beispielsweise unterhalb des 2.4-fachen, der momentanen Eigenfrequenz, $f_1$, des Schwingungsmodes erster Ordnung liegenden Schwingungsfrequenz ausführt, und die Signalfrequenz der zweiten Signalkomponente des Schwingungssignals oberhalb des 1.01-fachen, beispielsweise oberhalb des 1.15-fachen, und unterhalb des 2.7-fachen, beispielsweise unterhalb des 2.4-fachen, der momentanen Eigenfrequenz, $f_1$, des Schwingungsmodes erster Ordnung liegt. Diese Ausgestaltung der Erfindung weiterbildend ist ferner vorgesehen, daß die Umformer-Elektronik die Signalfrequenz der Signalkomponente zweiter Art des Treibersignals innerhalb des Frequenzbereichs, $| 1.01 \cdot f_1 < f_{drv,II} < 2.7 \cdot f_1 |$, oberhalb des 1.01-fachen, beispielsweise oberhalb des 1.15-fachen, und unterhalb des 2.7-fachen, beispielsweise unterhalb des 2.4-fachen, der momentanen Eigenfrequenz, $f_1$, des Schwingungsmodes erster Ordnung schrittweise verändert, beispielsweise derart, daß die Umformer-Elektronik nämliche Signalfrequenz, $f_{drv,II}$, beginnend bei einem dafür vorgegebenen Startwert innerhalb nämlichen Frequenzbereichs, $| 1.01 \cdot f_1 < f_{drv,II} < 2.7 \cdot f_1 |$, bis zum Erreichen eines für die Signalfrequenz vorgegebenen Endwerts innerhalb nämlichen Frequenzbereichs schrittweise um einen vorgebbaren Betrag erhöht oder schrittweise um einen vorgebbaren Betrag verringert; und/oder daß die Umformer-Elektronik die Signalfrequenz der Signalkomponente zweiter Art des Treibersignals innerhalb des Frequenzbereichs, $| 1.01 \cdot f_1 < f_{drv,II} < 2.7 \cdot f_1 |$, oberhalb des 1.01-fachen, beispielsweise oberhalb des 1.15-fachen, und unterhalb des 2.7-fachen, beispielsweise unterhalb des 2.4-fachen, der momentanen Eigenfrequenz, $f_1$, des Schwingungsmodes erster Ordnung kontinuierlich verändert, beispielsweise derart, daß die Umformer-Elektronik nämliche Signalfrequenz, beginnend bei einem dafür vorgegebenen Startwert innerhalb nämlichen Frequenzbereichs, bis zum Erreichen eines für die Signalfrequenz vorgegebenen Endwerts innerhalb nämlichen Frequenzbereichs linear erhöht oder linear verringert, oder daß die Umformer-Elektronik nämliche Signalfrequenz abwechselnd linear erhöht bzw. linear verringert.

Nach einer fünfzehnten Ausgestaltung der Erfindung ist ferner vorgesehen, daß die Signalfrequenz der Signalkomponente zweiter Art des Treibersignals kleiner als eine momentane Eigenfrequenz, $f_2$, eines Schwingungsmodes zweiter Ordnung des wenigstens einen Meßrohrs ist, in dem das wenigstens eine vibrierende Meßrohr Schwingungen um eine Ruhelage ausführen kann bzw. ausführt, die im Bereich des ersten und zweiten Meßrohrendes jeweils einen Schwingungsknoten und im Bereich der Nutz-Schwinglänge einen weiteren Schwingungsknoten sowie genau zwei Schwingungsbäuche aufweisen, wodurch das wenigstens eine Meßrohr, angeregt vom wenigstens einen Schwingungserreger zumindest anteilig erzwungene Schwingungen außer Resonanz, nämlich in einem Frequenzbereich, $| f_{drv,II} < f_2 |$, der unterhalb der momentane Eigenfrequenz des Schwingungsmodes zweiter Ordnung liegt, ausführt, und das wenigstens eine Schwingungssignal zumindest zeitweise eine Signalkomponente zweiter Art mit einer Signalfrequenz aufweist, die unterhalb der momentane Eigenfrequenz des Schwingungsmodes zweiter Ordnung liegt, beispielsweise derart, daß das wenigstens eine Meßrohr, angeregt vom wenigstens einen Schwingungserreger zumindest anteilig erzwungene Schwingungen außer Resonanz, nämlich in einem Frequenzbereich, $| f_1 < f_{drv,II} < f_2 |$, der oberhalb der momentanen Eigenfrequenz, $f_1$, des Schwingungsmodes erster Ordnung und unterhalb der momentane Eigenfrequenz, $f_2$, des Schwingungsmodes zweiter Ordnung liegt, ausführt und das wenigstens eine Schwingungssignal zumindest zeitweise eine Signalkomponente zweiter Art mit einer Signalfrequenz aufweist, die oberhalb der momentanen Eigenfrequenz des Schwingungsmodes erster Ordnung und unterhalb der momentane Eigenfrequenz des Schwingungsmodes zweiter Ordnung liegt. Diese Ausgestaltung der Erfindung weiterbildend ist ferner vorgesehen, daß die Signalfrequenz, $f_{drv,II}$, der Signalkomponente zweiter Art des Treibersignals kleiner als ein 0.95-faches der momentanen Eigenfrequenz des Schwingungsmodes zweiter Ordnung ist.

Nach einer sechzehnten Ausgestaltung der Erfindung ist ferner vorgesehen, daß die Umformer-Elektronik mittels der Signalkomponente erster Art des wenigstens einen Schwingungssignals und/oder mittels der Signalkomponente erster Art des Treibersignals, beispielsweise wiederkehrend, einen einen zu messenden Parameter des strömenden Mediums, beispielsweise eine Massendurchflußrate, eine Dichte und/oder eine Viskosität, repräsentierenden Mediumsparameter-Meßwert ermittelt.

Nach einer siebzehnten Ausgestaltung der Erfindung ist ferner vorgesehen, daß die Signalfrequenz der Signalkomponente erster Art des Treibersignals einer momentanen Eigenfrequenz eines natürlichen Biegeschwingungsmodes entspricht, in dem das wenigstens eine vibrierende Meßrohr Biegeschwingungen um die Ruhelage ausführt, die im Bereich des ersten und zweiten Meßrohrendes jeweils einen Schwingungsknoten und im Bereich der Nutz-Schwinglänge genau einen Schwingungsbauch aufweisen (Biegeschwingungsgrundmode), wodurch das wenigstens eine Meßrohr, angeregt vom wenigstens einen Schwingungserreger, zumindest anteilig, beispielsweise überwiegend, Biegeschwingungen in Resonanz, nämlich mit einer der momentanen Eigenfrequenz des nämlichen Biegeschwingungsmodes entsprechenden Schwingungsfrequenz, ausführt, und die Signalfrequenz der Signalkomponente erster Art des wenigstens einen Schwingungssignals der momentanen Eigenfrequenz des nämlichen Biegeschwingungsmodes entspricht.

Nach einer achtzehnten Ausgestaltung der Erfindung ist ferner vorgesehen, daß das wenigstens eine Meßrohr gerade ist.

Nach einer neunzehnten Ausgestaltung der Erfindung ist ferner vorgesehen, daß das wenigstens eine Meßrohr gerade ist, und daß die Signalfrequenz der Signalkomponente erster Art des Treibersignals einer momentanen Eigenfrequenz eines natürlichen Torsionsschwingungsmodes entspricht, in dem das wenigstens eine vibrierende Meßrohr Torsionsschwingungen um die Ruhelage, nämliche um eine das einlaßseitige erste Meßrohrende und das auslaßseitige zweite Meßrohrende imaginär verbindende gedachte Schwingungsachse ausführt, welche Torsionsschwingungen im Bereich des ersten und zweiten Meßrohrendes jeweils einen Schwingungsknoten und im Bereich der Nutz-Schwinglänge genau einen Schwingungsbauch aufweisen (Torsionsschwingungsgrundmode), wodurch das wenigstens eine Meßrohr, angeregt vom wenigstens einen Schwingungserreger, zumindest anteilig, beispielsweise überwiegend, Torsionsschwingungen in Resonanz, nämlich mit einer der momentanen Eigenfrequenz des nämlichen Torsionsschwingungsmodes entsprechenden Schwingungsfrequenz, ausführt und die Signalfrequenz der Signalkomponente erster Art des wenigstens eine Schwingungssignals der momentanen Eigenfrequenz des nämlichen Torsionsschwingungsmodes entspricht.

Nach einer zwanzigsten Ausgestaltung der Erfindung ist ferner vorgesehen, daß der Meßwandler wenigstens zwei mechanisch miteinander gekoppelte, beispielsweise baugleiche und/oder zueinander zumindest abschnittsweise parallel verlaufende, Meßrohre zum Führen von strömendem Medium aufweist, von denen sich jedes zwischen einem jeweiligen einlaßseitigen ersten Meßrohrende und einem jeweiligen auslaßseitigen zweiten Meßrohrende mit einer Nutz-Schwinglänge erstreckt und von denen jedes jeweils einen natürliche Schwingungsmodes erster Ordnung aufweist, in dem es Eigenschwingungen um eine jeweilige Ruhelage ausführen kann bzw. ausführt, welche Eigenschwingungen im Bereich des jeweiligen ersten und zweiten Meßrohrendes jeweils einen Schwingungsknoten und im Bereich der Nutz-Schwinglänge genau einen Schwingungsbauch aufweisen, und welche Eigenschwingungen jeweils eine Eigenfrequenz, $f_1$, aufweisen, die gleich der Eigenfrequenz, $f_1$, des natürliche Schwingungsmodes erster Ordnung des jeweils anderen Meßrohrs ist. Diese Ausgestaltung der Erfindung weiterbildend ist ferner vorgesehen, daß der wenigstens eine, beispielsweise differentiell zwischen den wenigstens zwei Meßrohren wirkende, Schwingungserreger dem Konvertieren von elektrischer Erregerleistung in Vibrationen jedes der wenigstens zwei Meßrohre dient, beispielsweise derart, daß das jedes der wenigstens zwei Meßrohre gleichzeitig zumindest anteilig Schwingungen um eine Ruhelage, mit einer momentanen Eigenfrequenz eines ihm immanenten natürlichen Schwingungsmodes ausführt, und daß die Signalfrequenz, $f_{drv,I}$, der Signalkomponente erster Art des Treibersignals einer momentanen Eigenfrequenz, $f_1$, des natürlichen

Schwingungsmodes erster Ordnung jedes wenigstens zwei Meßrohre entspricht, wodurch jedes der wenigstens zwei Meßrohre, angeregt vom wenigstens einen Schwingungserreger, zumindest anteilig, beispielsweise überwiegend, Schwingungen in Resonanz, nämlich mit einer der momentanen Eigenfrequenz, $f_1$, des Schwingungsmodes erster Ordnung entsprechenden Schwingungsfrequenz, $f_{exc,l} = f_1$, ausführt, beispielsweise derart, daß die Schwingungen der wenigstens zwei Meßrohre zueinander gegengleich sind.

Nach einer einundzwanzigsten Ausgestaltung der Erfindung ist ferner vorgesehen, daß der Meßwandler vier mechanisch miteinander gekoppelte, beispielsweise baugleiche und/oder zueinander zumindest paarweise abschnittsweise parallel verlaufende, Meßrohre zum Führen von strömendem Medium aufweist.

Nach einer ersten Weiterbildung der Erfindung ist ferner vorgesehen, daß die Umformer-Elektronik mittels der Signalkomponente zweiter Art des wenigstens einen Schwingungssignals sowie mittels der Signalkomponente zweiter Art des Treibersignals, beispielsweise wiederkehrend, einen Systemparameter-Meßwert für einen eine dem Meßwandler immanente Meßwandler-Übertragungsfunktion, mithin das Meßsystem charakterisierenden Systemparameter ermittelt, gemäß welcher Meßwandler-Übertragungsfunktion das Treibersignal oder einzelne Signalkomponente davon, beispielsweise einen im wenigstens einen Schwingungserreger fließenden, als Signalkomponente zweiter Art des Treibersignals dienenden Strom oder eine diesen treibende, als Signalkomponente zweiter Art des Treibersignals dienende Spannung, in das wenigstens eine Schwingungssignal oder einzelne Signalkomponenten davon, beispielsweise eine mittels des wenigstens einen Schwingungssensors generierten, als Signalkomponente zweiter Art des Schwingungssignals dienenden Spannung, konvertiert.

Nach einer ersten Ausgestaltung der ersten Weiterbildung der Erfindung ist ferner vorgesehen, daß nämlicher Systemparameter einem, beispielsweise einen Real- und einen Imaginärteil aufweisenden komplexen, Verhältnis einer mittels des wenigstens einen Schwingungssensors generierten, als Signalkomponente zweiter Art des Schwingungssignals dienenden Spannung zu einem im wenigstens einen Schwingungserreger fließenden, als Signalkomponente zweiter Art des Treibersignals dienenden Strom entspricht.

Nach einer zweiten Ausgestaltung der ersten Weiterbildung der Erfindung ist ferner vorgesehen, daß der Systemparameter-Meßwert für nämlichen Systemparameter ein Verhältnis einer mittels des wenigstens einen Schwingungssensors generierten, als Signalkomponente zweiter Art des Schwingungssignals dienenden Spannung zu einem im wenigstens einen Schwingungserreger fließenden, als Signalkomponente zweiter Art des Treibersignals dienenden Strom repräsentiert.

Nach einer dritten Ausgestaltung der ersten Weiterbildung der Erfindung ist ferner vorgesehen, daß nämlicher Systemparameter einem, beispielsweise einen Real- und einen Imaginärteil aufweisenden komplexen, Verhältnis einer mittels des wenigstens einen Schwingungssensors generierten, als Signalkomponente zweiter Art des Schwingungssignals dienenden Spannung zu einer einen im wenigstens einen Schwingungserreger fließenden Strom treibenden, als Signalkomponente zweiter Art des Treibersignals dienenden Spannung entspricht.

Nach einer vierten Ausgestaltung der ersten Weiterbildung der Erfindung ist ferner vorgesehen, daß der Systemparameter-Meßwert für nämlichen Systemparameter ein Verhältnis einer mittels des wenigstens einen Schwingungssensors generierten, als Signalkomponente zweiter Art des Schwingungssignals dienenden Spannung zu einer einen im wenigstens einen Schwingungserreger fließenden Strom treibenden, als Signalkomponente zweiter Art des Treibersignals dienenden Spannung repräsentiert bzw. basierend auf nämlichem Amplituden-Verhältnis von der Umformer-Elektronik ermittelt ist.

Nach einer fünften Ausgestaltung der ersten Weiterbildung der Erfindung ist ferner vorgesehen, daß der Systemparameter-Meßwert für nämlichen Systemparameter eine Phasendifferenz zwischen einer mittels des wenigstens einen Schwingungssensors generierten, als Signalkomponente zweiter Art des Schwingungssignals dienenden, Spannung und einem im wenigstens einen Schwingungserreger fließenden, als Signalkomponente zweiter Art des Treibersignals dienenden Strom repräsentiert.

Nach einer sechsten Ausgestaltung der ersten Weiterbildung der Erfindung ist ferner vorgesehen, daß der Systemparameter-Meßwert für nämlichen Systemparameter eine Phasendifferenz zwischen einer mittels des wenigstens einen Schwingungssensors generierten, als Signalkomponente zweiter Art des Schwingungssignals dienenden, Spannung und einer den im wenigstens einen Schwingungserreger fließenden Strom treibenden, als Signalkomponente zweiter Art des Treibersignals dienenden, Spannung repräsentiert.

Nach einer siebenten Ausgestaltung der ersten Weiterbildung der Erfindung ist ferner vorgesehen, daß die Umformer-Elektronik den Systemparameter-Meßwert für nämlichen Systemparameter basierend auf einem Verhältnis der Signalfrequenz der Signalkomponente zweiter Art des Treibersignals zur der Signalfrequenz der Signalkomponente erster Art des Treibersignals ermittelt.

Nach einer achten Ausgestaltung der ersten Weiterbildung der Erfindung ist ferner vorgesehen, daß der Systemparameter-Meßwert für nämlichen Systemparameter ein Verhältnis einer Amplitude einer mittels des wenigstens einen Schwingungssensors generierten, als Signalkomponente zweiter Art des Schwingungssignals dienenden, Spannung zu einer Amplitude einer den im wenigstens einen Schwingungserreger fließenden Strom treibenden, als Signalkomponente zweiter Art des Treibersignals dienenden, Spannung repräsentiert bzw. basierend auf nämlichem Verhältnis von der Umformer-Elektronik ermittelt ist.

Nach einer neunten Ausgestaltung der ersten Weiterbildung der Erfindung ist ferner vorgesehen, daß der Systemparameter-Meßwert für nämlichen Systemparameter ein Verhältnis einer Amplitude einer mittels des wenigstens einen Schwingungssensors generierten, als Signalkomponente zweiter Art des Schwingungssignals dienenden, Spannung zu einer Amplitude einer den im wenigstens einen Schwingungserreger fließenden Strom treibenden, als Signalkomponente zweiter Art des Treibersignals dienenden, Spannung, multipliziert mit einem eine für die Signalkomponente zweiter Art des Treibersignals wirksame elektrische Impedanz, $Z_{drv,II}$, des wenigstens einen Schwingungserregers repräsentieren Parameter-Meßwert, repräsentiert bzw. basierend auf nämlichem Verhältnis von der Umformer-Elektronik ermittelt ist.

Nach einer zehnten Ausgestaltung der ersten Weiterbildung der Erfindung ist ferner vorgesehen, daß der Systemparameter-Meßwert für nämlichen Systemparameter ein Verhältnis einer Amplitude einer mittels des wenigstens einen Schwingungssensors generierten, als Signalkomponente zweiter Art des Schwingungssignals dienenden, Spannung zu einer Amplitude einer im wenigstens einen Schwingungserreger fließenden, als Signalkomponente zweiter Art des Treibersignals dienenden, Stroms repräsentiert bzw. basierend auf nämlichem Verhältnis von der Umformer-Elektronik ermittelt ist.

Nach einer elften Ausgestaltung der ersten Weiterbildung der Erfindung ist ferner vorgesehen, daß die Umformer-Elektronik den Systemparameter-Meßwert für nämlichen Systemparameter basierend auf einem Verhältnis der Signalfrequenz der Signalkomponente zweiter Art des Treibersignals zur der Signalfrequenz der Signalkomponente erster Art des Treibersignals sowie einem Verhältnis einer Amplitude einer mittels des wenigstens einen Schwingungssensors generierten, als Signalkomponente zweiter Art des Schwingungssignals dienenden, Spannung zu einer Amplitude einer den im wenigstens einen Schwingungserreger fließenden Strom treibenden, als Signalkomponente zweiter Art des Treibersignals dienenden, Spannung.

Nach einer zwölften Ausgestaltung der ersten Weiterbildung der Erfindung ist ferner vorgesehen, daß die Umformer-Elektronik den Systemparameter-Meßwert für nämlichen Systemparameter basierend auf einem Verhältnis der Signalfrequenz der Signalkomponente zweiter Art des Treibersignals zur der Signalfrequenz der Signalkomponente erster Art des Treibersignals sowie einem Verhältnis einer Amplitude einer mittels des wenigstens einen Schwingungssensors generierten, als Signalkomponente zweiter Art des Schwingungssignals dienenden, Spannung zu einer Amplitude einer im wenigstens einen Schwingungserreger fließenden, als Signalkomponente zweiter Art des Treibersignals dienenden.

Nach einer dreizehnten Ausgestaltung der ersten Weiterbildung der Erfindung ist ferner vorgesehen, daß die Umformer-Elektronik mittels des nämlichen, die Meßwandler-Übertragungsfunktion charakterisierenden, Systemparameters detektiert, ob und/oder inwieweit das Meßsystem im Vergleich zu einem dafür vorab, beispielsweise bei einer Kalibrierung und/oder bei einer Inbetriebnahme des Meßsystems, ermittelten Referenzzustand, beispielsweise infolge Alterung und/oder infolge Belastung des Meßwandlers, verändert ist, beispielsweise derart, daß die Umformer-Elektronik mittels des nämlichen, die Meßwandler-Übertragungsfunktion charakterisierenden, Systemparameters ggf. eine, beispielsweise als ein Alarm deklarierte, Systemstatusmeldung generiert, die eine ein vorgegebenes Toleranzmaß überschreitende Abweichung des Meßsystems von einem dafür vorab ermittelten Referenzzustand, beispielsweise visuell und/oder akustisch wahrnehmbar, signalisiert.

Nach einer vierzehnten Ausgestaltung der ersten Weiterbildung der Erfindung ist ferner vorgesehen, daß die Umformer-Elektronik mittels der Signalkomponente erster Art des wenigstens einen Schwingungssignals und/oder mittels der Signalkomponente erster Art des Treibersignals, beispielsweise wiederkehrend, einen einen zu messenden Parameter des strömenden Mediums, beispielsweise eine Massendurchflußrate, eine Dichte und/oder eine Viskosität, repräsentierenden Mediumsparameter-Meßwert ermittelt.

Nach einer fünfzehnten Ausgestaltung der ersten Weiterbildung der Erfindung ist ferner vorgesehen, daß die Umformer-Elektronik mittels der Signalkomponente zweiter Art des wenigstens einen Schwingungssignals sowie mittels der Signalkomponente zweiter Art des Treibersignals, beispielsweise wiederkehrend, einen Systemparameter-Meßwert für einen eine dem Meßwandler immanente Meßwandler-Übertragungsfunktion, mithin das Meßsystem charakterisierenden Systemparameter ermittelt, gemäß welcher Meßwandler-Übertragungsfunktion das Treibersignal oder einzelne Signalkomponente davon, beispielsweise einen im wenigstens einen Schwingungserreger fließenden, als Signalkomponente zweiter Art des Treibersignals dienenden Strom oder eine diesen treibende, als Signalkomponente zweiter Art des Treibersignals dienende Spannung, in das wenigstens eine Schwingungssignal oder einzelne Signalkomponenten davon, beispielsweise eine mittels des wenigstens einen Schwingungssensors generierten, als Signalkomponente zweiter Art des Schwingungssignals dienenden Spannung, konvertiert, und daß die Umformer-Elektronik den wenigstens einen Mediumsparameter-Meßwert unter Verwendung auch des Systemparameter-Meßwerts ermittelt, beispielsweise derart, daß die Umformer-Elektronik einen Einfluß einer unter Verwendung des Systemparameter-Meßwerts ermittelten Abweichung des Meßsystems von einem dafür vorab ermittelten Referenzzustand auf eine Meßgenauigkeit des Meßsystems, mit Mediumsparameter-Meßwerte ermittelt werden, kompensiert.

Nach einer zweiten Weiterbildung der Erfindung ist ferner vorgesehen, daß die Umformer-Elektronik einen, beispielsweise flüchtigen, Datenspeicher für mittels des Meßsystems erzeugte Meßwerte aufweist, in welchem Datenspeicher wenigstens ein mittels im Betrieb des Meßsystems erzeugter Meßwerte gebildeter, einen Betriebszustand des Meßsystems, beispielsweise vorübergehend, repräsentierender Meßdatensatz vorgehalten ist, der basierend auf der Signalkomponente zweiter Art des Treibersignals und/oder basierend auf der Signalkomponente zweiter Art des wenigstens einen Sensorsignals erzeugte Systemparameter-Meßwerte für verschiedene, das Meßsystem charakterisierende Systemparameter umfaßt.

Nach einer ersten Ausgestaltung der zweiten Weiterbildung der Erfindung ist ferner vorgesehen, daß der Meßdatensatz einen Systemparameter-Meßwert für die Signalkomponente zweiter Art des dem wenigstens einen Schwingungserreger im Betrieb des Meßsystems zugeführten Treibersignals und/oder einen Systemparameter-Meßwert für die Signalkomponente zweiter Art des wenigstens einen vom Meßwandler im Betrieb des Meßsystems gelieferten Schwingungssignals und/oder einen von der Signalkomponente zweiter Art des der im Betrieb des Meßsystems Erregeranordnung zugeführten Treibersignals und von der Signalkomponente zweiter Art des wenigstens einen im Betrieb des Meßsystems vom Meßwandler gelieferten Schwingungssignals abgeleiteten Systemparameter-Meßwert umfaßt.

Nach einer zweiten Ausgestaltung der zweiten Weiterbildung der Erfindung ist ferner vorgesehen, daß im Datenspeicher für mittels des Meßsystems erzeugte Meßwerte ein mittels im Betrieb des Meßsystems erzeugter Meßwerte gebildeter, im Meßwandler geführtes Medium repräsentierender Meßdatensatz vorgehalten ist, der basierend auf der Signalkomponente erster Art des Treibersignals und/oder basierend auf der Signalkomponente erster Art des wenigstens einen Sensorsignals erzeugte Mediumsparameter-Meßwerte für verschiedene, das strömende Medium charakterisierende Mediumsparameter, beispielsweise eine Massendurchflußrate, eine Dichte und/oder eine Viskosität, umfaßt.

Nach einer dritten Weiterbildung der Erfindung ist ferner vorgesehen, daß die Umformer-Elektronik einen, beispielsweise nicht-flüchtigen, Datenspeicher für als einen Referenzzustand des Meßsystems repräsentierende Referenzwerte dienende Meßwerte aufweist, in welchem Datenspeicher wenigstens ein einen Referenzzustand des, beispielsweise bereits in einer Rohrleitung installierten, Meßsystems repräsentierender Referenzdatensatz vorgehalten ist, der, beispielsweise im Zuge einer Kalibrierung des Meßsystems im Herstellerwerk und/oder während einer Inbetriebnahme des Meßsystems mittels desselben erzeugte, Systemparameter-Referenzwerte für verschiedene, nämlich das Meßsystem charakterisierende Systemparameter umfaßt, beispielsweise derart, daß nämliche Systemparameter-Referenzwerte mittels des im Referenzzustand befindlichen Meßsystems selbst und/oder mittels des Medium von bekannter Temperatur führenden Meßwandlers erzeugte Meßwerte sind.

Nach einer ersten Ausgestaltung der dritten Weiterbildung der Erfindung ist ferner vorgesehen, daß der Referenz-Datensatz einen Systemparameter-Referenzwert für eine Signalkomponente zweiter Art des dem wenigstens einen Schwingungserreger bei im Referenzzustand befindlichem Meßsystem zugeführten Treibersignals und/oder einen Systemparameter-Referenzwert für eine Signalkomponente zweiter Art des wenigstens einen vom Meßwandler bei im Referenzzustand befindlichem Meßsystem gelieferten Schwingungssignals und/oder einen von einer Signalkomponente zweiter Art des bei im Referenzzustand befindlichem Meßsystem der Erregeranordnung zugeführten Treibersignals und von einer Signalkomponente zweiter Art des wenigstens einen vom Meßwandler bei im Referenzzustand befindlichem Meßsystem gelieferten Schwingungssignal abgeleiteten Systemparameter-Referenzwert umfaßt.

Nach einer zweiten Ausgestaltung der dritten Weiterbildung der Erfindung ist ferner vorgesehen, daß die Umformer-Elektronik mittels der Signalkomponente zweiter Art des wenigstens einen Schwingungssignals sowie mittels der Signalkomponente zweiter Art des Treibersignals, beispielsweise wiederkehrend, einen Systemparameter-Meßwert für einen eine dem Meßwandler immanente Meßwandler-Übertragungsfunktion, mithin das Meßsystem charakterisierenden Systemparameter ermittelt, gemäß welcher Meßwandler-Übertragungsfunktion das Treibersignal oder einzelne Signalkomponente davon, beispielsweise einen im wenigstens einen Schwingungserreger fließenden, als Signalkomponente zweiter Art des Treibersignals dienenden Strom oder eine diesen treibende, als Signalkomponente zweiter Art des Treibersignals ($s_{drv}$) dienende Spannung, in das wenigstens eine Schwingungssignal oder einzelne Signalkomponenten davon, beispielsweise eine mittels des wenigstens einen Schwingungssensors generierten, als Signalkomponente zweiter Art des Schwingungssignals dienenden Spannung, konvertiert, und daß der Referenz-Datensatz einen, beispielsweise mittels des im Referenzzustand befindlichen Meßsystems selbst und/oder mittels des Medium von bekannter Temperatur führenden Meßwandlers ermittelten, die Meßwandler-Übertragungsfunktion des im Referenzzustand befindlichen Meßsystems repräsentierender Systemparameter-Referenzwert für den die Meßwandler-Übertragungsfunktion charakterisierenden Systemparameter umfaßt.

Nach einer dritten Ausgestaltung der dritten Weiterbildung der Erfindung ist ferner vorgesehen, daß der Referenz-Datensatz einen die Eigenfrequenz, $f_1$, des Schwingungsmodes erster Ordnung bei im Referenzzustand befindlichem Meßsystem repräsentierenden Systemparameter-Referenzwert sowie einen die Signalfrequenz der Signalkomponente zweiter Art des dem wenigstens einen Schwingungserreger bei im Referenzzustand befindlichem Meßsystem zugeführten Treibersignals repräsentierenden Systemparameter-Referenzwert umfaßt.

Nach einer vierten Ausgestaltung der dritten Weiterbildung der Erfindung ist ferner vorgesehen, daß der Referenz-Datensatz einen ein Verhältnis der Signalfrequenz der Signalkomponente zweiter Art des dem wenigstens einen Schwingungserreger bei im Referenzzustand befindlichem Meßsystem zugeführten Treibersignals zur Eigenfrequenz, $f_1$, des Schwingungsmodes erster Ordnung bei im Referenzzustand befindlichem Meßsystem repräsentierenden Systemparameter-Referenzwert umfaßt.

Nach einer vierten Weiterbildung der Erfindung ist ferner vorgesehen, daß die Umformer-Elektronik mittels der Signalkomponente zweiter Art des wenigstens einen Schwingungssignals sowie mittels der Signalkomponente zweiter Art des Treibersignals, beispielsweise wiederkehrend, einen Systemparameter-Meßwert für einen eine dem Meßwandler immanente Meßwandler-Übertragungsfunktion, mithin das Meßsystem charakterisierenden Systemparameter ermittelt, gemäß welcher Meßwandler-Übertragungsfunktion das Treibersignal oder einzelne Signalkomponente davon, beispielsweise einen im wenigstens einen Schwingungserreger fließenden, als Signalkomponente zweiter Art des Treibersignals dienenden Strom oder eine diesen treibende, als Signalkomponente zweiter Art des Treibersignals ($s_{drv}$) dienende Spannung, in das wenigstens eine Schwingungssignal oder einzelne Signalkomponenten davon, beispielsweise eine mittels des wenigstens einen Schwingungssensors generierten, als Signalkomponente zweiter Art des Schwingungssignals dienenden Spannung, konvertiert, und daß der Referenz-Datensatz einen, beispielsweise mittels des im Referenzzustand befindlichen Meßsystems selbst und/oder mittels des Medium von bekannter Temperatur führenden Meßwandlers ermittelten, die Meßwandler-Übertragungsfunktion des im Referenzzustand befindlichen Meßsystems repräsentierender Systemparameter-Referenzwert für den die Meßwandler-Übertragungsfunktion charakterisierenden Systemparameter umfaßt.

Nach einer ersten Ausgestaltung der vierten Weiterbildung der Erfindung ist ferner vorgesehen, daß der Systemparameter-Referenzwert für nämlichen Systemparameter ein Verhältnis einer bei im Referenzzustand befindlichen Meßsystem mittels des wenigstens einen Schwingungssensors generierten, als Signalkomponente zweiter Art des Schwingungssignals dienenden Spannung zu einer bei im Referenzzustand befindlichen Meßsystem einen im wenigstens einen Schwingungserreger fließenden Strom treibenden, als Signalkomponente zweiter Art des Treibersignals dienenden Spannung repräsentiert.

Nach einer zweiten Ausgestaltung der vierten Weiterbildung der Erfindung ist ferner vorgesehen, daß der Systemparameter-Meßwert für nämlichen Systemparameter ein Verhältnis einer bei im Referenzzustand befindlichen Meßsystem mittels des wenigstens einen Schwingungssensors generierten, als Signalkomponente zweiter Art des Schwingungssignals dienenden Spannung zu einer bei im Referenzzustand befindlichen Meßsystem einen im wenigstens einen Schwingungserreger fließenden Strom treibenden, als Signalkomponente zweiter Art des Treibersignals dienenden Spannung repräsentiert.

Nach einer dritten Ausgestaltung der vierten Weiterbildung der Erfindung ist ferner vorgesehen, daß der Systemparameter-Meßwert für nämlichen Systemparameter eine Phasendifferenz zwischen einer bei im Referenzzustand befindlichen Meßsystem mittels des wenigstens einen Schwingungssensors generierten, als Signalkomponente zweiter Art des Schwingungssignals dienenden, Spannung und einer bei im Referenzzustand befindlichen Meßsystem den im wenigstens einen Schwingungserreger fließenden Strom treibenden, als Signalkomponente zweiter Art des Treibersignals dienenden Spannung repräsentiert.

Nach einer vierten Ausgestaltung der vierten Weiterbildung der Erfindung ist ferner vorgesehen, daß der Systemparameter-Meßwert für nämlichen Systemparameter ein Verhältnis, einer Amplitude einer bei im Referenzzustand befindlichen Meßsystem mittels des wenigstens einen Schwingungssensors generierten, als Signalkomponente zweiter Art des Schwingungssignals dienenden, Spannung zu einer Amplitude einer einen bei im Referenzzustand befindlichen Meßsystem im wenigstens einen Schwingungserreger fließenden Strom treibenden, als Signalkomponente zweiter Art des Treibersignals dienenden Spannung repräsentiert.

Nach einer fünften Weiterbildung der Erfindung ist ferner vorgesehen, daß die Umformer-Elektronik einen, beispielsweise flüchtigen, Datenspeicher für mittels des Meßsystems erzeugte Meßwerte aufweist, in welchem Datenspeicher wenigstens ein mittels im Betrieb des Meßsystems erzeugter Meßwerte gebildeter, einen Betriebszustand des Meßsystems, beispielsweise vorübergehend, repräsentierender Meßdatensatz vorgehalten ist, der basierend auf der Signalkomponente zweiter Art des Treibersignals und/oder basierend auf der Signalkomponente zweiter Art des wenigstens einen Sensorsignals erzeugte Systemparameter-Meßwerte für verschiedene, das Meßsystem charakterisierende Systemparameter umfaßt, und daß die Umformer-Elektronik einen, beispielsweise nicht-flüchtigen, Datenspeicher für als einen Referenzzustand des Meßsystems repräsentierende Referenzwerte dienende Meßwerte aufweist, in welchem Datenspeicher wenigstens ein einen Referenzzustand des, beispielsweise bereits in einer Rohrleitung installierten, Meßsystems repräsentierender Referenzdatensatz vorgehalten ist, der, beispielsweise im Zuge einer Kalibrierung des Meßsystems im Herstellerwerk und/oder während einer Inbetriebnahme des Meßsystems mittels desselben erzeugte, Systemparameter-Referenzwerte für verschiedene, nämlich das Meßsystem charakterisierende Systemparameter umfaßt, beispielsweise derart, daß nämliche Systemparameter-Referenzwerte mittels des im Referenzzustand befindlichen Meßsystems selbst und/oder mittels des Medium von bekannter Temperatur führenden Meßwandlers erzeugte Meßwerte sind.

Nach einer ersten Ausgestaltung der fünften Weiterbildung der Erfindung ist ferner vorgesehen, daß die Umformer-Elektronik basierend auf dem Referenzdatensatz und dem Meßdatensatz, beispielsweise anhand einer zwischen Referenzdatensatz und Meßdatensatz ermittelten Abweichung, $\Delta G_{ME}$, detektiert, ob und/oder inwieweit das Meßsystem im Vergleich zu dem dafür vorab ermittelten Referenzzustand verändert ist, und/oder daß die Umformer-Elektronik anhand einer zwischen Referenzdatensatz und Meßdatensatz ermittelten Abweichung, $\Delta G_{ME}$, detektiert, ob und/oder inwieweit das Meßsystem im Vergleich zu dem dafür vorab ermittelten Referenzzustand verändert ist, beispielsweise derart, daß die Umformer-Elektronik den Referenzdatensatz mit dem Meßdatensatz, beispielsweise wiederkehrend, vergleicht.

Nach einer zweiten Ausgestaltung der fünften Weiterbildung der Erfindung ist ferner vorgesehen, daß die Umformer-Elektronik den Referenzdatensatz mit dem Meßdatensatz, beispielsweise wiederkehrend, vergleicht, indem die Umformer-Elektronik von wenigstens einem der den Meßdatensatz bildenden Systemparameter-Meßwerte eine Abweichung, $\Delta G_{ME}$, von einem entsprechenden, nämlich den selben Systemparameter repräsentierenden, Systemparameter-Referenzwert bestimmt, beispielsweise derart, daß die Umformer-Elektronik eine Differenz zwischen nämlichem Systemparameter-Meßwert und dem entsprechenden Systemparameter-Referenzwert ermittelt, und/oder daß die Umformer-Elektronik ein Verhältnis, von nämlichem Systemparameter-Meßwert und zum entsprechenden Systemparameter-Referenzwert ermittelt.

Nach einer dritten Ausgestaltung der fünften Weiterbildung der Erfindung ist ferner vorgesehen, daß die Umformer-Elektronik basierend auf einem Vergleich von Referenz- und Meßdatensatz eine, beispielsweise als ein Alarm deklarierte, Systemstatusmeldung generiert, die eine, beispielsweise durch Alterung des Meßsystems bedingte und/oder durch ein Schwingungsverhalten des wenigstens einen Meßrohrs irreversible verändernde Belastungen des Meßwandlers bedingte Abweichung des Meßsystems von einem dafür vorab, beispielsweise bei einer Kalibrierung und/oder bei einer Inbetriebnahme des Meßsystems, ermittelten Referenzzustand, beispielsweise visuell und/oder akustisch wahrnehmbar, signalisiert.

Nach einer vierten Ausgestaltung der fünften Weiterbildung der Erfindung ist ferner vorgesehen, daß die Umformer-Elektronik die Umformer-Elektronik anhand der ermittelten Abweichung, $\Delta G_{ME}$, zwischen dem wenigstens einen Systemparameter-Meßwert und dem entsprechenden Systemparameter-Referenzwert eine, beispielsweise als ein Alarm deklarierte, Systemstatusmeldung generiert, die eine, beispielsweise durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz und/oder eine elektro-mechanische Wandlerkonstante des wenigstens einen Schwingungserregers verändernde thermische Belastungen des Meßwandlers bedingte und/oder durch eine elektrische Impedanz und/oder eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von dem dafür vorab ermittelten Referenzzustand, beispielsweise visuell und/oder akustisch wahrnehmbar, signalisiert.

Nach einer fünften Ausgestaltung der fünften Weiterbildung der Erfindung ist ferner vorgesehen, daß die Umformer-Elektronik die Umformer-Elektronik anhand der ermittelten Abweichung, $\Delta G_{ME}$, zwischen dem wenigstens einen Systemparameter-Meßwert und dem entsprechenden Systemparameter-Referenzwert eine, beispielsweise als ein Alarm deklarierte, Systemstatusmeldung generiert, sofern die ermittelte Abweichung, $\Delta G_{ME}$, einen ein dafür vorgegebenes Toleranzmaß repräsentierenden Schwellenwert überschreitet, beispielsweise derart, daß die ermittelte Abweichung, $\Delta G_{ME}$, mehr als 0.1% des zughörigen Systemparameter-Referenzwerts beträgt, welche Statusmeldung eine, beispielsweise durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz und/oder eine elektro-mechanische Wandlerkonstante des wenigstens einen Schwingungserregers verändernde thermische Belastungen des Meßwandlers bedingte und/oder durch eine elektrische Impedanz und/oder eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von dem dafür vorab ermittelten Referenzzustand, beispielsweise visuell und/oder akustisch wahrnehmbar, signalisiert.

Ein Grundgedanke der Erfindung besteht darin, anhand von - zu den bei Meßsystemen der in Rede stehenden Art im Nutzmode ohnehin angeregten Schwingungen des wenigstens einen Meßrohrs in Resonanz zusätzlichen - aktiv außer Resonanz angeregten, insoweit also erzwungenen Schwingungen des wenigstens einen Meßrohrs bzw. anhand von einigen wenigen, aus der Schwingungserregung, nämlich dem Treibersignal, und/oder der Schwingungsantwort, nämlich dem wenigstens einen Schwingungssignal, einfach ableitbaren Systemparametern, wie etwa Signalfrequenzen, Signalamplituden, Phasendifferenzen (Phasenwinkeln) des wenigstens einen Schwingungssignals relativ zum Treibersignal oder daraus abgeleitete Komplexfaktoren, eine Überprüfung des Meßsystems hinsichtlich dessen tatsächlicher Meßgenauigkeit bzw. Betriebssicherheit durchzuführen und sich anbahnende bzw. allfällig vorliegende Fehler frühzeitig zu detektieren und möglichst genau zu diagnostizieren. Die Erfindung basiert dabei auf der überraschenden Erkenntnis, daß sogar auch bei aktiver Anregungen des wenigstens einen Meßrohrs zu Schwingungen in einem ausgewählten, nämlich von Variationen einer Schwingungsgüte bzw. eines Dämpfungsmaßes nicht mehr nennenswert beeinflußten, mithin die Resonanzfrequenzen des wenigsten eine Meßrohrs ausschließenden, Frequenzbereich von dem im Meßwandler geführten Medium bzw. den davon zu erfassenden Mediumsparameter weitgehend unabhängige Überprüfung bzw. Diagnose des Meßsystems allein anhand von den in Meßsystemen der in Rede stehenden Art notorisch vorhanden - im Vergleich zu herkömmlichen Meßsystemen lediglich geringfügig zu modifizierenden, gleichwohl sehr einfach generierbaren - Treiber- bzw. Schwingungssignale erfolgen kann; dies im Falle von für die Erregung in ausreichendem Maße verfügbarer elektrischer Leistung sogar auch gleichzeitig zum eigentlichen Meßbetrieb.

Ein Vorteil der Erfindung besteht dabei nicht zuletzt auch darin, daß zur Realisierung der erfindungsgemäßen Schwingungsmessung bzw. der darauf schlußendlich basierenden Überprüfung bzw. Diagnose des Meßsystems sowohl auf betriebsbewährte konventionelle Meßwandler, insb. auch die darin üblicherweise eingesetzten elektrodynamischen Schwingungserreger bzw. - sensoren, als auch auf betriebsbewährte konventionelle - um die für die Überprüfung bzw. Diagnose benötigte Software selbstverständlich entsprechend erweiterte - Umformer-Elektroniken zurückgegriffen werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1a, b    eine Variante eines als Kompakt-Meßgerät ausgebildetes Meßsystem für in Rohrleitungen strömende Medien in verschiedenen Seitenansichten;

Fig. 2a, b    eine weitere Variante eines als Kompakt-Meßgerät ausgebildetes Meßsystem für in Rohrleitungen strömende Medien in verschiedenen Seitenansichten;

Fig. 3    schematisch nach Art eines Blockschaltbildes eine, insb. auch für ein Meßsystem gemäß den Fig. 1a, 1b, 2a, 2b, geeignete, Umformer-Elektronik mit daran angeschlossenem Meßwandler vom Vibrationstyp;

Fig. 4, 5    in, teilweise geschnittenen bzw. perspektivischen, Ansichten eine Variante eines, insb. für ein Meßsystem gemäß den Fig. 1a, 1b geeigneten, Meßwandlers vom Vibrations-Typ mit einem im Betrieb vibrierenden Meßrohr;

Fig. 6, 7    in, teilweise geschnittenen bzw. perspektivischen, Ansichten eine weitere Variante eines, insb. für ein Meßsystem gemäß den Fig. 2a, 2b geeigneten, Meßwandlers vom Vibrations-Typ mit im Betrieb vibrierenden Meßrohren;

Fig. 8    schematisch ein in einem Meßwandler gemäß den Fign. 4, 5 bzw. 6, 7 detektierbares Frequenzspektrum von (Eigen-) Schwingungen eines im Meßwandler enthaltenen Meßrohrs; und

Fig. 9    Ergebnisse von im Zusammenhang mit der Erfindung, insb. auch unter Anwendung von computerbasierten Simulationsprogrammen und/oder mittels realer Meßsysteme im Labor, durchgeführten experimentellen Untersuchungen bzw. daraus abgeleitete, der Ermittlung eines Betriebszustands eines Meßsystems gemäß den Fig. 1a, b bzw. 2a, b bzw. einer Abweichung des Meßsystems von einem dafür vorab ermittelten Referenzzustand.

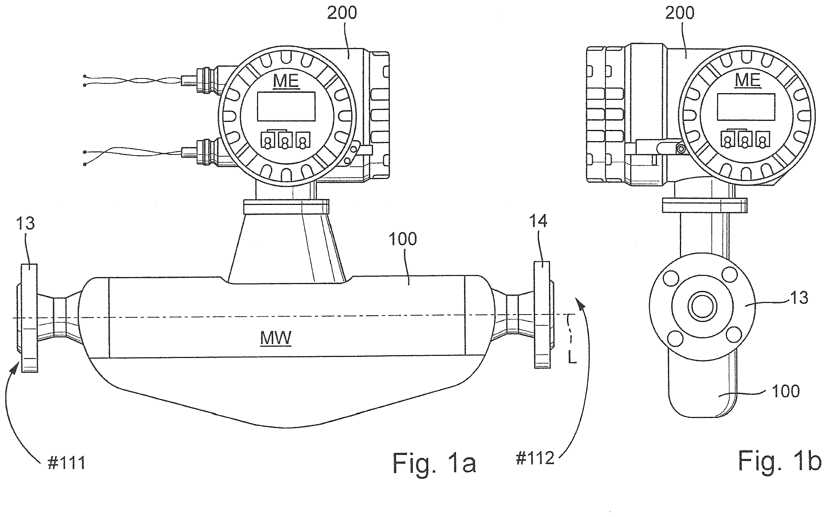

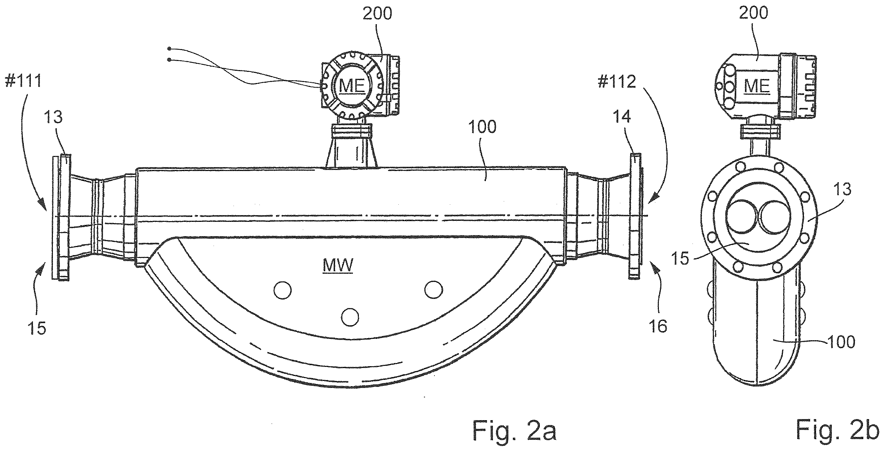

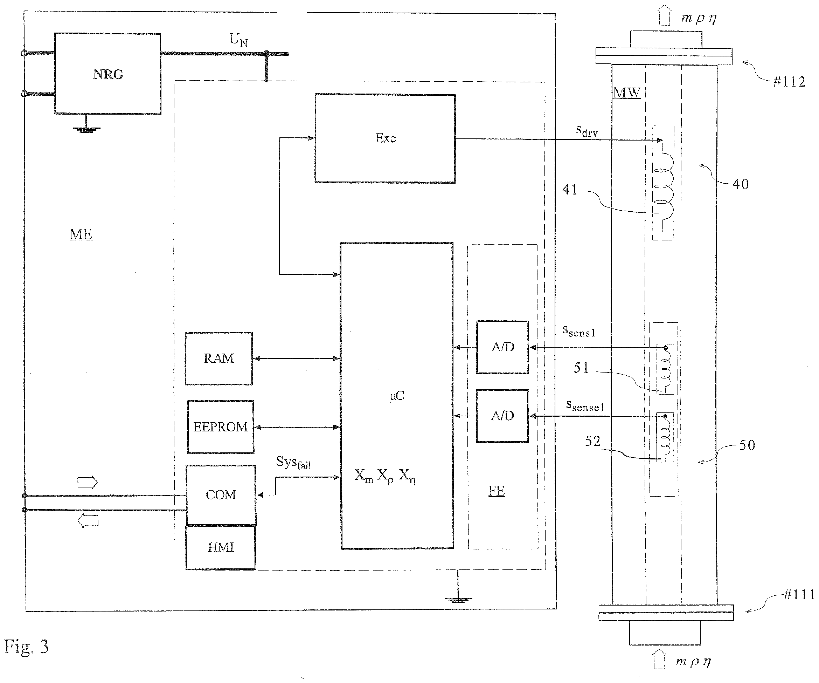

In den Fig. 1a, 1b bzw. 2a, 2b ist jeweils eine Variante eines in eine Prozeßleitung, etwa eine Rohrleitung einer industriellen Anlage, einfügbares, beispielsweise mittels eines Coriolis-Massendurchflußmeßgerät, Dichtemeßgerät, Viskositätsmeßgerät oder dergleichen gebildetes, Meßsystem für fließfähige, insb. fluide, Medien, dargestellt, das im besonderen dem Messen und/oder Überwachen eines ein in der Prozeßleitung strömendes Medium entsprechend charakterisierenden Mediumsparameter, wie etwa einer Massendurchflußrate, einer Dichte, einer Viskosität etc., dient. Das - hier mittels eines In-Line-Meßgeräts in Kompaktbauweise realisierte - Meßsystem umfaßt dafür einen über ein Einlaßende #111 sowie ein Auslaßende #112 an die Prozeßleitung angeschlossenen Meßwandler MW vom Vibrationstyp, welcher Meßwandler im Betrieb entsprechend vom zu messenden Medium, wie etwa einer niedrigviskosen Flüssigkeit und/oder einer hochviskosen Paste und/oder einem Gas, durchströmt und an eine, insb. im Betrieb von extern via Anschlußkabel und/oder mittels interner Energiespeicher mit elektrischer Energie versorgte, dem Ansteuern des Meßwandlers und zum Auswerten von vom Meßwandler gelieferten Schwingungssignalen dienende Umformer-Elektronik ME des Meßsystems angeschlossen ist. Diese weist, wie in Fig. 3 schematisch nach Art eines Blockschaltbildes dargestellt, eine dem Ansteuern des Meßwandlers dienende Treiber-Schaltung Exc sowie eine Schwingungssignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung μC, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung μC sowie weitere, dem Betrieb des Meßsystems dienende Elektronik-Komponenten der Umformer-Elektronik, wie etwa eine interne Energieversorgungsschaltung NRG zum Bereitstellen interner Versorgungsspannungen $U_N$ und/oder eine dem Anschluß an ein übergeordnetes Meßdatenverarbeitungssystem und/oder einem Feldbus dienende Kommunikationsschaltung COM, sind ferner in einem entsprechenden, insb. schlag- und/oder auch explosionsfest und/oder hermetisch dicht ausgebildeten, Elektronikgehäuse 200 untergebracht.

Zum Visualisieren von Meßsystem intern erzeugten Meßwerten und/oder gegebenenfalls Meßsystem intern generierten Systemstatusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, insb. programmierbare und/oder fernparametrierbare, Umformer-Elektronik ME ferner so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meß- und/oder Systemdiagnosewerte oder der Steuerung des Meßsystems dienende Einstellwerte. Für den Fall, daß das Meßsystem für eine Ankopplung an ein Feldbus- oder ein anderes Kommunikationssystem vorgesehen ist, weist die Umformer-Elektronik ME eine für eine Datenkommunikation gemäß einem der einschlägigen Industriestandards ausgebildete Kommunikations-Schnittstelle COM auf. Darüberhinaus kann die Umformer-Elektronik ME beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßsystem kann aber beispielsweise auch als sogenanntes Vierleiter-Meßgerät ausgebildet sein, bei dem die interne Energieversorgungsschaltung NRG der Umformer-Elektronik ME mittels einem ersten Paars Leitungen mit einer externen Energieversorgung und die interne Kommunikationsschaltung COM der Umformer-Elektronik ME mittels eines zweiten Paars Leitungen mit einer externen Datenverarbeitungsschaltung oder einem externen Datenübertragungssystem verbunden ist.

Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

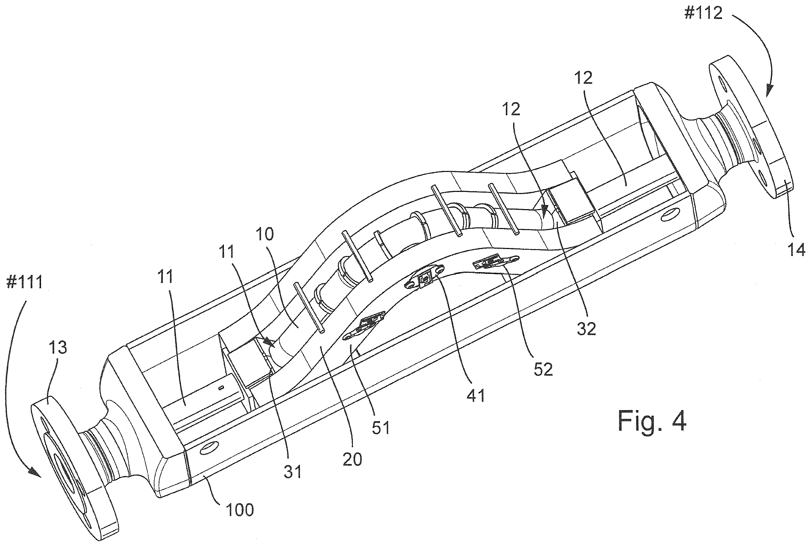

In den Fig. 4 und 5 bzw. 6 und 7 sind zur weiteren Erläuterung der Erfindung ein erstes bzw. ein zweites Ausführungsbeispiel für einen für die Realisierung des Meßsystems geeigneten Meßwandler MW vom Vibrationstyp schematisch dargestellt. Der Meßwandler MW dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so z.B. ein Massedurchfluß m, eine Dichte ρ und/oder eine Viskosität η des Mediums gemessen werden. Jeder der Meßwandler umfaßt dafür jeweils ein in einem Meßwandler-Gehäuse 100 angeordnetes, die physikalisch-elektrische Konvertierung des wenigstens einen zu messenden Parameters eigentlich bewirkendes, insoweit als Meßwerk dienendes, Innenteil. Zusätzlich zur Aufnahme des Innenteils kann das Meßwandlergehäuse 100 zudem auch dazu dienen, das Elektronikgehäuse 200 des In-line-Meßgeräts mit darin untergebrachter Treiber- und Auswerte-Schaltung zu haltern.

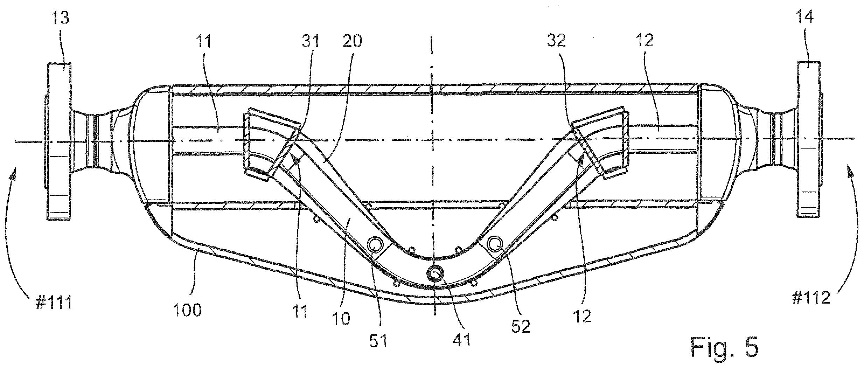

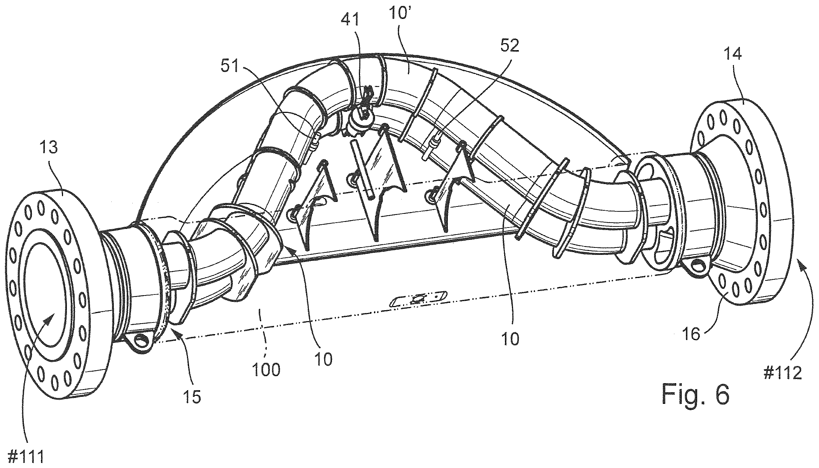

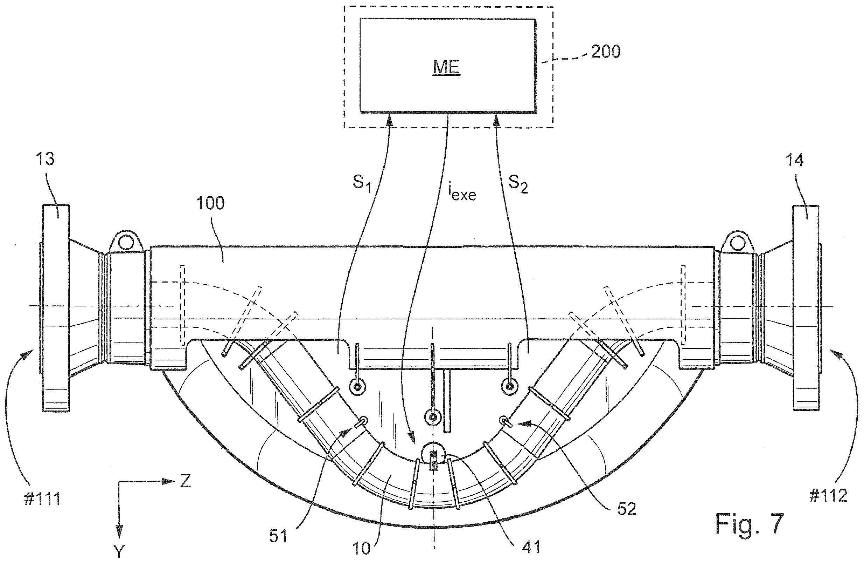

Zum Führen von strömendem Mediums umfaßt das Innenteil des Meßwandlers generell wenigstens ein erstes - im in den Fig. 4 und 5 gezeigten Ausführungsbeispiel einziges zumindest abschnittsweise gekrümmtes - Meßrohr 10, das sich zwischen einem einlaßseitigen ersten Meßrohrende 11# und einem auslaßseitigen zweiten Meßrohrende 12# mit einer Nutz-Schwinglänge erstreckt und zum Erzeugen vorgenannter Reaktionskräfte im Betrieb zumindest zeitweise aktiv zu mechanischen Schwingungen angeregt über seine Nutz-Schwinglänge vibrieren gelassen und dabei, um eine statische Ruhelage oszillierend, wiederholt elastisch verformt wird. Die Nutz-Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs 10. Es sei an dieser Stelle ausdrücklich darauf hingewiesen, daß - obwohl der Meßwandler im in den Fig. 4 und 5 gezeigten Ausführungsbeispiel lediglich ein einziges eher V-förmig gekrümmtes Meßrohr aufweist und zumindest insoweit in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung "PROMASS H", "PROMASS P" oder "PROMASS S" käuflich angebotenen Meßwandlern ähnelt - zur Realisierung der Erfindung selbstverständlich auch Meßwandler mit geradem und/oder mehr als einem Meßrohr, beispielsweise also zwei oder vier Meßrohren, dienen können, etwa vergleichbar den in den eingangs erwähnten US-A 2010/0236338, US-A 2010/0242624, US-A 2010/0242623, US-A 60 06 609, US-B 65 13 393, US-B 70 17 424, US-B 68 40 109, US-B 69 20 798, US-A 57 96 011, US-A 57 31 527 oder US-A 56 02 345 gezeigten oder beispielsweise auch den seitens der Anmelderin unter der Typbezeichnung "PROMASS I", "PROMASS M" bzw. "PROMASS E" oder "PROMASS F" käuflich angebotenen Meßwandlern jeweils mit zwei parallelen Meßrohren. Demnach kann der Meßwandler auch ein einziges gerades Meßrohr oder wenigstens zwei, beispielsweise mittels eines einlaßseitigen Strömungsteilers und eines auslaßseitigen Strömungsteilers, ggf. zusätzlich auch noch mittels ein- und auslaßseitiger Koppelelemente, miteinander mechanisch gekoppelte und/oder einander baugleiche und/oder gekrümmte und/oder zueinander parallele, Meßrohre zum Führen von zu messendem Medium aufweisen, die im Betrieb zum Erzeugen der Schwingungssignale zumindest zeitweise vibrieren, etwa frequenzgleich auf einer gemeinsamen Schwingfrequenz, jedoch zueinander gegenphasig. Gemäß einer Weiterbildung der Erfindung umfaßt der Meßwandler, wie etwa in Fig. 6 und 7 schematisch dargestellt, daher zusätzlich zum ersten Meßrohr 10 eine zweites Meßrohr 10', daß unter Bildung einer ersten Kopplungszone einlaßseitig mittels eines, beispielsweise plattenförmigen, ersten Kopplerelements und unter Bildung einer zweiten Kopplungszone auslaßseitig mittels eines, beispielsweise plattenförmigen und/oder zum ersten Kopplerelement baugleichen, zweiten Kopplerelements mit dem ersten Meßrohr 10 mechanisch verbunden ist. Auch in diesem Fall definieren also die erste Kopplungszone jeweils ein einlaßseitiges erstes Meßrohrende 11#, 11'# jedes der zwei Meßrohre 10, 10' und die zweite Kopplungszone jeweils ein auslaßseitiges zweites Meßrohrende 12#, 12'# jedes der zwei Meßrohre 10, 10'. Da für den Fall, daß das Innenteil mittels zweier Meßrohre gebildet ist, jedes der beiden, insb. im Betrieb im wesentlichen gegenphasig zueinander oszillierenden und/oder zueinander parallelen und/oder hinsichtlich Form und Material baugleichen, Meßrohre 10, 10' dem Führen von zu messendem Medium dient, mündet jedes der zwei Meßrohre nach einer weiteren Ausgestaltung dieser zweiten Variante des erfindungsgemäßen Meßwandlers einlaßseitig in jeweils eine von zwei voneinander beabstandeten Strömungsöffnungen eines dem Aufteilen von einströmendem Medium in zwei Teilströmungen dienenden ersten Strömungsteiler 15 und auslaßseitig in jeweils eine von zwei voneinander beabstandeten Strömungsöffnungen eines dem Wiederzusammenführen der Teilströmungen dienenden zweiten Strömungsteilers 16, so daß also beide Meßrohre im Betrieb des Meßsystem gleichzeitig und parallel von Medium durchströmt sind. Im in den Fig. 6 und 7 gezeigten Ausführungsbeispiel sind die Strömungsteiler insoweit integraler Bestandteil des Meßwandlergehäuses, als mittels des ersten Strömungsteilers ein das Einlaßende #111 des Meßwandlers definierendes einlaßseitige erstes Gehäuseende und mittels des zweiten Strömungsteilers ein das Auslaßende #112 des Meßwandlers definierendes auslaßseitige zweite Gehäuseende gebildet sind.

Wie aus der Zusammenschau der Fign. 4 und 5 bzw. 6 und 7 ohne weiteres ersichtlich, ist das wenigstens eine Meßrohr 10 jeweils so geformt, daß vorgenannte Mittellinie, wie bei Meßwandlern der in Rede stehenden Art durchaus üblich, in einer gedachten Rohrebene des Meßwandlers liegt. Nach einer Ausgestaltung der Erfindung wird das wenigstens eine Meßrohr 10 im Betrieb dabei so vibrieren gelassen, daß es um eine Schwingungsachse, insb. in einem Biegeschwingungsmode, schwingt, die zu einer die beiden Meßrohrenden 11#, 12# imaginär verbindenden gedachten Verbindungsachse parallel oder koinzident ist. Das wenigstens eine Meßrohr 10 ist ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft, ggf. auch koinzidiert.

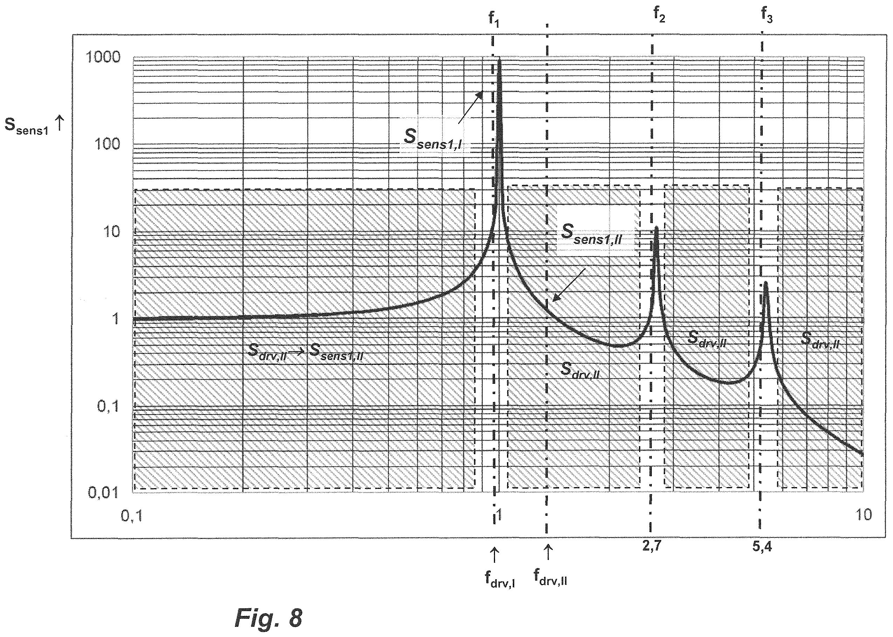

Das wenigstens eine, beispielsweise aus Edelstahl, Titan, Tantal bzw. Zirkonium oder einer Legierung davon hergestellte, Meßrohr 10 des Meßwandlers und insoweit auch eine innerhalb von Lumen verlaufende gedachte Mittellinie des Meßrohrs 10 kann z.B. im wesentlichen U-förmig oder, wie auch in der Fig. 4 und 5 bzw. 6 und 7 bzw. auch Fig. 8 gezeigt, im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweist, der im Bereich zwischen etwa 1 mm und etwa 100 mm liegt.

Zur Minimierung von auf das mittels eines einzigen Meßrohrs gebildeten Innenteils wirkenden Störeinflüssen wie auch zur Reduzierung von seitens des jeweiligen Meßwandlers an die angeschlossene Prozeßleitung insgesamt allfällig abgegebener Schwingungsenergie umfaßt das Innenteil des Meßwandlers gemäß dem in den Fig. 4 und 5 gezeigten Ausführungsbeispiel desweiteren einen mechanisch mit dem - hier einzigen gekrümmten - Meßrohr 10 gekoppelten, beispielsweise ähnlich wie das Meßrohr U- bzw. V-förmige ausgebildete, Gegenschwinger 20. Dieser ist, wie auch in Fig. 2 gezeigt, vom Meßrohr 10 seitlich beabstandet im Meßwandler angeordnet und unter Bildung einer - letztlich vorgenanntes erstes Meßrohrende 11# definierenden - ersten Kopplungszone einlaßseitig und der unter Bildung einer - letztlich vorgenanntes zweites Meßrohrende 12# definierenden - zweiten Kopplungszone auslaßseitig jeweils am Meßrohr 10 fixiert. Der - hier im wesentlichen parallel zum Meßrohr 10 verlaufende, ggf. auch koaxial zu diesem angeordnete - Gegenschwinger 20 ist aus einem zum Meßrohr hinsichtlich des Wärmeausdehnungsverhaltens kompatiblen Metall, wie etwa Stahl, Titan bzw. Zirkonium, hergestellt und kann dabei beispielsweise rohrförmig oder auch im wesentlichen kastenförmig auch ausgeführt sein. Wie in Fig. 2 dargestellt oder u.a. auch in der US-B 73 60 451 vorgeschlagen, kann der Gegenschwinger 20 beispielsweise mittels links- und rechtsseitig des Meßrohrs 10 angeordneten Platten oder auch links- und rechtsseitig des Meßrohrs 10 angeordneten Blindrohren gebildet sein. Alternativ dazu kann der Gegenschwinger 20 - wie etwa in der US-B 66 66 098 vorgeschlagen - auch mittels eines einzigen seitlich des Meßrohrs und parallel dazu verlaufenden Blindrohrs gebildet sein. Wie aus einer Zusammenschau der Fign. 2 und 3 ersichtlich, ist der Gegenschwinger 20 im hier gezeigten Ausführungsbeispiel mittels wenigstens eines einlaßseitigen ersten Kopplers 31 am ersten Meßrohrende 11# und mittels wenigstens eines auslaßseitigen, insb. zum Koppler 31 im wesentlichen identischen, zweiten Kopplers 32 am zweiten Meßrohrende 12# gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in den Fig. 2 und 3 gezeigten Ausführungsbeispiel vorgeschlagen - ein mittels in Richtung der gedachten Längsachse L des Meßwandlers voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen. Wie in den Fig. 2 und 3 schematisch dargestellt, ist das Meßrohr 10 ferner über ein einlaßseitig im Bereich der ersten Kopplungszone einmündendes gerades erstes Verbindungsrohrstück 11 und über ein auslaßseitig im Bereich der zweiten Kopplungszone einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug aus einem für solche Meßwandler üblichen Material, wie z.B. Edelstahl, Titan, Zirkonium, Tantal oder entsprechenden Legierungen davon, dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Im in den Fig. 2 und 3 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das hier mittels Gegenschwinger und Meßrohr gebildete Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Wie aus den Fig. 2 und 3 weiterhin ersichtlich, ist das, insb. im Vergleich zum Meßrohr 10 biege- und torsionssteifes, Meßwandlergehäuse 100, insb. starr, an einem bezüglich der ersten Kopplungszone distalen Einlaßende des einlaßseitigen Verbindungsrohrstücks 11 sowie an einem bezüglich der ersten Kopplungszone distalen Auslaßende des auslaßseitigen Verbindungsrohrstück 12 fixiert. Insoweit ist also das gesamte - hier mittels Meßrohr 10 und Gegenschwinger 20 gebildete - Innenteil nicht nur vom Meßwandlergehäuse 100 vollständig umhüllt, sondern infolge seiner Eigenmasse und der Federwirkung beider Verbindungsrohrstücke 11, 12 im Meßwandler-Gehäuse 100 auch schwingfähig gehaltert.

Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden. Im in Fig. 2 und 3 gezeigten Ausführungsbeispiel sind der erste Anschlußflansch 13 dem einlaßseitigen Verbindungsrohrstück 11 an dessen Einlaßende und der zweite Anschlußflansch 14 dem auslaßseitigen Verbindungsrohrstück 12 an dessen Auslaßende angeformt, während im in Fig. 4 und 5 gezeigten Ausführungsbeispiel die Anschlußflansche entsprechend mit den zugehörigen Strömungsteilern entsprechend verbunden sind.

Wie bereits mehrfach erwähnt, werden beim erfindungsgemäßen Meßsystem die für die Messung erforderlichen Reaktionskräfte im jeweils zu messenden Medium durch das Schwingenlassen des wenigstens einen Meßrohrs in einem aktiv angeregten Schwingungsmode, dem sogenannten Nutzmode, bewirkt. Als Nutzmode wird dabei, wie bei Meßwandlern der in Rede stehenden Art durchaus üblich, wenigstens einer von einer Vielzahl von dem wenigstens einen Meßrohr innewohnenden, natürlichen Schwingungsmoden gewählt, in denen nämliches Meßrohr im Bereich seiner Meßrohrenden jeweils einen Schwingungsknoten und im Bereich seiner Nutzschwinglänge wenigstens einen Schwingungsbauch aufweisende Resonanz-Schwingungen um eine Ruhelage ausführt bzw. ausführen kann, deren jeweilige Eigenschwingungsform wie auch deren jeweilige Eigenfrequenz bekanntlich maßgeblich auch von Mediumsparametern des im Meßrohr strömenden Mediums, insb. dessen momentaner Dichte und Viskosität, abhängig sind. Nicht zuletzt infolge der dieser Abhängigkeit vom durch das wenigstens eine Meßrohr, mithin den Meßwandler im Betrieb hindurchströmenden Medium sind die natürlichen Schwingungsmoden im Betrieb des Meßwandlers in erheblichem Maße veränderlich. Je nach Bauart, Anwendung und Meßbereich können die Eigenfrequenzen dabei innerhalb eines sich durchaus im Bereich einiger 100Hz oder sogar im Kilohertz-Bereich bewegenden Nutz-Frequenzbandes variieren. Bei Anregung des wenigstens einen Meßrohrs auf einer seiner momentanen Eigen- oder auch Resonanzfrequenzen kann somit einerseits anhand der momentan angeregten Schwingungsfrequenz eine mittlere Dichte des durch das wenigstens eine Meßrohr momentane strömenden Mediums leicht ermittelt werden. Anderseits kann so auch die für die Aufrechterhaltung der im Nutzmode angeregten Schwingungen momentan erforderliche elektrische Leistung minimiert werden. Neben der vorgenannten Abhängigkeit der natürlichen Schwingungsmoden des wenigstens einen Meßrohrs von dem darin momentan geführten Medium, werden die natürlichen Schwingungsmoden von Meßrohren grundsätzlich aber auch von deren jeweiliger Größe, Form, Material und Wandstärke sowie die jeweilige mechanische Kopplung zu anderen Komponenten des Meßwandlers, wie etwa dem Meßwandler-Gehäuse, einem ggf. vorgesehenen weiteren Meßrohr bzw. einem Gegenschwinger etc., mithin auch von an den Meßrohrenden bzw. den Kopplungszonen im Betrieb wirkenden, ggf. auch schwankenden, Einspannkräften bzw. -momenten mitbestimmt.

Zum aktiven Anregen von Vibrationen des wenigstens einen Meßrohrs, insb. auch jenen im vorgenannten Nutzmode, umfaßt der Meßwandler ferner eine mittels wenigstens eines mit dem wenigstens eine Meßrohr in Wirkverbindung stehenden elektro-mechanischen, beispielsweise elektro-dynamischen, Schwingungserregers gebildete Erregeranordnung 5, die dazu dient, das wenigstens eine Meßrohr betriebsgemäß zumindest zeitweise in für die konkrete Messung jeweils geeignete Schwingungen im Nutzmode, beispielsweise von Biegeschwingungen in einem natürlichen Biegeschwingungsmode, mit jeweils für die Erzeugung und die Erfassung der oben genannten Reaktionskräfte im Medium ausreichend großen Schwingungsamplitude zu versetzen bzw. nämliche Schwingungen aufrechtzuerhalten. Der wenigstens eine - etwa elektrodynamischen, nämlich mittels Tauchankerspule gebildete - Schwingungserreger, mithin die Erregeranordnung, dient hierbei im besonderen dazu, eine von der Umformer-Elektronik mittels wenigstens eines elektrischen Treibersignals $s_{drv}$ eingespeiste elektrische Erregerleistung $P_{exc}$ in, z.B. pulsierende oder harmonische, also im wesentlichen sinusförmige, Erregerkräfte $F_{exc}$ zu konvertieren, die entsprechend auf das wenigsten eine Meßrohre wirken und somit die gewünschten Schwingungen im Nutzmode bewirken. Beispielsweise kann das wenigstens eine Treibersignal gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente eine einer Eigenfrequenz eines als Nutzmode gewählten natürlichen Schwingungsmodes entsprechende Signalfrequenz aufweist. Die - durch Konvertierung von in die Erregeranordnung eingespeister elektrischer Erregerleistung $P_{exc}$ generierten - Erregerkräfte $F_{exc}$ können dabei in dem Fachmann an und für sich bekannter Weise, z.B. mittels einer in der Umformer-Elektronik 12 vorgesehenen, letztlich das Treibersignal liefernden Treiberschaltung Exc entsprechend eingestellt werden, etwa mittels in der Treiberschaltung implementierten, eine Amplitude (Stromstärke) eines Stromes des Treibersignals regelnder Strom- und/oder eine Amplitude (Spannungshöhe) einer Spannung des Treibersignals Spannungs-Reglern hinsichtlich ihres Betrags und, z.B. mittels einer in Betriebsschaltung gleichfalls vorgesehenen Phasen-Regelschleife (PLL), hinsichtlich ihrer momentanen Frequenz oder im Falle mehrfrequenter Anregung hinsichtlich ihrer momentanen Frequenzen, vgl. hierzu beispielsweise auch die US-A 48 01 897 oder die US-B 63 11 136. Der Aufbau und die Verwendung vorgenannter Phasenregel-Schleifen zum aktiven Anregen von Meßrohren zu Schwingungen auf einer ihrer mechanischen Eigenfrequenzen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS H", "PROMASS I", "PROMASS P" oder "PROMASS S" angeboten werden. Deren Treiberschaltung ist beispielsweise jeweils so ausgeführt, daß Biegeschwingungen im Nutzmode auf eine konstante, also auch von der Dichte, $\rho$, weitgehend unabhängige Amplitude geregelt werden.

Beim erfindungsgemäßen Meßsystem ist hierbei im besonderen vorgesehen, daß die Umformer-Elektronik die für die Generierung der Erregerkräfte benötigte elektrische Erregerleistung in den Schwingungserreger, mithin die damit gebildete Erregeranordnung, mittels eines solchen elektrischen Treibersignals $s_{drv}$ einspeist, das zumindest zeitweise eine sinusförmige, möglichst mehrere Schwingungsperioden umfassende, Signalkomponente $s_{drv,I}$ erster Art mit einer

Signalfrequenz, $f_{drv,l}$, aufweist, die, wie in Fig. 8 schematisch angedeutet, einer momentanen Eigenfrequenz, $f_1$, eines natürlichen Schwingungsmodes erster Ordnung des wenigstens einen Meßrohrs entspricht, in dem das wenigstens eine Meßrohr Eigenschwingungen um eine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen, so daß also das wenigstens eine Meßrohr zumindest zeitweise, angeregt vom wenigstens einen Schwingungserreger 41, zumindest anteilig, insb. im Falle der Verwendung nämlichen Schwingungsmode als Nutzmode überwiegend, Schwingungen in Resonanz, nämlich mit einer der momentanen Eigenfrequenz, $f_1$, des Schwingungsmodes erster Ordnung entsprechenden Schwingungsfrequenz, $f_{drv,l} = f_1$, ausführt.

Nicht zuletzt für den erwähnten Fall, daß das mittels des Meßwandlers schlußendlich gebildete Meßsystem zur Messung des Massendurchflusses verwendet werden soll, kann es von besonderem Vorteil sein, wenn das wenigstens eine Meßrohr 10 im Betrieb mittels der Erregeranordnung zumindest zeitweise in einem Nutzmode aktiv angeregt ist, in dem es, insb. überwiegend oder ausschließlich, Biegeschwingungen um seine Ruhelage ausführt, und zwar überwiegend mit genau einer natürlichen Eigenfrequenz (Resonanzfrequenz), die einem Biegeschwingungsgrundmode erster Ordnung entspricht, in dem das wenigstens eine schwingende Meßrohr im Bereich seiner Nutz-Schwinglänge genau einen (Biege-) Schwingungsbauch aufweist. Ein Ziel einer Anregung des Biegeschwingungsgrundmode erster Ordnung bzw. dessen Verwendung als Nutzmode besteht also u.a. darin, mittels des wenigstens einen vibrierenden Meßrohrs im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Für den betriebsmäßig vorgesehenen Fall nämlich, daß das Medium in der Prozeßleitung strömt und somit der Massedurchfluß m von Null verschieden ist, werden mittels dieser Weise vibrierenden wenigstens einen Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben, und zwar im wesentlichen gemäß einer weiteren natürlichen Eigenschwingungsform von höherer modaler Ordnung als der Nutzmode. Eine momentane Ausprägung dieses, dem angeregten Nutzmode gleichfrequent überlagerten Coriolismodes ist dabei, insb. hinsichtlich ihrer Amplituden, auch vom momentanen Massedurchfluß, m, abhängig, und kann, beispielsweise im Falle der Verwendung des Meßsystems als Coriolis-Massendurchflußmeßgerät, zur Ermittlung der Massendurchflußrate bzw. des totalisierten Massendurchflusses dienen.

Demnach ist nach einerweiteren Ausgestaltung der Erfindung Treibersignal zumindest zeitweise so ausgebildet, daß die Signalfrequenz, $s_{drv,l}$, von dessen Signalkomponente erster Art möglichst genau einer momentanen Eigenfrequenz eines natürlichen Biegeschwingungsmodes entspricht, nämlich dem Biegeschwingungsgrundmode, in dem das wenigstens eine vibrierende Meßrohr Biegeschwingungen um die Ruhelage ausführt, die im Bereich des ersten und zweiten Meßrohrendes jeweils einen Schwingungsknoten und im Bereich der Nutz-Schwinglänge genau einen Schwingungsbauch aufweisen, mithin das wenigstens eine Meßrohr, angeregt vom wenigstens einen Schwingungserreger, zumindest anteilig, insb. überwiegend, Biegeschwingungen in Resonanz ausführt, nämlich mit einer der momentanen Eigenfrequenz des nämlichen Biegeschwingungsmodes entsprechenden Schwingungsfrequenz. Bei einer Verwendung eines aus Edelstahl, insb. Hastelloy, gefertigten Meßrohrs mit einem Kaliber von 29 mm, einer Wandstärke s von etwa 1,5 mm, einer Nutz-Schwinglänge von etwa 420 mm und einer gesehnten Länge, gemessen zwischen den beiden Meßrohrenden, von 305 mm, würde die dem Biegeschwingungsgrundmode entsprechende Eigenfrequenz desselben beispielsweise bei einer Dichte von praktisch Null, z.B. bei lediglich mit Luft gefülltem Meßrohr, ungefähr 500 Hz betragen.

Im in den Fig. 4 und 5 gezeigten Ausführungsbeispiel mit mittels Meßrohr und Gegenschwinger gebildeten Innenteils führt das Meßrohr 10 die mittels der Erregeranordnung aktiv angeregten Biegeschwingungen überwiegend relativ zum Gegenschwinger 20 aus, insb. auf einer gemeinsamen Schwingfrequenz zueinander gegenphasig. Im Falle einer gleichzeitig, beispielsweise differentiell, sowohl auf Meßrohr als auch Gegenschwinger wirkenden Erregeranordnung wird dabei zwangsweise auch der Gegenschwinger 20 zu simultanen Auslegerschwingungen angeregt, und zwar so, daß er frequenzgleich, jedoch zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind; im anderen Fall der Verwendung zweier Meßrohre sind diese, wie bei Meßwandlern der in Rede stehenden Art üblich, mittels der, insb. differentiell zwischen beiden Meßrohre 10, 10' wirkenden, Erregeranordnung aktiv so angeregt, daß sie im Betrieb zumindest zeitweise gegengleiche Biegeschwingungen um die Längsachse L ausführen. Anders gesagt, die beiden Meßrohre 10, 10' bzw. Meßrohr 10 und Gegenschwinger 20 bewegen sich dann jeweils nach der Art von gegeneinander schwingenden Stimmgabelzinken. Für diesen Fall ist gemäß einer weiteren Ausgestaltung der Erfindung der wenigstens einen elektro-mechanischen Schwingungserreger dafür ausgelegt, gegengleiche Vibrationen des ersten Meßrohrs und des zweiten Meßrohrs, insb. Biegeschwingungen jedes der Meßrohre um eine das jeweilige erste Meßrohrende und das jeweilige zweite Meßrohrende imaginär verbindende gedachte Schwingungsachse, anzuregen bzw. aufrechtzuerhalten. Als Coriolismode kann, wie bei derartigen Meßwandlern mit gekrümmtem Meßrohr üblich, z.B. die Eigenschwingungsform des anti-symmetrischen Twistmodes dienen, also jene, bei der das Meßrohr 10, wie bereits erwähnt, auch Drehschwingungen um eine senkrecht zur Biegschwingungsachse ausgerichteten gedachten Drehschwingungsachse ausführt, die die Mittelinie des Meßrohrs 10 im Bereich der halben Schwingungslänge imaginär schneidet.

Für den erwähnten Fall, daß das wenigstens eine Meßrohr im wesentlichen gerade ist, kann die Signalfrequenz der Signalkomponente erster Art des Treibersignals $s_{drv}$ beispielsweise auch einer momentanen Eigenfrequenz eines natürlichen Torsionsschwingungsmodes, nämlich der des Torsionsschwingungsgrundmode, entsprechend eingestellt sein, in dem das wenigstens eine vibrierende Meßrohr Torsionsschwingungen um die Ruhelage, nämliche um eine das einlaßseitige erste Meßrohrende und das auslaßseitige zweite Meßrohrende imaginär verbindende gedachte Schwingungsachse ausführt, derart, daß nämliche Torsionsschwingungen, nicht zuletzt auch in für die Messung der Viskosität besonders günstiger Wiese, im Bereich des ersten und zweiten Meßrohrendes jeweils einen Schwingungsknoten und im Bereich der Nutz-Schwinglänge genau einen Schwingungsbauch aufweisen. Im Ergebnis dessen, führt also das wenigstens eine Meßrohr, angeregt vom wenigstens einen Schwingungserreger, dann zumindest anteilig, ggf. auch überwiegend, Torsionsschwingungen in Resonanz, nämlich mit einer der momentanen Eigenfrequenz des nämlichen Torsionsschwingungsmodes entsprechenden Schwingungsfrequenz, aus.

Zum Erfassen von Schwingungen des wenigstens einen Meßrohrs 10, nicht zuletzt auch den mittels des wenigstens eine Schwingungserregers aktiv angeregten Schwingungen, weist der Meßwandler ferner jeweils eine entsprechende Sensoranordnung 50 auf. Diese umfaßt, wie auch in den Fig. 4 bis 7 schematische dargestellt, einen - hier vom wenigstens einen Schwingungserreger beabstandet - am wenigstens einen Meßrohr 10 angeordneten, beispielsweise elektrodynamischen, ersten Schwingungssensor 51, der ein Vibrationen des Meßrohrs 10 repräsentierendes, als erstes Schwingungssignal $s_{sens1}$ des Meßwandlers dienendes, Sensorsignal liefert, beispielsweise einer mit den Schwingungen korrespondierende elektrische (Wechsel-)Spannung $u_{sens1}$ mit einer von einer momentanen Amplitude der Schwingungen des wenigstens Meßrohrs abhängigen Amplitude $U_{sens1}$ (Spannungshöhe). Das Schwingungssignal $s_{sens1}$ selbst kann grundsätzlich eine Vielzahl von hinsichtlich ihrer Signalfrequenz verschiedenen Signalkomponenten enthalten, nicht zuletzt auch solche, die mit den aktiv angeregten und insoweit erwünschten Schwingungen des wenigstens einen Meßrohrs korrespondieren. Demnach weist, wie in Fig. 8 schematisch angedeutet, das wenigstens eine Schwingungssignal $s_{sens1}$ beim erfindungsgemäßen Meßsystem, korrespondierend mit dem von der Umformer-Elektronik gelieferten Treibersignals bzw. den damit angetriebenen Schwingungen des wenigstens einen Meßrohrs, zumindest zeitweise auch eine sinusförmige Signalkomponente $s_{sens1,I}$ erster Art mit einer Signalfrequenz, $f_{sens,I}$, auf, die der Signalfrequenz, $f_{drv,I}$, der Signalkomponente $s_{drv,I}$ erster Art des Treibersignals $s_{drv}$, mithin der momentanen Eigenfrequenz, $f_1$, des demnach angeregten Schwingungsmodes erster Ordnung, beispielsweise also der momentanen Eigenfrequenz des Biegeschwingungsgrundmodes oder der momentanen Eigenfrequenz des erwähnten Torsionsschwingungsmodes, entspricht. Zumindest im Falle der Verwendung des Biegeschwingungsgrundmodes als aktive angeregter Schwingungsmode erster Ordnung weist die Signalkomponente $s_{sens1,I}$ erster Art des Schwingungssignals eine vom aktuellen Massendurchfluß des im wenigstens einen Meßrohr 10 strömenden Medium abhängigen Phasendifferenz relativ zur frequenzgleichen Signalkomponente $s_{sens1,I}$ erster Art des Treibersignals $s_{drv}$ auf.

Nach einer Weiterbildung der Erfindung weist die Sensoranordnung ferner einen vom ersten Schwingungssensor 52 beabstandet am wenigstens einen Meßrohr 10 angeordneten, insb. elektrodynamischen, zweiten Schwingungssensor 52 auf, der ein ebenfalls Vibrationen des Meßrohrs 10 repräsentierendes, als zweites Schwingungssignal $s_{sens2}$ des Meßwandlers dienendes Sensorsignal liefert, das gleichermaßen wie das erste Sensorsignal eine Signals Komponente mit einer der Signalfrequenz, $f_{drv,I}$, der Signalkomponente $s_{drv,I}$ erster Art des Treibersignals $s_{drv}$ entsprechenden Signalfrequenz, zumindest im Falle der Verwendung einander baugleicher Schwingungssensoren im übrigen auch ein dem das erste Schwingungssignal vergleichbares Frequenzspektrum, aufweist. Eine Länge des sich zwischen den beiden, beispielsweise baugleichen, Schwingungssensoren erstreckenden, insb. im wesentlichen freischwingend vibrierenden, Bereichs des zugehörigen wenigstens einen Meßrohrs entspricht hierbei einer Meßlänge des jeweiligen Meßwandlers. In den hier gezeigten Ausführungsbeispielen sind jeweils der erste Schwingungssensor 51 einlaßseitig und der zweite Schwingungssensor 52 auslaßseitig am wenigstens einen Meßrohr 10 angeordnet, insb. vom wenigstens einen Schwingungserreger bzw. von der Mitte des Meßrohrs 10 gleichweit beabstandet wie der erste Schwingungssensor. Wie bei derartigen, in als Coriolis-Massendurchfluß-Meßgerät ausgebildeten Meßsystemen verwendeten, Meßwandlern vom Vibrationstyp durchaus üblich, sind der erste Schwingungssensor 51 und der zweite Schwingungssensor 52 gemäß einer Ausgestaltung der Erfindung ferner jeweils auf einer vom Schwingungserreger 41 eingenommenen Seite des Meßrohrs im Meßwandler angeordnet. Desweiteren kann auch der zweite Schwingungssensor 52 auf der vom ersten Schwingungssensor 51 eingenommenen Seite des Meßrohrs im Meßwandler angeordnet sein. Die Schwingungssensoren 51, 52 der Sensoranordnung können in vorteilhafter Weise zudem so ausgebildet sein, daß sie Schwingungssignale $s_{sens1}$, $s_{sens2}$ gleichen Typs liefern, beispielsweise also jeweils eine Wechselspannung $u_{sense1}$, $u_{sens2}$. Gemäß einer weiteren Ausgestaltung der Erfindung sind sowohl der erste Schwingungssensor als auch der zweite Schwingungssensor ferner jeweils so im Meßwandler MW plaziert, daß jeder der Schwingungssensoren zumindest überwiegend Vibrationen des wenigstens einen Meßrohrs 10 erfaßt. Für den oben beschriebenen Fall, daß das Innenteil mittels eines Meßrohrs und eines mit diesem gekoppelten Gegenschwingers gebildet ist, sind nach einerweiteren Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des Meßrohrs relativ zum Gegenschwinger, beispielsweise differentiell, erfassen, daß also sowohl das erste Schwingungssignal $s_{sens1}$ als auch das zweite Schwingungssignal $s_2$, insb. gegengleiche, Schwingungsbewegungen des wenigstens einen Meßrohrs 10 relativ zum Gegenschwinger 20 repräsentieren. Für den anderen beschriebenen Fall, daß das Innenteil mittels zweier, insb. im Betrieb gegengleich schwingender, Meßrohre gebildet ist, sind nach einer anderen Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des ersten Meßrohrs 10 relativ zum zweiten Meßrohr 10', beispielsweise differentiell, erfassen, daß also sowohl das erste Schwingungssignal $s_{sens1}$ als auch das zweite Schwingungssignal $s_{sens2}$, insb. gegengleiche, Schwingungsbewegungen der zwei Meßrohre relativ zueinander repräsentieren, insb. derart daß - wie bei konventionellen Meßwandlern üblich - das mittels des ersten Schwingungssensors erzeugte erste Schwingungssignal einlaßseitige Vibrationen des ersten Meßrohrs relativ zum zweiten Meßrohr und das mittels des zweiten Schwingungssensors erzeugte zweite Schwingungssignal auslaßseitige Vibrationen des ersten Meßrohrs relativ zum zweiten Meßrohr repräsentieren. Gemäß einer weiteren Ausgestaltung der Erfindung ist ferner vorgesehen, daß die Sensoranordnung genau zwei Schwingungssensoren, also zusätzlich zum ersten und zweiten Schwingungssensor keine weiteren Schwingungssensoren, aufweist und insoweit hinsichtlich der verwendeten Komponenten konventionellen Sensoranordnungen für Meßwandler der in Rede stehenden Art entspricht.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner durchaus auch andere dem Fachmann bekannte, wie z.B. opto-elektronische, Schwingungssensoren zur Bildung der Sensoranordnung verwendet werden können. Im übrigen können, wie bei Meßwandlern der in Rede stehenden Art durchaus üblich, zusätzlich zu den Schwingungssensoren weitere, insb. Hilfs- bzw. Störgrößen erfassende, Sensoren im Meßwandler vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßwandlers und/oder Änderungen der Empfindlichkeit des Meßaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können.

Die Sensoranordnung 19 ist ferner, wie bei derartigen Meßwandlern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Das wenigstens eine von der Sensoranordnung, mithin vom Meßwandler gelieferte Schwingungssignal ist, wie auch in Fig. 3 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Die Meßschaltung empfängt die Schwingungssignale der Sensoranordnung 19 und generiert daraus, insb. auch der in dem wenigstens einen Schwingungssignale bzw. den Schwingungssignalen enthalten Signalkomponente erster Art die eingangs erwähnten Meßwerte, die beispielsweise eine Massedurchflußrate, einen totalisierten Massendurchfluß und/oder eine Dichte und/oder eine Viskosität des zu messenden Mediums repräsentieren; dies ggf. auch unter Berücksichtigung mittels des wenigstens einen Treibersignals, insb. deren Signalkomponente erster Art in die Erregeranordnung eingespeister, mithin auch darin umgesetzter elektrischer Erregerleistung. Als Eingangsschaltung FE wie auch als Meß- und Auswerteschaltung µC können hierbei in herkömmlichen Coriolis-Massedurchfluß-Meßgeräten zwecks Konvertierung der Schwingungssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung µC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem, ggf. der Speicherung von mittels des Meßsystems generierten Meßwerten über einen längeren Zeitraum dienenden, nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Gleichermaßen können mittels der Umformer-Elektronik im Betrieb generierte Meßwerte in einen solchen, ggf. auch denselben, flüchtigen Datenspeicher RAM geladen und für eine spätere Weiterverarbeitung entsprechend vorgehalten werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß das wenigstens eine Schwingungs-signal bzw. die Schwingungssignale $s_{sense1}$, $s_{sense2}$ wie bereits angedeutet, für eine Verarbeitung im Mikrocomputer mittels entsprechender Analog-zu-digitalWandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83". Desweiteren können die Meßwerte, wie bereits erwähnt, vor Ort angezeigt und/oder auch an ein dem Meßsystem übergeordnetes Datenverarbeitungssystem inform digitaler Meßdaten gesendet und daselbst entsprechend weiterverarbeitet werden.

Die Umformer-Elektronik 12, einschließlich der darin realisierten Meß- und Betriebsschaltung, kann desweiteren beispielsweise in einem separaten Elektronik-Gehäuse $7_2$ untergebracht sein, das vom Meßwandler entfernt angeordnet oder, wie in Fig. 1 gezeigt, unter Bildung eines einzigen Kompaktgeräts direkt am Meßwandler 1, beispielsweise von außen am Aufnehmer-Gehäuse $7_1$, fixiert ist. Bei dem hier gezeigten Ausführungsbeispiel ist daher am Aufnehmer-Gehäuse $7_1$ ferner ein dem Haltern des Elektronik-Gehäuses $7_2$ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßwandler 11, insb. den darin plazierten Schwingungserregern und Sensoren, und der erwähnten Umformer-Elektronik 12 angeordnet sein.

Die Umformer-Elektronik dient gemäß einer weiteren Ausgestaltung der Erfindung im ferner dazu unter Verwendung der von der Sensoranordnung 50 gelieferten Schwingungssignale $s_1$, $s_2$, beispielsweise anhand einer zwischen den bei anteilig in Nutz- und Coriolismode schwingendem Meßrohr 10 generierten Schwingungssignalen $s_1$, $s_2$ des ersten und zweiten Schwingungssensors 51, 52 detektierten Phasendifferenz, wiederkehrend einen Massendurchfluß-Meßwert $X_m$ zu ermitteln, der die zu messenden Massendurchflußrate, m, des durch den Meßwandler geführten Mediums möglichst genau repräsentiert. Dafür erzeugt die Meß- und Auswerte-Schaltung gemäß einer weiteren Ausgestaltung der Erfindung im Betrieb wiederkehrend einen Phasendifferenz-Meßwert, der die zwischen der Signalkomponente erster Art des ersten Schwingungssignal $s_1$ und Signalkomponente erster Art des zweiten Schwingungssignals $s_2$ existierenden Phasendifferenz, $\Delta\varphi$, momentan repräsentiert. Die Berechung des Massendurchfluß-Meßwert $X_m$ kann, unter Verwen-dung der gleichfalls in der Umformer-Elektronik vorgehaltenen Signalfrequenz der Signalkomponente erster Art des Treiber- bzw. des wenigstens eine Sensorsignals somit beispielsweise basierend auf basierend der bekannten Bezie-hung:

$$\frac{\Delta\varphi}{f_{drv,l}} \sim m \rightarrow X_m$$

erfolgen. Ferner dient die Meß- und Auswerte-Schaltung des erfindungsgemäßen Meßsystems dient gemäß einer weiteren Ausgestaltung der Erfindung dazu, abgleitet von der durch die momentane Signalfrequenz der Signalkomponente erster Art des Treiber- bzw. des wenigstens eine Sensorsignals repräsentierte momentane Eigenfrequenz in dem Fachmann an und für sich bekannter Weise zusätzlich einen die Dichte des Mediums repräsentirenden Dichte-Meßwert $X_\rho$ zu generieren, beispielsweise basierend auf der bekannten Beziehung:

$$\frac{1}{f_{drv,l}^2} \sim \rho \rightarrow X_\rho \, .$$

Alternativ oder in Ergänzung dazu kann die Auswerteschaltung wie bei Meßsystemen der in Rede stehenden Art durchaus üblich ggf. auch dazu verwendet werden, einen Viskositäts-Meßwert $X_\eta$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Treibersignal, etwa Amplitude und Signalfrequenz von dessen Signalkomponente erster Art oder auch eine Amplitude des gesamten, ggf. auch auf eine anhand wenigstens eines der Schwingungssignale ermittelte Schwingungsamplitude normierten Treibersignals, insb. dessen Strom. Alternativ oder in Ergänzung dazu kann aber auch ein dem Einstellen der Signalkomponente erster Art des Treibersignals dienendes internes Steuersignal oder, beispielsweise im Falle einer Anregung der Vibrationen des wenigstens einen Meßrohrs mit einem Erregerstrom von fest vorgegebener bzw. auf konstant geregelter Amplitude, auch wenigstens eines der Schwingungssignale, insb. eine Amplitude von dessen Signalkomponente erster Art, als ein Maß der für die Ermittlung des Viskositäts-Meßwerts erforderlichen Erregerenergie oder Erregerleistung bzw. Dämpfung dienen.

Wie bereit erwähnt, kann bei Meßsystem der in Rede stehenden Art das wenigstens eine Meßrohr vielfältigen Belastungen ausgesetzt sein und insoweit während der gesamten Laufzeit des Meßsystems in kaum oder überhaupt nicht vorsehbarer Weise derart verändert werden, das im Ergebnis eine dem Meßwandler, mithin dem damit gebildeten Meßsystem, immanente Meßwandler-Übertragungsfunktion, gemäß der der Meßwandler das Treibersignal, etwa einen im wenigstens einen Schwingungserreger fließenden Strom $i_{drv}$ oder eine diesen treibende Spannung $u_{drv}$, in das wenigstens einen Schwingungssignal $s_{sens1}$, etwa eine mittels des wenigstens einen Schwingungssensors generierten, als Schwingungssignal $s_{sens1}$ dienenden Spannung $u_{sens1}$ konvertiert, über die Laufzeit des Meßsystems von einer dafür vorab in einem Referenzzustand des Meßwandlers bzw. des Meßsystems, etwa bei einer Kalibrierung und/oder bei einer Inbetriebnahme des Meßsystems und/oder bei einem nachträglichen Abgleich des installierten Meßsystems, ermittelten ursprünglichen Meßwandler-Übertragungsfunktion in erheblichem Maße abweichen kann. Infolge einer solche Änderung der Meßwandler-Übertragungsfunktion ändert sich schlußendlich auch eine Meßsystem-Übertragungsfunktion, gemäß der das Meßsystem den zu erfassenden Mediumsparameter in den entsprechenden Meßwert abbildet und sinkt somit auch die Meßgenauigkeit, mit der das Meßsystem die oben erwähnten fürderhin Meßwerte erzeugt, im Vergleich zur ursprünglichen viel höheren Meßgenauigkeit. Ursachen solcher Veränderungen können beispielsweise thermische oder mechanische Überbelastungen, wie etwa auf den Meßwandler einwirkende Thermoschocks, Übertemperaturen und/oder -drücke, von der angeschlossenen Prozeßleitung auf den Meßwandler ausgeübte erhöhte Einspann- und/oder Rüttelkräfte oder durch das im wenigstens einen Meßrohr strömende Medium bewirkte Erodierungen des Meßrohrs, nämlich Abrasions- und/oder Korrosionserscheinungen oder Bildung eines auf einer das zu messende Medium im Betrieb kontaktierenden Innenseite des Meßrohrs haftenden Belags etc., sein. Infolge dessen können am Meßrohr beispielsweise Deformationen, Materialabtragungen, Rißbildungen, Materialermüdungen oder andere, die strukturelle Integrität des Meßwandlers, mithin die die Betriebssicherheit des gesamten Meßsystems herabsetzende bzw. das Meßsystems schneller altern lassende, Erscheinungen auftreten. Solche, letztlich die Meßgenauigkeit herabsetzenden Alterungserscheinungen können beispielsweise darin begründet sein, daß sich ein Schwingungsverhalten des wenigstens einen Meßrohrs, mithin dessen natürliche Schwingungsmoden, eine elektrische Impedanz des wenigstens einen Schwingungssensors, eine elektrische Impedanz des wenigstens einen Schwingungserregers, eine Wandlerkonstante des wenigstens einen Schwingungserregers, gemäß der dieser das Treibersignal in eine entsprechende Erregerkraft wandelt, und/oder eine Wandlerkonstante des wenigstens einen Schwingungssensors, gemäß der dieser Schwingungsbewegungen des wenigstens eine Meßrohrs in das entsprechende Schwingungssignals wandelt, irreversible verändern.

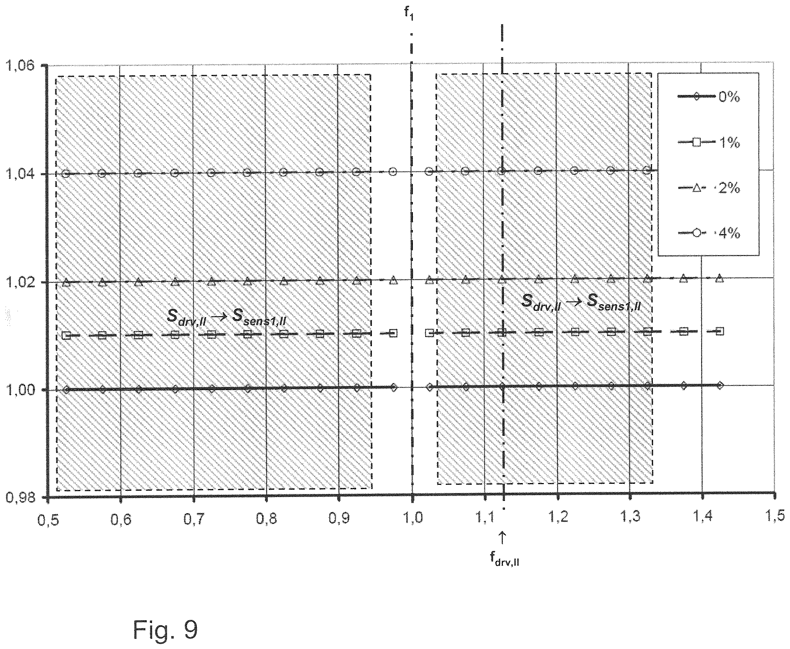

Dem Rechnung tragend dient beim erfindungsgemäßen Meßsystem die Umformer-Elektronik ME im besonderen, nicht zuletzt zwecks wiederkehrender Durchführung einer Systemdiagnose auch während des laufenden Meßtriebs, dazu, im Betrieb, nämlich zu einem Zeitpunkt $t_i$, eine, etwa infolge von Überbelastungen der vorgenannten Art verursachte, Abweichung des Meßsystems von einem dafür vorab, nämlich zu einem Zeitpunkt $t_{Ref}$, - beispielsweise also bei einer Kalibrierung und/oder bei einer Inbetriebnahme des Meßsystems mit einem Medium von bekannter Temperatur und Dichte - ermittelten Referenzzustand zu detektieren und ggf. mittels einer entsprechenden, beispielsweise visuell und/oder akustisch wahrnehmbaren, Systemstatusmeldung $Sys_{fail}$ zu signalisieren, etwa inform eines Alarmes. Dafür ist die Umformer-Elektronik ferner so eingerichtet, daß das mittels der Umformer-Elektronik generierte Treibersignal $s_{drv}$, wie in Fig. 8 schematisch angedeutet, zumindest zeitweise eine, ggf. auch hinsichtlich einer Signalleistung momentan dominierende und/oder mehrere Schwingungsperioden umfassende, sinusförmige Signalkomponente $s_{drv,II}$ zweiter Art mit einer Signalfrequenz, $f_{drv,II}$, aufweist, die von jeder momentanen Eigenfrequenz jedes natürlichen Schwingungsmodes des wenigstens einen Meßrohrs jeweils um mehr als 1Hz, möglichst auch mehr als 5Hz, und/oder um mehr als 1%, möglichst mehr als 10%, nämlicher Eigenfrequenz, abweicht. Angeregt vom wenigstens einen mit nämlichem, die Signalkomponente $s_{drv,II}$ zweiter Art umfassenden Treibersignal gespeisten Schwingungserreger 41 führt das wenigstens eine Meßrohr somit zumindest anteilig erzwungene Schwingungen außer Resonanz aus und weist das wenigstens eine Schwingungssignal $s_{sens1}$ gleichermaßen zumindest zeitweise eine sinusförmige Signalkomponente $s_{sens1,II}$ zweiter Art mit einer Signalfrequenz, $f_{sens,II}$, auf, die der Signalfrequenz, $f_{drv,II}$, der Signalkomponente $s_{drv,II}$ zweiter Art des Treibersignals$_{drv}$, mithin keiner momentanen Eigenfrequenz irgendeines natürlichen Schwingungsmodes des wenigstens einen Meßrohrs entspricht. Hierbei ist es ohne weiteres auch möglich, das Treibersignal in der Weise mittels der Umformer-Elektronik zu generieren, daß es die Signalkomponente erster Art und die Signalkomponente zweiter Art gleichzeitig aufweist, wodurch das wenigstens eine Meßrohr, angeregt vom wenigstens einen Schwingungserreger, gleichzeitig sowohl anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, als auch anteilig erzwungene Schwingungen außer Resonanz ausführt.; falls erforderlich kann das Treibersignal die Signalkomponente erster Art aber auch alternierend zur Signalkomponente zweiter Art aufweisen. Für den Fall, daß beispielsweise beim wenigstens einen Meßrohr des Meßwandlers im Betrieb eine Materialabtragung, mithin eine Reduzierung von dessen Wandstärke zu verzeichnen wäre, würde das in der Fig. 8 schematisch dargestellte Frequenzspektrum des wenigstens eine Meßrohrs im innerhalb des mittels der Signalkomponente zweiter Art des Treibersignals angefahrene Frequenzbereich, mithin die dementsprechend generierte Signalkomponente zweiter Art des Schwingungssignals, beispielsweise den in Fig. 9 schematisch dargestellten, anhand von Labormessungen an einem Meßrohr, von dem die Wandstärke sukzessive um bis zu 4% verringert wurde, aufweisen. Deutlich erkennbar ist hierbei der nahezu lineare Zusammenhang zwischen der Schwingungsamplitude der Schwingungen des Meßrohrs außer Resonanz, mithin der Signalamplitude der Signalkomponente zweiter Art des Schwingungssignals bzw. des Treibersignals, und der zum jeweiligen Meßzeitpunkt momentanen Wandstärke des wenigstens einen Meßrohrs. Falls erforderlich, etwa zwecks einer weiteren Verbesserung der Verläßlichkeit der Diagnose bzw. zwecks einer möglichst genauen Messung der aktuellen (Rest-) Wandstärke des wenigstens eine Meßrohrs, kann es gelegentlich von Vorteil sein, die bei den hier vorliegenden Messungen vernachlässigte geringfügige, nahezu lineare Abhängigkeit der Schwingungsamplitude der Schwingungen des Meßrohrs auch von der üblicherweise ohnehin gemessenen Mediums- bzw. Meßrohrtemperatur und/oder der ohnehin gemessenen Mediumsdichte, p, entsprechend zu kompensieren.

Nach einer weiteren Ausgestaltung der Erfindung ist, nicht zuletzt auch bei Verwendung eines elektrodynamischen Schwingungserregers und/oder-sensors, ferner vorgesehen, daß die Signalfrequenz, $f_{drv,II}$, der Signalkomponente $s_{drv,II}$ zweiter Art des Treibersignals stets größer als 10Hz eingestellt ist bzw. daß nämliche Signalfrequenz, $f_{drv,II}$ größer als ein 0.1-faches der momentanen Eigenfrequenz des Schwingungsmodes erster Ordnung ist. In Ergänzung dazu ist gemäß einer weiteren Ausgestaltung der Erfindung ferner vorgesehen, nicht zuletzt auch zwecks einer sicheren Vermeidung bzw. Unterdrückung allfälliger Anregungen von Schwingungen in Resonanz, etwa infolge von Fehlern bei der in der Treiberschaltung tatsächlich implementierten Frequenz-Regelung, das Treibersignal mittels der Umformer-Elektronik so zu konditionieren, daß die Signalfrequenz $f_{drv,II}$ von dessen Signalkomponente zweiter Art $s_{drv,II}$ mehr als einem 1.01-fachen, möglichst aber auch mehr als einem 1.15-fachen, und weniger als einem 2.7-fachen, möglichst aber auch weniger als einem 2.4-fachen, einer momentanen Eigenfrequenz, $f_1$, des Schwingungsmodes erster Ordnung entspricht, mithin das wenigstens eine Meßrohr so aktiv anzuregen, daß es die erzwungenen Schwingungen außer Resonanz mit einer in einem entsprechenden Frequenzbereich, $| 1.01 \cdot f_1 < f_{drv,II} < 2.7 \cdot f_1 |$, oberhalb des 1.01-fachen bzw. oberhalb des 1.15-fachen, und unterhalb des 2.7-fachen bzw. unterhalb des 2.4-fachen, der momentanen Eigenfrequenz, $f_1$, des Schwingungsmodes erster Ordnung liegenden Schwingungsfrequenz ausführt, und die Signalfrequenz der zweiten Signalkomponente $s_{sens1,II}$ des Schwingungssignals $s_{sens1}$ gleichermaßen oberhalb des 1.01-fachen bzw. oberhalb des 1.15-fachen, und unterhalb des 2.7-fachen bzw. unterhalb des 2.4-fachen, der momentanen Eigenfrequenz, $f_1$, des Schwingungsmodes erster Ordnung liegt. Die Verwendung einer Signalfrequenz innerhalb des vorgenannten engen Frequenzbereich oberhalb des 1.15- und unterhalb des 2.4-fachen der momentanen Eigenfrequenz, $f_1$, hat sich insoweit als für die daraus abgeleitete Systemdiagnose erwiesen, als daselbst die oben erwähnten Abhängigkeiten, oder auch Querempfindlichkeiten, der Amplitude der Meßrohrschwingungen bzw. der Schwingungsmeßsignale von der Mediums- bzw. Meßrohrtemperatur wie auch der Dichte, p, des Mediums sehr gering ausfällt und insoweit eine Varianz der Amplitude trotz vergleichsweise nennenswert schwankender Dichte und/oder Temperatur durchaus vernachlässigbar klein sein kann. Alternativ oder in Ergänzung dazu ist gemäß einer anderen Ausgestaltung der Erfindung die Signalfrequenz $f_{drv,II}$ der Signalkomponente zweiter Art $s_{drv,II}$ des Treibersignals mittels der Umformer-Elektronik so eingestellt, daß nämliche Signalfrequenz $f_{drv,II}$ kleiner als eine momentane Eigenfrequenz, $f_2$, eines Schwingungsmodes zweiter Ordnung des wenigstens einen Meßrohrs ist, in dem das wenigstens eine vibrierende Meßrohr Schwingungen um eine Ruhelage ausführen kann bzw. ausführt, die im Bereich des ersten und zweiten Meßrohrendes jeweils einen Schwingungsknoten und im Bereich der Nutz-Schwinglänge einen weiteren Schwingungsknoten sowie genau zwei Schwingungsbäuche aufweisen, so daß also im Ergebnis das wenigstens eine Meßrohr die erzwungenen Schwingungen außer Resonanz, in einem Frequenzbereich, $| f_{drv,II} < f_2 |$, der unterhalb der momentane Eigenfrequenz des -dem erwähnten Coriolismode entsprechenden - Schwingungsmodes zweiter Ordnung liegt, ausführt, und das wenigstens eine Schwingungssignal zumindest zeitweise eine Signalkomponente zweiter Art mit einer Signalfrequenz aufweist, die unterhalb der momentane Eigenfrequenz des Schwingungsmodes zweiter Ordnung liegt.

Das Einstellen der tatsächlich gewünschten Signalfrequenz der Signalkomponente zweiter Art des Treibersignals kann beispielsweise nach einem, etwa seitens des Herstellers, fest vorgegeben Frequenz-Verhältnis oder aber mehrstufig, als durch das gezielte Anfahren verschiedener Signalfrequenzen, erfolgen, etwa derart, daß die Umformer-Elektronik die Signalfrequenz der Signalkomponente zweiter Art des Treibersignals, beginnend bei einem dafür vorgegebenen Startwert innerhalb des vorgenannten Frequenzbereichs, $| 1.01 \cdot f_1 < f_{drv,II} < 2.7 \cdot f_1 |$, bis zum Erreichen eines für die Signalfrequenz vorgegebenen Endwerts innerhalb nämlichen Frequenzbereichs schrittweise um einen vorgebbaren Betrag erhöht oder schrittweise um einen vorgebbaren Betrag verringert bzw. daß die Umformer-Elektronik die Signalfrequenz der Signalkomponente zweiter Art des Treibersignals beginnend bei einem dafür vorgegebenen Startwert innerhalb des vorgenannten Frequenzbereichs $| 1.01 \cdot f_1 < f_{drv,II} < 2.7 \cdot f_1 |$, bis zum Erreichen eines für die Signalfrequenz vorgegebenen Endwerts innerhalb nämlichen Frequenzbereichs linear erhöht oder linear verringert, oder daß die Umformer-Elektronik nämliche Signalfrequenz abwechselnd linear erhöht bzw. linear verringert.

Gemäß einer weiteren Ausgestaltung der Erfindung ist die Umformer-Elektronik ME ferner dafür vorgesehen und eingerichtet, im Betrieb mittels der Signalkomponente $s_{drv,II}$ zweiter Art des Treibersignals $s_{drv}$ und mittels der Signalkomponente $s_{sens1,II}$ zweiter Art des wenigstens einen Schwingungssignals $s_{sens1}$ - beispilesweise auch wieder-

kehrend - zu überprüfen bzw. detektieren, ob und/oder inwieweit das Meßsystem im Vergleich zu dem erwähnten vorab, etwa bei einer Kalibrierung und/oder bei einer Inbetriebnahme des Meßsystems, ermittelten Referenzzustand abweicht. Als eine Maß für eine derartige Abweichung kann in vorteilhafter Weise ein basierend auf der Signalkomponente $s_{drv,II}$ zweiter Art des Treibersignals $s_{drv}$ und der Signalkomponente $s_{sens1,II}$ zweiter Art des wenigstens einen Schwingungs-signals $s_{sens1}$ ermittelter Systemparameter-Meßwert, $G_{ME,ti}$, dienen, anhand dem, eine aktuelle, nämlich zum Zeitpunkt $t_i$ wirkende, Meßwandler-Übertragungsfunktion ermittelbar ist, gemäß der der Meßwandler das Treibersignal $s_{drv}$, mithin dessen Signalkomponente $s_{drv,II}$ zweiter Art, beispielsweise also einen im wenigstens einen Schwingungserreger fließenden, als Signalkomponente $s_{drv,II}$ zweiter Art des Treibersignals $s_{drv}$ dienenden Strom $i_{drv,II} \rightarrow s_{drv,II}$ oder eine diesen treibende, als Signalkomponente $s_{drv,II}$ zweiter Art des Treibersignals $s_{drv}$ dienende Spannung $u_{dr,II} \rightarrow s_{dr,II}$, in das wenigstens eine Schwingungssignal, mithin dessen Signalkomponente $s_{sens1,II}$ zweiter Art, beispielsweise also eine mittels des wenigstens einen Schwingungssensors generierten, als Signalkomponente $s_{sens1,II}$ zweiter Art des Schwin-gungssignals $s_{sens1}$ dienenden Spannung $u_{sens1,II}$, konvertiert. Alternativ oder in Ergänzung die vorgenannte Abweichung auch anhand eines Satzes von Meßwerten für das Meßsystem gleichermaßen charakterisierenden anderen Systemparametern, $g_{ME}$, ermittelt werden, anhand denen nämliche Meßwandler-Übertragungsfunktion im Betrieb entsprechend rekonstruiert werden kann. Ein die Meßwandler-Übertragungsfunktion entsprechend repräsentierender Systemparameter, $g_{ME}$, kann beispielsweise ein - naturgemäß einen Real- und einen Imaginärteil aufweisendes komplexes - Verhältnis, $u_{sens1,II}/i_{drv,II}$, der mittels des wenigstens einen Schwingungssensors generierten, als Signalkomponente zweiter Art des Schwingungssignals $s_{sens1}$ dienenden Spannung $u_{sens1,II} \rightarrow s_{sens1,II}$ zu dem im wenigstens einen Schwingungserreger fließenden, als Signalkomponente $s_{drv,II}$ zweiter Art des Treibersignals $s_{drv}$ dienenden Strom $i_{drv,II} \rightarrow s_{drv,II}$, oder beispielsweise auch ein - ebenfalls einen Real- und einen Imaginärteil aufweisendes komplexes - Verhältnis, $u_{sens1,II}/u_{drv,II}$, nämlicher Spannung $u_{sens1,II} \rightarrow s_{sens1,II}$ zu der den im wenigstens einen Schwingungserreger fließenden Strom treibenden, als Signalkomponente zweiter Art des Treibersignals $s_{drv}$ dienenden Spannung $u_{drv,II} \rightarrow s_{drv,II}$ sein.

Demnach können als solche, letztlich vorgenannte Meßwandler-Übertragungsfunktion repräsentierende, mithin den momentanen Zustand des Meßsystems einem Vergleich mit dessen Referenzzustand zugänglich machende, Systemparameter-Meßwert, $G_{ME,ti} \rightarrow g_{ME,ti}$, eine Vielzahl von im Betrieb, nämlich zum Zeitpunkt $t_i$, ohne weiteres Meßsystem intern ermittelbaren Meßgrößen bzw. daraus abgeleitete Funktionswerte dienen, nämlich beispielsweise:

a) eine Phasendifferenz, $\Delta\varphi_{II} = G_{ME,ti}$, zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einem im wenigstens einen Schwingungserreger fließenden, als Signalkomponente zweiter Art des Treibersignals $s_{drv}$ dienenden Strom $i_{drv,II} \rightarrow s_{drv,II}$; und/oder

b) eine Phasendifferenz, $\Delta\varphi_{II}\big|_{t_i} = G_{ME,ti}$, zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$; und/oder

c) ein Verhältnis, $\dfrac{U_{sens1,II}}{I_{drv,II}}\bigg|_{t_i} = G_{ME,ti}$, einer Amplitude (Spannungshöhe) $U_{sens1,II}$ einer mittels des wenigstens einen Schwingungssensors generierten, als Signalkomponente zweiter Art des Schwingungssignals $s_{sens1}$ dienen-den, Spannung $u_{sens1,II} \rightarrow s_{sens1,II}$ zu einer Amplitude (Stromstärke) $I_{drv,II}$ einer im wenigstens einen Schwingungserreger fließenden, als Signalkomponente $s_{drv,II}$ zweiter Art des Treibersignals $s_{drv}$ dienenden, Stroms $i_{drv,II} \rightarrow s_{drv,II}$; und/oder

d) ein Verhältnis, $\dfrac{U_{sens1,II}}{U_{drv,II}}\bigg|_{t_i} = G_{ME,ti}$, einer Amplitude (Spannunghöhe) $U_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Spannunghöhe) $U_{drv,II}$ einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$, bzw. nämliches Verhältnis, multipliziert mit einem eine für die Signalkomponente zweiter Art des Treibersignals wirksame elektrische Impedanz, $Z_{drv,II}$, des wenigstens einen Schwingungserregers reprä-sentieren Parameter-Meßwert, $\dfrac{U_{sens1,II}}{U_{drv,II}} \cdot Z_{drv,II}\bigg|_{t_i} = G_{ME,ti}$; und/oder

e) ein Funktionswert der Funktionsgleichung:

$$\left. \frac{\left(1-\dfrac{f_{drv,II}^{\,2}}{f_{drv,I}^{\,2}}\right)}{f_{drv,II}}\cdot\frac{U_{sens1,II}}{I_{drv,II}}\right|_{t_i} = \left.\frac{\left(1-\Omega^2\right)}{f_{drv,I}\cdot\Omega}\cdot\frac{U_{sens1,II}}{I_{drv,II}}\right|_{t_i} = G_{ME,ti}\,;$$

und/oder

f) ein Funktionswert der Funktionsgleichung:

$$\left. \frac{\left(1-\dfrac{f_{drv,II}^{\,2}}{f_{drv,I}^{\,2}}\right)}{f_{drv,II}}\cdot\frac{U_{sens1,II}}{U_{drv,II}}\cdot Z_{drv,II}\right|_{t_i} = \left.\frac{\left(1-\Omega^2\right)}{f_{drv,I}\cdot\Omega}\cdot\frac{U_{sens1,II}}{U_{drv,II}}\cdot Z_{drv,II}\right|_{t_i} = G_{ME,ti}\,;$$

und/oder

g) ein Funktionswert der Funktionsgleichung:

$$\left. \frac{\left(1-\dfrac{f_{drv,II}^{\,2}}{f_{drv,I}^{\,2}}\right)}{f_{drv,II}}\cdot\frac{U_{sens1,II}}{I_{drv,II}}\right|_{t_i} = \left.\frac{\left(1-\Omega^2\right)}{f_{drv,I}\cdot\Omega}\cdot\frac{U_{sens1,II}}{I_{drv,II}}\right|_{t_i} = G_{ME,ti}\,;$$

und/oder h) ein Funktionswert der Funktionsgleichung:

$$\left. \frac{\left(1-\dfrac{f_{drv,II}^{\,2}}{f_{drv,I}^{\,2}}\right)}{f_{drv,II}}\cdot\frac{U_{sens1,II}}{U_{drv,II}}\cdot Z_{drv,II}\right|_{t_i} = \left.\frac{\left(1-\Omega^2\right)}{f_{drv,I}\cdot\Omega}\cdot\frac{U_{sens1,II}}{U_{drv,II}}\cdot Z_{drv,II}\right|_{t_i} = G_{ME,ti}$$

dienen.

Um anhand solcher, den aktuellen Zustand des Meßsystems zum Zeitpunkt $t_i$ wiedergebenden Systemparameter-Meßwerten eine Diagnose des Meßsystem durchführen bzw. eine momentane Abweichung des Meßsystems von dessen Referenzzustand feststellen zu können, ist es erforderlich, für die jeweils zu verwendenden Systemparameter-Meßwerte entsprechende Systemparameter-Referenzwerte, die beispielsweise im Zuge einer Kalibrierung des Meßsystems im Herstellerwerk und/oder im Zuge der Inbetriebnahme des bereits in der Rohrleitung installierten Meßsystems passend ermittelt sind, in der Umformer-Elektronik entsprechend vorzuhalten. Dafür umfaßt die Umformer-Elektronik gemäß einer weiteren Ausgestaltung der Erfindung einen Datenspeicher für solche Meßwerte, die als einen Referenzzustand des Meßsystems, also das Meßsystem zum Zeitpunkt $t_{ref}$, repräsentierende Referenzwerte dienen. Als Datenspeicher für nämliche Referenzwerte kann beispielsweise der bereits erwähnte nicht-flüchtige Datenspeicher EEPROM dienen. In dem Datenspeicher ist eine den Referenzzustand des Meßsystems repräsentierender Referenzdatensatz vorgehalten Systemparameter-Referenzwerte für verschiedene Systemparameter umfaßt. Die Systemparameter-Referenzwerte können beispielsweise mittels des im Referenzzustand befindlichen Meßsystems selbst bzw. mittels des Medium von bekannter Temperatur führenden Meßwandlers erzeugte Meßwerte sein. Unter Berücksichtigung der oben genannten Systemparameter-Meßwerten kann der Referenzdatensatz beispielsweise mittels folgender Meß- bzw. daraus abgeleiteten Funktionswerten gebildet sein:

a) eine Phasendifferenz, $\Delta_{\varphi II} = G_{ME,t_{Ref}}$, zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einem im wenigstens einen Schwingungserreger fließenden, als Signalkomponente zweiter Art des Treibersignals $s_{drv}$ dienenden Strom $i_{drv,II} \rightarrow s_{drv,II}$;

b) eine Phasendifferenz, $\Delta\varphi_{II}\big|_{t_{Ref}} = G_{ME,t_{Ref}}$ , zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einer den im wenigstens einen Schwingungserreger fließenden Strom treibenden, als Signalkomponente zweiter Art des Treibersignals $s_{drv}$ dienenden, Spannung $U_{drv,II} \rightarrow s_{drv,II}$;

c) ein Verhältnis, $\dfrac{U_{sens1,II}}{I_{drv,II}}\bigg|_{t_{Ref}} = G_{ME,t_{Ref}}$ , einer Amplitude (Spannungshöhe) $u_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Stromstärke) $I_{drv,II}$ einer im wenigstens einen Schwingungserreger fließenden, als Signalkomponente $s_{drv,II}$ zweiter Art des Treibersignals $s_{drv}$ dienenden, Stroms $i_{drv,II} \rightarrow s_{drv,II}$;

d) ein Verhältnis, $\dfrac{U_{sens1,II}}{U_{drv,II}}\bigg|_{t_{Ref}} = G_{ME,t_{Ref}}$ , einer Amplitude (Spannunghöhe) $u_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Spannunghöhe) $U_{drv,II}$ einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$, bzw. nämliches Verhältnis, multipliziert mit einem eine für die Signalkomponente zweiter Art des Treibersignals wirksame elektrische Impedanz, $Z_{drv,II}$, des wenigstens einen Schwingungserregers repräsentieren Parameter-Meßwert,

$$\frac{U_{sens1,II}}{U_{drv,II}} \cdot Z_{drv,II}\bigg|_{t_{Ref}} = G_{ME,t_{Ref}} ;$$

e) ein Funktionswert der Funktionsgleichung:

$$\frac{\left(1 - \dfrac{f_{drv,II}^2}{f_{drv,I}^2}\right)}{f_{drv,II}} \cdot \frac{U_{sens1,II}}{I_{drv,II}}\Bigg|_{t_{Ref}} = \frac{\left(1 - \Omega^2\right)}{f_{drv,I} \cdot \Omega} \cdot \frac{U_{sens1,II}}{I_{drv,II}}\Bigg|_{t_{Ref}} = G_{ME,t_{Ref}} ;$$

f) ein Funktionswert der Funktionsgleichung:

$$\frac{\left(1 - \dfrac{f_{drv,II}^2}{f_{drv,I}^2}\right)}{f_{drv,II}} \cdot \frac{U_{sens1,II}}{U_{drv,II}} \cdot Z_{drv,II}\Bigg|_{t_{Ref}} = \frac{\left(1 - \Omega^2\right)}{f_{drv,I} \cdot \Omega} \cdot \frac{U_{sens1,II}}{U_{drv,II}} \cdot Z_{drv,II}\Bigg|_{t_{Ref}} = G_{ME,t_{Ref}} ;$$

g) ein Funktionswert der Funktionsgleichung:

$$\left.\frac{\left(1-\dfrac{f_{drv,II}^2}{f_{drv,I}^2}\right)}{f_{drv,II}} \cdot \frac{U_{sens1,II}}{I_{drv,II}}\right|_{t_{Ref}} = \left.\frac{\left(1-\Omega^2\right)}{f_{drv,I}\cdot\Omega} \cdot \frac{U_{sens1,II}}{I_{drv,II}}\right|_{t_{Ref}} = G_{ME,t_{Ref}}\ ;$$

bzw.

h) ein Funktionswert der Funktionsgleichung:

$$\left.\frac{\left(1-\dfrac{f_{drv,II}^2}{f_{drv,I}^2}\right)}{f_{drv,II}} \cdot \frac{U_{sens1,II}}{U_{drv,II}}\cdot Z_{drv,II}\right|_{t_{Ref}} = \left.\frac{\left(1-\Omega^2\right)}{f_{drv,I}\cdot\Omega} \cdot \frac{U_{sens1,II}}{U_{drv,II}}\cdot Z_{drv,II}\right|_{t_{Ref}} = G_{ME,Ref}\ .$$

Nach einer weiteren Ausgestaltung der Erfindung ist die Umformer-Elektronik ferner so eingerichtet, daß damit die Signalfrequenz der Signalkomponente zweiter Art des Treibersignals in Abhängigkeit von der Signalkomponente erster Art des Treibersignals und/oder in Abhängigkeit von der Signalkomponente erster Art des Schwingungssignals einstellt, mithin das wenigstens eine Meßrohr im Ergebnis die Schwingungen außer Resonanz mit einer gleichermaßen von der momentanen Eigenfrequenz, $f_1$, des Schwingungsmodes erster Ordnung abhängigen Schwingfrequenz ausführt. Als sehr vorteilhaft, nicht zuletzt auch zwecks einer Vereinfachung der Diagnose bzw. der dafür mit dem Referenzdatensatz letztlich tatsächlich vorzuhaltenden Systemparameter-Referenzwerte, hat sich dabei erwiesen, wenn die Umformer-Elektronik die Signalfrequenz der Signalkomponente zweiter Art des Treibersignals, wie bereits angedeutet, in einem vorgegebenen, etwa im nicht-flüchtigen Datenspeicher vorgehaltenen, Frequenz-Verhältnis, $\dfrac{f_{drv,II}}{f_1} = \dfrac{f_{drv,II}}{f_{drv,I}} = \Omega$, zur momentanen Eigenfrequenz, $f_1$, des Schwingungsmodes erster Ordnung bzw. zur momentanen Signalfrequenz der Signalkomponente erster Art des Treibersignals einstellt. Für diesen Fall könnten nämlich das in einigen der für die Ermittlung der Systemparameter-Meß- bzw. -referenzwerte angewendeten Funktionsgleichungen (vgl. jeweils Pkt. e, f, g, bzw. h)ausgewiesenen Frequenzverhältnis, $\dfrac{\left(1-\Omega^2\right)}{\Omega}$ durch denn Faktor eins ersetzt, und müßte also nicht mehr extra berechnet werden.

Basierend auf dem Referenzdatensatz und einem entsprechend korrespondierenden, mithin den momentanen Betriebszustand des Meßsystems zum Zeitpunkt $t_i$ repräsentierenden Meßdatensatz, nämlich basierend auf einer zwischen Referenz- und nämlichem Meßdatensatz - etwa durch Vergleich - ermittelten Abweichung, $\Delta G_{ME}$, kann mittels der Umformer-Elektronik nunmehr detektiert werden, ob und/oder inwieweit das Meßsystem im Vergleich zu dem dafür vorab ermittelten Referenzzustand verändert ist, und ggf. eine entsprechende Systemstatusmeldung generiert werden. Der selbstverständlich mittels im Betrieb des Meßsystems erzeugten Meßwerte, nämlich den Systemparameter-Meßwerten vorab gebildete Meßdatensatz kann dafür beispielsweise zunächst auch in einem Datenspeicher der Umformer-Elektronik für mittels des Meßsystems erzeugte Meßwerte- etwa dem erwähnten flüchtigen Datenspeicher RAM - abgespeichert sein. Beispielsweise kann die Umformer-Elektronik den Referenzdatensatz mit dem Meßdatensatz vergleichen, indem von wenigstens einem der den Meßdatensatz bildenden Systemparameter-Meßwerte eine - absolute oder relative - Abweichung, $\Delta G_{ME}$, von einem entsprechenden, nämlich den selben Systemparameter repräsentierenden, Systemparameter-Referenzwert bestimmt, etwa daß die Umformer-Elektronik eine Differenz, $(G_{ME,ti} - G_{ME,Ref}) \rightarrow \Delta G_{ME}$, zwischen nämlichem Systemparameter-Meßwert und dem entsprechenden Systemparameter-Referenzwert ermittelt, also eine absolute Abweichung, und/oder daß die Umformer-Elektronik ein Verhältnis, $\dfrac{G_{ME,ti}}{G_{ME,Ref}} - 1 \rightarrow \Delta G_{ME}$ von nämlichem Systemparameter-Meßwert und zum entsprechenden Systemparameter-Referenzwert, also eine relative Abweichung, ermittelt. Unter Berücksichtigung der oben genannten System-Parametermeßwerte und den jeweils entsprechenden System-Parameterreferenzwerten kann die Abweichung, $\Delta G_{ME}$, beispielsweise nach folgenden Funktionsgleichungen ohne weiteres ermittelt werden:

$$\left.\frac{\left(1-\frac{f_{drv,II}^2}{f_{drv,I}^2}\right)}{f_{drv,II}}\cdot Z_{drv,II}\right|_{t_i} - \left.\frac{\left(1-\frac{f_{drv,II}^2}{f_{drv,I}^2}\right)}{f_{drv,II}}\cdot\frac{U_{sens1,II}}{U_{drv,II}}\cdot Z_{drv,II}\right|_{t_{Ref}} = \Delta G_{ME};$$

und/oder

$$\frac{\left.\frac{\left(1-\frac{f_{drv,II}^2}{f_{drv,I}^2}\right)}{f_{drv,II}}\cdot\frac{U_{sens1,II}}{U_{drv,II}}\cdot Z_{drv,II}\right|_{t_i}}{\left.\frac{\left(1-\frac{f_{drv,II}^2}{f_{drv,I}^2}\right)}{f_{drv,II}}\cdot\frac{U_{sens1,II}}{U_{drv,II}}\cdot Z_{drv,II}\right|_{t_{Ref}}} - 1 = \Delta G_{ME};$$

und/oder

$$\left.\frac{\left(1-\frac{f_{drv,II}^2}{f_{drv,I}^2}\right)}{f_{drv,II}}\cdot\frac{U_{sens1,II}}{I_{drv,II}}\right|_{t_i} - \left.\frac{\left(1-\frac{f_{drv,II}^2}{f_{drv,I}^2}\right)}{f_{drv,II}}\cdot\frac{U_{sens1,II}}{I_{drv,II}}\right|_{t_{Ref}} = \Delta G_{ME};$$

und/oder

$$\frac{\left.\frac{\left(1-\frac{f_{drv,II}^2}{f_{drv,I}^2}\right)}{f_{drv,II}}\cdot\frac{U_{sens1,II}}{I_{drv,II}}\right|_{t_i}}{\left.\frac{\left(1-\frac{f_{drv,II}^2}{f_{drv,I}^2}\right)}{f_{drv,II}}\cdot\frac{U_{sens1,II}}{I_{drv,II}}\right|_{t_{Ref}}} - 1 = \Delta G_{ME}.$$

Zwecks Generierung einer passenden, nämlich eine unzulässig oder unerwünschte hohe Abweichung von momentanen Betriebs- und entsprechendem Referenzzustand signalisierenden Systemstatusmeldung kann in der Umformer-Elektronik, etwa im nicht-flüchtigen Datenspeicher EEPROM, eine ein entsprechender, etwa vom Hersteller vorgegebener, Schwellenwert vorgehalten sein, der ein für Abweichung, $\Delta G_{ME}$, jeweils zulässiges Toleranzmaß repräsentiert. Die Umformer-Elektronik kann dann beispielsweise so eingerichtet sein, daß sie löst die Systemstatusmeldung auslöst, sofern die ermittelte Abweichung, $\Delta G_{ME}$, das dafür jeweils inform nämlichen Schwellenwert vorgegebene Toleranzmaß, beispielsweise 0.1% des jeweiligen Systemparameter-Referenzwert, überschreitet.

Die vorgenannten, nicht zuletzt auch für die Ermittlung der Abweichung des Meßsystems von seinem - etwa im Herstellerwerk bzw. erst vor Ort ermittelten - Referenzzustand benötigten Systemparameter-Meß- und -Referenzwerte jeweils benötigten Rechenfunktionen können z.B. mittels des oben erwähnten Mikrocomputers der Auswerte-Schaltung $\mu$C oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Umformer-Elektronik entsprechend ausführbare Programm-Codes ist dem Fachmann im übrigen geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik realisierte Funktionalitäten des Meßsystems auch ohne weiteres ganz oder teilweise mittels entsprechender diskret aufgebauter und/oder hybriden, also gemischt analogdigitalen, Rechenschaltungen in der Umformer-Elektronik ME realisiert werden.

**Patentansprüche**

1. Meßsystem für, insb. in Rohrleitungen, strömende Medien, welches Meßsystem einen im Betrieb von einem Medium durchströmten Meßwandler (MW) vom Vibrationstyp zum Erzeugen von mit Mediumsparametern des strömenden Mediums korrespondierenden Schwingungssignalen sowie eine mit dem Meßwandler elektrisch gekoppelte Umformer-Elektronik (ME) zum Ansteuern des Meßwandlers und zum Auswerten von vom Meßwandler gelieferten Schwingungssignalen umfaßt,

   - wobei der Meßwandler (MW)

     -- wenigstens ein sich zwischen einem einlaßseitigen ersten Meßrohrende und einem auslaßseitigen zweiten Meßrohrende mit einer Nutz-Schwinglänge erstreckendes Meßrohr (10; 10'), dem eine Vielzahl von natürlichen Schwingungsmoden innewohnen, zum Führen von strömendem Medium,
     -- wenigstens einen Schwingungserreger (41) zum Konvertieren von elektrischer Erregerleistung in Vibrationen des wenigstens einen Meßrohrs, und
     -- wenigstens einen Schwingungssensor (51; 52) zum Erfassen von Vibrationen des wenigstens einen Meßrohrs und zum Erzeugen eines Vibrationen zumindest des wenigstens einen Meßrohrs repräsentierenden Schwingungssignals ($s_{sens1}$) des Meßwandlers aufweist; und

   - wobei die Umformer-Elektronik (ME) ausgestaltet ist, ein dem Einspeisen von elektrischer Erregerleistung in den wenigstens einen Schwingungserreger (41), mithin dem Bewirken von Vibrationen des wenigstens einen Meßrohrs dienendes Treibersignal ($s_{drv}$) für den wenigstens einen Schwingungserreger (41) zu liefern, derart,

     -- daß das Treibersignal ($s_{drv}$) zumindest zeitweise eine sinusförmige Signalkomponente ($s_{drv,I}$) erster Art mit einer Signalfrequenz, $f_{drv,I}$, aufweist, die einer momentanen Eigenfrequenz, $f_1$, eines natürlichen Schwingungsmodes erster Ordnung des wenigstens einen Meßrohrs entspricht, in dem das wenigstens eine Meßrohr Eigenschwingungen um eine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen, wodurch
     --- das wenigstens eine Meßrohr, angeregt vom wenigstens einen Schwingungserreger (41), zumindest anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, ausführt, und
     --- das wenigstens eine Schwingungssignal ($s_{sens1}$) zumindest zeitweise eine sinusförmige Signalkomponente ($s_{sens1,I}$) erster Art mit einer Signalfrequenz, $f_{sens,I}$, aufweist, die der Signalfrequenz, $f_{drv,I}$, der Signalkomponente ($s_{drv,I}$) erster Art des Treibersignals ($s_{drv}$), mithin der momentanen Eigenfrequenz, $f_1$, des Schwingungsmodes erster Ordnung entspricht,
     -- und, daß das Treibersignal ($s_{drv}$) zumindest zeitweise eine sinusförmige Signalkomponente ($s_{drv,II}$) zweiter Art mit einer Signalfrequenz, $f_{drv,II}$, aufweist, die von jeder momentanen Eigenfrequenz jedes natürlichen Schwingungsmodes des wenigstens einen Meßrohrs jeweils um mehr als 1 Hz, insb. mehr als 10 Hz, und/oder um mehr als 1 %, insb. mehr als 10 %, nämlicher Eigenfrequenz, abweicht, wodurch
     --- das wenigstens eine Meßrohr, angeregt vom wenigstens einen Schwingungserreger (41), zumindest anteilig erzwungene Schwingungen außer Resonanz ausführt, und

--- das wenigstens eine Schwingungssignal ($s_{sens1}$) zumindest zeitweise eine sinusförmige Signalkomponente ($s_{sens1,II}$) zweiter Art mit einer Signalfrequenz, $f_{sens,II}$, aufweist, die der Signalfrequenz, $f_{drv,II}$, der Signalkomponente ($s_{drv,II}$) zweiter Art des Treibersignals ($s_{drv}$), mithin keiner momentanen Eigenfrequenz irgendeines natürlichen Schwingungsmodes des wenigstens einen Meßrohrs entspricht,

- und wobei die Umformer-Elektronik ausgestaltet ist, die Signalfrequenz, $f_{drv,II}$, der Signalkomponente zweiter Art des Treibersignals in Abhängigkeit von der Signalkomponente, $f_{drv,I}$, erster Art des Treibersignals und/oder in Abhängigkeit von der Signalkomponente erster Art des Schwingungssignals, nämlich in einem vorgegebenen Frequenz-Verhältnis, $\dfrac{f_{drv,II}}{f_1} = \dfrac{f_{drv,II}}{f_{drv,I}} = \Omega$ , zur momentanen Eigenfrequenz, $f_1$, des Schwingungsmodes erster Ordnung bzw. zur momentanen Signalfrequenz der Signalkomponente erster Art des Treibersignals einzustellen.

**2.** Meßsystem nach einem der vorherigen Ansprüche,

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung ($Sys_{fail}$) zu generieren, die eine ein vorgegebenes Toleranzmaß überschreitende Abnutzung des Meßrohrs, insb. visuell und/oder akustisch wahrnehmbar, signalisiert; und/oder

- wobei die Umformer-Elektronik (ME) ausgestaltet ist, mittels der Signalkomponente ($s_{sens1,II}$) zweiter Art des wenigstens einen Schwingungssignals ($s_{sens1}$) eine, insb. als ein Alarm deklarierte, Systemstatusmeldung zu generieren, die, insb. visuell und/oder akustisch wahrnehmbar, signalisiert, daß eine strukturelle Integrität des wenigstens einen Meßrohrs nicht mehr gewährleistet ist, insb. infolge von Materialabtragung und/oder infolge von Überlastung und/oder infolge von Rißbildung und/oder infolge von Materialermüdung; und/oder

- wobei die Umformer-Elektronik (ME) ausgestaltet ist, mittels der Signalkomponente ($s_{sens1,II}$) zweiter Art des wenigstens einen Schwingungssignals ($s_{sens1}$) eine, insb. als ein Alarm deklarierte, Systemstatusmeldung zu generieren, die, insb. visuell und/oder akustisch wahrnehmbar, signalisiert, daß auf einer das zu messende Medium im Betrieb kontaktierenden Innenseite des Meßrohrs ein daran haftender Belag gebildet ist; und/oder

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung zu generieren, die eine ein vorgegebenes Toleranzmaß überschreitende Abtragung von Material des Meßrohrs, insb. visuell und/oder akustisch wahrnehmbar, signalisiert; und/oder

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung zu generieren, die Rißbildung im wenigstens einen Meßrohr, insb. visuell und/oder akustisch wahrnehmbar, signalisiert; und/oder

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung zu generieren, die eine ein vorgegebenes Toleranzmaß überschreitende Veränderung der Schwingungseigenschaften des wenigstens einen Meßrohrs, insb. infolge Deformation und/oder infolge von Materialabtragung und/oder infolge von Rißbildung und/oder infolge von Materialermüdung, signalisiert; und/oder

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung zu generieren, die eine ein vorgegebenes Toleranzmaß überschreitende Veränderung einer elektrischen Impedanz des Meßwandlers, insb. visuell und/oder akustisch wahrnehmbar, signalisiert; und/oder

- wobei die Umformer-Elektronik (ME) ausgestaltet ist, mittels der Signalkomponente ($s_{sens1,II}$) zweiter Art des wenigstens Schwingungssignals ($s_{sens1}$) eine, insb. als ein Alarm deklarierte, Systemstatusmeldung zu generieren, die eine ein vorgegebenes Toleranzmaß überschreitende Veränderung einer elektrischen Impedanz und/oder eine elektro-mechanische Wandlerkonstante des wenigstens einen Schwingungserregers und/oder einer elektrischen Impedanz und/oder eine elektro-mechanische Wandlerkonstante des wenigstens einen Schwingungssensors, insb. visuell und/oder akustisch wahrnehmbar, signalisiert; und/oder

- wobei die Umformer-Elektronik (ME) ausgestaltet ist, mittels der Signalkomponente ($s_{drv,II}$) zweiter Art des Treibersignals ($s_{drv}$), insb. basierend auf einem im wenigstens einen Schwingungserreger fließenden, als Signalkomponente ($s_{drv,II}$) zweiter Art des Treibersignals ($s_{drv}$) dienenden Strom ($i_{drv,II} \rightarrow s_{drv,II}$) oder einer diesen treibende, als Signalkomponente ($s_{drv,II}$) zweiter Art des Treibersignals ($s_{drv}$) dienende Spannung ($u_{drv,II} \rightarrow$

$s_{drv,II}$), und mittels der Signalkomponente ($s_{sens1,II}$) zweiter Art des wenigstens einen Schwingungssignals ($s_{sens1}$), insb. basierend auf einer mittels des wenigstens einen Schwingungssensors generierten, als Signalkomponente ($s_{sens1,II}$) zweiter Art des Schwingungssignals ($s_{sens1}$) dienenden Spannung ($u_{sens1,II}$) und/oder basierend auf einer Phasendifferenz der Signalkomponente zweiter Art des Schwingungssignals relativ zur Signalkomponente zweiter Art des Treibersignals, zu detektieren , ob und/oder inwieweit das Meßsystem im Vergleich zu einem dafür vorab, insb. bei einer Kalibrierung und/oder bei einer Inbetriebnahme des Meßsystems, ermittelten Referenzzustand, insb. infolge Alterung und/oder infolge Belastung des Meßwandlers, verändert ist, insb. derart, daß ein im Betrieb des Meßsystems anhand der Signalkomponente ($s_{drv,II}$) zweiter Art des Treibersignals ($s_{drv}$) und/oder anhand der Signalkomponente ($s_{sens1,II}$) zweiter Art des wenigstens einen Schwingungssignals ($s_{sens1}$) ermittelter Systemparameter-Meßwert für wenigstens einen das Meßsystem charakterisierenden Systemparameter von einem im Referenzzustand des Meßsystems für nämlichen Systemparameter ermittelten Systemparameter-Referenzwert um mehr als ein vorgegebenes Toleranzmaß, insb. um mehr als 0.1% des nämlichen Referenzwerts, abweicht; und/oder

- wobei die Umformer-Elektronik (ME) ausgestaltet ist,mittels der Signalkomponente (ssens1,II) zweiter Art des wenigstens einen Schwingungssignals (ssens1) eine, insb. als ein Alarm deklarierte, Systemstatusmeldung (Sysfail) zu generieren t , die eine, insb. durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz des wenigstens einen Schwingungserregers verändernde thermische Belastungen des Meßwandlers bedingte und/oder durch eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von einem dafür vorab, insb. bei einer Kalibrierung und/oder bei einer Inbetriebnahme des Meßsystems, ermittelten Referenzzustand, insb. visuell und/oder akustisch wahrnehmbar, signalisiert.

3. Meßsystem nach einem der vorherigen Ansprüche, wobei das Frequenz-Verhältnis, $\dfrac{f_{drv,II}}{f_1} = \dfrac{f_{drv,II}}{f_{drv,I}} = \Omega$ , der Signalfrequenz, $f_{drv,II}$, der Signalkomponente zweiter Art des Treibersignals zur momentanen Eigenfrequenz, $f_1$, des Schwingungsmodes erster Ordnung bzw. zur momentanen Signalfrequenz der Signalkomponente erster Art des Treibersignals in einem nicht-flüchtigen Datenspeicher für als einen Referenzzustand des Meßsystems repräsentierende Referenzwerte dienende Meßwerte vorgehalten ist.

4. Meßsystem nach einem der vorherigen Ansprüche, wobei die Umformer-Elektronik ausgestaltet ist, mittels der Signalkomponente ($s_{sens1,II}$) zweiter Art des wenigstens einen Schwingungssignals ($s_{sens1}$) sowie mittels der Signalkomponente ($s_{drv,II}$) zweiter Art des Treibersignals ($s_{drv}$), insb. wiederkehrend, einen Systemparameter-Meßwert, $G_{ME,ti}$, für einen eine dem Meßwandler immanente Meßwandler-Übertragungsfunktion, mithin das Meßsystem charakterisierenden Systemparameter, $g_{ME}$, zu ermitteln , gemäß welcher Meßwandler-Übertragungsfunktion der Meßwandler das Treibersignal oder einzelne Signalkomponente ($s_{drv,II}$) davon, insb. einen im wenigstens einen Schwingungserreger fließenden, als Signalkomponente ($s_{drv,II}$) zweiter Art des Treibersignals ($s_{drv}$) dienenden Strom ($i_{drv,II} \rightarrow s_{drv,II}$) oder eine diesen treibende, als Signalkomponente ($s_{drv,II}$) zweiter Art des Treibersignals ($s_{drv}$) dienende Spannung ($u_{drv,II} \rightarrow s_{drv,II}$), in das wenigstens eine Schwingungssignal ($s_{sens1}$) oder einzelne Signalkomponenten davon, insb. eine mittels des wenigstens einen Schwingungssensors generierten, als Signalkomponente ($s_{sens1,II}$) zweiter Art des Schwingungssignals ($s_{sens1}$) dienenden Spannung ($u_{sens1,II}$), konvertiert.

5. Meßsystem nach Anspruch 4,

- wobei die Umformer-Elektronik (ME) ausgestaltet ist, mittels des nämlichen, die Meßwandler-Übertragungsfunktion charakterisierenden, Systemparameters, $g_{ME}$, zu detektieren , ob und/oder inwieweit das Meßsystem im Vergleich zu einem dafür vorab, insb. bei einer Kalibrierung und/oder bei einer Inbetriebnahme des Meßsystems, ermittelten Referenzzustand, insb. infolge Alterung und/oder infolge Belastung des Meßwandlers, verändert ist, insb. derart, daß die Umformer-Elektronik (ME) mittels des nämlichen, die Meßwandler-Übertragungsfunktion charakterisierenden, Systemparameters, $g_{ME}$, ggf. eine, insb. als ein Alarm deklarierte, Systemstatusmeldung generiert, die eine ein vorgegebenes Toleranzmaß überschreitende Abweichung des Meßsystems von einem dafür vorab ermittelten Referenzzustand, insb. visuell und/oder akustisch wahrnehmbar, signalisiert; und/oder

- wobei die Umformer-Elektronik (ME) ausgestaltet ist, mittels der Signalkomponente erster Art des wenigstens einen Schwingungssignals und/oder mittels der Signalkomponente erster Art des Treibersignals sowie unter Verwendung des Systemparameter-Meßwerts, $G_{ME,ti}$, einen einen zu messenden Parameter des strömenden Mediums, insb. eine Massendurchflußrate, eine Dichte und/oder eine Viskosität, repräsentierenden Mediumsparameter-Meßwert, $X_M$, zu ermitteln , insb. derart, daß die Umformer-Elektronik (ME) einen Einfluß einer unter Verwendung des Systemparameter-Meßwerts, $G_{ME,ti}$, ermittelten Abweichung des Meßsystems von einem dafür vorab ermittelten Referenzzustand auf eine Meßgenauigkeit des Meßsystems, mit Mediumsparameter-Meßwerte, $X_M$, ermittelt werden, kompensiert.

6. Meßsystem nach einem der vorherigen Ansprüche, wobei die Umformer-Elektronik einen, insb. flüchtigen, Datenspeicher für mittels des Meßsystems erzeugte Meßwerte aufweist, in welchem Datenspeicher wenigstens ein mittels im Betrieb des Meßsystems erzeugter Meßwerte gebildeter, einen Betriebszustand des Meßsystems, insb. vorübergehend, repräsentierender Meßdatensatz vorgehalten ist, der basierend auf der Signalkomponente zweiter Art des Treibersignals und/oder basierend auf der Signalkomponente zweiter Art des wenigstens einen Sensorsignals erzeugte Systemparameter-Meßwerte für verschiedene, das Meßsystem charakterisierende Systemparameter umfaßt.

7. Meßsystem nach einem der vorherigen Ansprüche, wobei die Umformer-Elektronik einen, insb. nicht-flüchtigen, Datenspeicher für als einen Referenzzustand des Meßsystems repräsentierende Referenzwerte dienende Meßwerte aufweist, in welchem Datenspeicher wenigstens ein einen Referenzzustand des, insb. bereits in einer Rohrleitung installierten, Meßsystems repräsentierender Referenzdatensatz vorgehalten ist, der, insb. im Zuge einer Kalibrierung des Meßsystems im Herstellerwerk und/oder während einer Inbetriebnahme des Meßsystems mittels desselben erzeugte, Systemparameter-Referenzwerte für verschiedene, nämlich das Meßsystem charakterisierende Systemparameter umfaßt, insb. derart, daß nämliche Systemparameter-Referenzwerte mittels des im Referenzzustand befindlichen Meßsystems selbst und/oder mittels des Medium von bekannter Temperatur führenden Meßwandlers erzeugte Meßwerte sind und/oder derart, daß der Referenz-Datensatz einen Systemparameter-Referenzwert für eine Signalkomponente zweiter Art des dem wenigstens einen Schwingungserreger bei im Referenzzustand befindlichem Meßsystem zugeführten Treibersignals und/oder einen Systemparameter-Referenzwert für eine Signalkomponente zweiter Art des wenigstens einen vom Meßwandler bei im Referenzzustand befindlichem Meßsystem gelieferten Schwingungssignals und/oder einen von einer Signalkomponente zweiter Art des bei im Referenzzustand befindlichem Meßsystem der Erregeranordnung zugeführten Treibersignals und von einer Signalkomponente zweiter Art des wenigstens einen vom Meßwandler bei im Referenzzustand befindlichem Meßsystem gelieferten Schwingungssignal abgeleiteten Systemparameter-Referenzwert umfaßt.

8. Meßsystem nach Anspruch 6 und 7, wobei die Umformer-Elektronik ausgestaltet ist, basierend auf dem Referenzdatensatz und dem Meßdatensatz, insb. anhand einer zwischen Referenzdatensatz und Meßdatensatz ermittelten Abweichung, $\Delta G_{ME}$, zu detektieren , ob und/oder inwieweit das Meßsystem im Vergleich zu dem dafür vorab ermittelten Referenzzustand verändert ist.

9. Meßsystem nach dem vorherigen Anspruch, wobei die Umformer-Elektronik ausgestaltet ist, anhand einer zwischen Referenzdatensatz und Meßdatensatz ermittelten Abweichung, $\Delta G_{ME}$, zu detektieren , ob und/oder inwieweit das Meßsystem im Vergleich zu dem dafür vorab ermittelten Referenzzustand verändert ist, insb. derart, daß die Umformer-Elektronik den Referenzdatensatz mit dem Meßdatensatz, insb. wiederkehrend, vergleicht.

10. Meßsystem nach einem der Ansprüche 6 bis 9,

- wobei der Meßdatensatz einen Systemparameter-Meßwert für die Signalkomponente zweiter Art des dem wenigstens einen Schwingungserreger im Betrieb des Meßsystems zugeführten Treibersignals und/oder einen Systemparameter-Meßwert für die Signalkomponente zweiter Art des wenigstens einen vom Meßwandler im Betrieb des Meßsystems gelieferten Schwingungssignals und/oder einen von der Signalkomponente zweiter Art des der im Betrieb des Meßsystems Erregeranordnung zugeführten Treibersignals und von der Signalkomponente zweiter Art des wenigstens einen im Betrieb des Meßsystems vom Meßwandler gelieferten Schwingungssignals abgeleiteten Systemparameter-Meßwert umfaßt; und/oder
- wobei im Datenspeicher für mittels des Meßsystems erzeugte Meßwerte ein mittels im Betrieb des Meßsystems erzeugter Meßwerte gebildeter, im Meßwandler geführtes Medium repräsentierender Meßdatensatz vorgehalten ist, der basierend auf der Signalkomponente erster Art des Treibersignals und/oder basierend auf der Signalkomponente erster Art des wenigstens einen Sensorsignals erzeugte Mediumsparameter-Meßwerte, $X_M$, für verschiedene, das strömende Medium charakterisierende Mediumsparameter, insb. eine Massendurchflußrate, eine Dichte und/oder eine Viskosität, umfaßt.

11. Meßsystem nach einem der Ansprüche 7 bis 10,

- wobei der Referenz-Datensatz einen die Eigenfrequenz, $f_1$, des Schwingungsmodes erster Ordung bei im Referenzzustand befindlichem Meßsystem repräsentierenden Systemparameter-Referenzwert sowie einen die Signalfrequenz ($f_{drv,II}$) der Signalkomponente zweiter Art des dem wenigstens einen Schwingungserreger bei im Referenzzustand befindlichem Meßsystem zugeführten Treibersignals repräsentierenden Systemparameter-Referenzwert umfaßt; und/oder

- wobei der Referenz-Datensatz einen ein Verhältnis, $\left.\dfrac{f_{drv,II}}{f_1}\right|_{t_{Ref}} = \left.\dfrac{f_{drv,II}}{f_{drv,I}}\right|_{t_{Ref}} = \dfrac{f_{drv,II}\big|_{t_{Ref}}}{f_{drv,I}\big|_{t_{Ref}}} = \Omega$, der Sig-

nalfrequenz ($f_{drv,II}$) der Signalkomponente zweiter Art des dem wenigstens einen Schwingungserreger bei im Referenzzustand befindlichem Meßsystem zugeführten Treibersignals zur Eigenfrequenz, $f_1$, des Schwingungsmodes erster Ordnung bei im Referenzzustand befindlichem Meßsystem repräsentierenden Systemparameter-Referenzwert umfaßt.

12. Meßsystem nach einem der Ansprüche 8 bis 11, wobei die Umformer-Elektronik (ME) ausgestaltet ist, basierend auf einem Vergleich von Referenz- und Meßdatensatz eine, insb. als ein Alarm deklarierte, Systemstatusmeldung zu generieren, die eine, insb. durch Alterung des Meßsystems bedingte und/oder durch ein Schwingungsverhalten des wenigstens einen Meßrohrs irreversible verändernde Belastungen des Meßwandlers bedingte Abweichung des Meßsystems von einem dafür vorab, insb. bei einer Kalibrierung und/oder bei einer Inbetriebnahme des Meßsystems, ermittelten Referenzzustand, insb. visuell und/oder akustisch wahrnehmbar, signalisiert.

13. Meßsystem nach einem der Ansprüche 9 bis 12, wobei die Umformer-Elektronik ausgestaltet ist, anhand der ermittelten Abweichung, $\Delta G_{ME}$, zwischen dem wenigstens einen Systemparameter-Meßwert und dem entsprechenden Systemparameter-Referenzwert eine, insb. als ein Alarm deklarierte, Systemstatusmeldung zu generieren, die eine, insb. durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz und/oder eine elektro-mechanische Wandlerkonstante des wenigstens einen Schwingungserregers verändernde thermische Belastungen des Meßwandlers bedingte und/oder durch eine elektrische Impedanz und/oder eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von dem dafür vorab ermittelten Referenzzustand, insb. visuell und/oder akustisch wahrnehmbar, signalisiert.

14. Meßsystem nach dem vorherigen Anspruch, wobei die Umformer-Elektronik nämliche Systemstatusmeldung zu generieren, sofern die ermittelte Abweichung, $\Delta G_{ME}$, einen ein dafür vorgegebenes Toleranzmaß repräsentierenden Schwellenwert überschreitet, insb. derart, daß die ermittelte Abweichung, $\Delta G_{ME}$, mehr als 0.1% des zughörigen Systemparameter-Referenzwerts beträgt.

15. Meßsystem nach einem der vorherigen Ansprüche,

- wobei das Treibersignal die Signalkomponente erster Art und die Signalkomponente zweiter Art gleichzeitig aufweist, wodurch das wenigstens eine Meßrohr, angeregt vom wenigstens einen Schwingungserreger (41), gleichzeitig sowohl anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, als auch anteilig erzwungene Schwingungen außer Resonanz ausführt; und/oder
- wobei die Signalfrequenz, $f_{drv,II}$, der Signalkomponente ($s_{drv,II}$) zweiter Art des Treibersignals ($s_{drv}$) größer als 5Hz, insb. größer als 10Hz, ist, und/oder wobei die Signalfrequenz, $f_{drv,II}$, der Signalkomponente ($s_{drv,II}$) zweiter Art des Treibersignals größer als ein 0.1-faches der momentanen Eigenfrequenz des Schwingungsmodes erster Ordnung ist; und/oder
- wobei die Signalfrequenz ($f_{drv,II}$) der Signalkomponente zweiter Art ($s_{drv,II}$) des Treibersignals ($s_{drv}$) mehr als einem 1.01-fachen, insb. mehr als einem 1.15-fachen, und weniger als einem 2.7-fachen, insb. weniger als einem 2.4-fachen, einer momentanen Eigenfrequenz, $f_1$, des Schwingungsmodes erster Ordnung entspricht, wodurch

-- das wenigstens eine Meßrohr ausgestaltet ist, angeregt vom wenigstens einen Schwingungserreger (41), zumindest anteilig erzwungene Schwingungen außer Resonanz mit einer in einem Frequenzbereich, $|1.01 \cdot f_1 < f_{drv,II} < 2.7 \cdot f_1|$, oberhalb des 1.01-fachen, insb. oberhalb des 1.15-fachen, und unterhalb des 2.7-fachen, insb. unterhalb des 2.4-fachen, der momentanen Eigenfrequenz, $f_1$, des Schwingungsmodes erster Ordnung liegenden Schwingungsfrequenz auszuführen, und

-- die Signalfrequenz der zweiten Signalkomponente ($s_{sens1,II}$) des Schwingungssignals ($s_{sens1}$) oberhalb des 1.01-fachen, insb. oberhalb des 1.15-fachen, und unterhalb des 2.7-fachen, insb. unterhalb des 2.4-fachen, der momentanen Eigenfrequenz, $f_1$, des Schwingungsmodes erster Ordnung liegt.

**16.** Meßsystem nach einem der vorherigen Ansprüche,

- wobei die Signalfrequenz ($f_{drv,II}$) der Signalkomponente zweiter Art ($s_{drv,II}$) des Treibersignals kleiner als eine momentane Eigenfrequenz, $f_2$, eines Schwingungsmodes zweiter Ordnung des wenigstens einen Meßrohrs ist, in dem das wenigstens eine vibrierende Meßrohr Schwingungen um eine Ruhelage ausführen kann bzw. ausführt bzw. ausführen kann, die im Bereich des ersten und zweiten Meßrohrendes jeweils einen Schwingungsknoten und im Bereich der Nutz-Schwinglänge einen weiteren Schwingungsknoten sowie genau zwei Schwingungsbäuche aufweisen, wodurch

-- das wenigstens eine Meßrohr, angeregt vom wenigstens einen Schwingungserreger (41) zumindest anteilig erzwungene Schwingungen außer Resonanz, nämlich in einem Frequenzbereich, $|f_{drv,II} < f_2|$, der unterhalb der momentane Eigenfrequenz des Schwingungsmodes zweiter Ordnung liegt, ausführt, und

-- das wenigstens eine Schwingungssignal zumindest zeitweise eine Signalkomponente zweiter Art mit einer Signalfrequenz aufweist, die unterhalb der momentane Eigenfrequenz des Schwingungsmodes zweiter Ordnung liegt, insb. derart, daß

--- das wenigstens eine Meßrohr, angeregt vom wenigstens einen Schwingungserreger (41) zumindest anteilig erzwungene Schwingungen außer Resonanz, nämlich in einem Frequenzbereich, $|f_1 < f_{drv,II} < f_2|$, der oberhalb der momentanen Eigenfrequenz, $f_1$, des Schwingungsmodes erster Ordnung und unterhalb der momentane Eigenfrequenz, $f_2$, des Schwingungsmodes zweiter Ordnung liegt, ausführt und

--- das wenigstens eine Schwingungssignal zumindest zeitweise eine Signalkomponente zweiter Art mit einer Signalfrequenz aufweist, die oberhalb der momentanen Eigenfrequenz des Schwingungsmodes erster Ordnung und unterhalb der momentane Eigenfrequenz des Schwingungsmodes zweiter Ordnung liegt; und/oder

- wobei die Signalfrequenz der Signalkomponente erster Art des Treibersignals ($s_{drv}$) einer momentanen Eigenfrequenz eines natürlichen Biegeschwingungsmodes entspricht, in dem das wenigstens eine vibrierende Meßrohr Biegeschwingungen um die Ruhelage ausführt, die im Bereich des ersten und zweiten Meßrohrendes jeweils einen Schwingungsknoten und im Bereich der Nutz-Schwinglänge genau einen Schwingungsbauch aufweisen (Biegeschwingungsgrundmode), wodurch

-- das wenigstens eine Meßrohr, angeregt vom wenigstens einen Schwingungserreger (41), zumindest anteilig, insb. überwiegend, Biegeschwingungen in Resonanz, nämlich mit einer der momentanen Eigenfrequenz des nämlichen Biegeschwingungsmodes entsprechenden Schwingungsfrequenz, ausführt, und

-- die Signalfrequenz der Signalkomponente erster Art des wenigstens einen Schwingungssignals der momentanen Eigenfrequenz des nämlichen Biegeschwingungsmodes entspricht.

## Claims

**1.** Measuring system for flowing media, particularly flowing in pipes, wherein said measuring system comprises a vibronic-type transducer (MW), through which a medium flows during operation, said transducer being designed to generate vibration signals corresponding to medium parameters of the flowing medium, as well as a transmitter electronics unit (ME) that is electrically coupled to the transducer, said unit being designed to control the transducer and evaluate vibration signals supplied by the transducer,

- wherein the transducer (MW) has

-- at least one measuring tube (10, 10') with a large number of natural vibration modes, said tube being designed to conduct the flowing medium and extending between a first end of the tube on the inlet side and a second end of the tube on the outlet side, said tube having a useful vibration length,

-- at least one vibration generator (41) designed to convert electrical excitation power to vibrations of the at least one measuring tube, and

-- at least one vibration sensor (51, 52) designed to measure the vibrations of the at least one measuring tube and designed to generate a vibration signal ($s_{sens1}$) of the transducer, said signal at least representing vibrations of the at least one measuring tube; and

- wherein the transmitter electronics unit (ME) is designed to deliver a driver signal ($s_{drv}$) for the at least one vibration generator (41), said driver signal serving to supply electrical excitation power to the at least one vibration generator (41), and consequently to cause vibrations of the at least one measuring tube, in such a way

-- that the driver signal ($s_{drv}$) has at least temporarily a sinusoidal signal component ($s_{drv,I}$) of the first type with a signal frequency, $f_{drv,I}$, which corresponds to a current natural frequency, $f_1$, of a natural vibration mode of the first order of the at least one measuring tube in which the at least one measuring tube can produce or does produce natural vibrations around a rest position, said natural vibrations each having a node in the area of the first and second end of the measuring tube, and having exactly one antinode in the area of the useful vibration length, wherein

--- the at least one measuring tube, excited to vibrate by the at least one vibration generator (41), at least partially produces vibrations in resonance, particularly with a vibration frequency, $f_{drv,I} = f_1$, corresponding to a current natural frequency, $f_1$, of the vibration mode of the first order, and

--- the at least one vibration signal ($s_{sens1}$) has at least temporarily a sinusoidal signal component ($s_{sens1,I}$) of the first type with a signal frequency, $f_{sens1,I}$, which corresponds to the signal frequency, $f_{drv,I}$, of the signal component, $s_{drv,I}$, of the first type of the driver signal ($s_{drv}$), and consequently to the current natural frequency, $f_1$, of the vibration mode of the first order,

-- and that the driver signal ($s_{drv}$) at least temporarily has a sinusoidal signal component ($s_{drv,II}$) of the second type with a signal frequency, $f_{drv,II}$, which is different from every current natural frequency of each natural vibration mode of the at least one measuring tube by more than 1 Hz, particularly by more than 10 Hz, and/or by more than 1 %, particularly by more than 10 %, in each case, of said natural frequency, whereby

--- the at least one measuring tube, excited to vibrate by the at least one vibration generator (41), at least partially produces forced vibrations out of resonance, and

--- the at least one vibration signal ($s_{sens1}$) at least temporarily has a sinusoidal signal component ($s_{sens1,II}$) of the second type with a signal frequency, $f_{sens1,II}$, which corresponds to the signal frequency, $f_{drv,II}$, of the signal component, $s_{drv,II}$, of the second type of the driver signal ($s_{drv}$), and consequently to no current natural frequency of any natural vibration mode of the at least one measuring tube,

- and wherein the transmitter electronics unit is designed to set the signal frequency, $f_{drv,II}$, of the signal component of the second type of the driver signal as a function of the signal component, $f_{drv,I}$, of the first type of the driver signal and/or as a function of the signal component of the first type of the vibration signal, particularly according to a predefined frequency ratio, $f_{drv,II} / f_1 = f_{drv,II} / f_{drv,I} = \Omega$ to the current natural frequency, $f_1$, of the vibration mode of the first order or to the current signal frequency of the signal component of the first type of the driver signal.

2. Measuring system as claimed in one of the previous claims,

- wherein the transmitter electronics unit (ME) is designed to generate a system status message ($Sys_{fail}$), particularly declared as an alarm, using the signal component ($s_{sens1,II}$) of the second type of the at least one vibration signal ($s_{sens1}$), said message signaling, particularly in a visually and/or acoustically recognizable manner, wearing of the measuring tube that exceeds a predefined tolerance value; and/or
- wherein the transmitter electronics unit (ME) is designed to generate a system status message, particularly declared as an alarm, using the signal component ($s_{sens1,II}$) of the second type of the at least one vibration signal ($s_{sens1}$), said message signaling, particularly in a visually and/or acoustically recognizable manner, that a structural integrity of the at least one measuring tube is no longer guaranteed, particularly as a result of material removal and/or as a result of stress and/or as a result of cracking and/or as a result of material fatigue; and/or
- wherein the transmitter electronics unit (ME) is designed to generate a system status message, particularly declared as an alarm, using the signal component ($s_{sens1,II}$) of the second type of the at least one vibration signal ($s_{sens1}$), said message signaling, particularly in a visually and/or acoustically recognizable manner, that deposit buildup has formed on an inside of the measuring tube that is in contact with the medium to be measured during operation; and/or
- wherein the transmitter electronics unit (ME) is designed to generate a system status message, particularly declared as an alarm, using the signal component ($s_{sens1,II}$) of the second type of the at least one vibration signal ($s_{sens1}$), said message signaling, particularly in a visually and/or acoustically recognizable manner, a removal of the material of the measuring tube that exceeds a predefined tolerance value; and/or
- wherein the transmitter electronics unit (ME) is designed to generate a system status message, particularly declared as an alarm, using the signal component ($s_{sens1,II}$) of the second type of the at least one vibration

signal ($s_{sens1}$), said message signaling, particularly in a visually and/or acoustically recognizable manner, the formation of cracks in the at least one measuring tube; and/or

- wherein the transmitter electronics unit (ME) is designed to generate a system status message, particularly declared as an alarm, using the signal component ($s_{sens1,II}$) of the second type of the at least one vibration signal ($s_{sens1}$), said message signaling a change in the vibration properties of the at least one measuring tube that exceeds a predefined tolerance value, said change in particular being the result of deformation and/or being the result of material removal and/or being the result of cracking and/or being the result of material fatigue; and/or

- wherein the transmitter electronics unit (ME) is designed to generate a system status message, particularly declared as an alarm, using the signal component ($s_{sens1,II}$) of the second type of the at least one vibration signal ($s_{sens1}$), said message signaling, particularly in a visually and/or acoustically recognizable manner, a change in the electrical impedance of the transducer that exceeds a predefined tolerance value; and/or

- wherein the transmitter electronics unit (ME) is designed to generate a system status message, particularly declared as an alarm, using the signal component ($s_{sens1,II}$) of the second type of the at least one vibration signal ($s_{sens1}$), said message signaling, particularly in a visually and/or acoustically recognizable manner, a change in the electrical impedance and/or an electromechanical transducer constant of the at least one vibration generator and/or an electrical impedance and/or an electromechanical transducer constant of the at least one vibration sensor, said change exceeding a predefined tolerance value; and/or

- wherein the transmitter electronics unit (ME) is designed to detect - using the signal component ($s_{drv,II}$) of the second type of the driver signal ($s_{drv}$), particularly based on a current ($i_{drv,II}$ -> $s_{drv,II}$) flowing in the at least one vibration generator and serving as the signal component ($s_{drv,II}$) of the second type of the driver signal ($s_{drv}$), or based on a voltage ($u_{drv,II}$ -> $s_{drv,II}$) generating this current and serving as the signal component ($s_{drv,II}$) of the second type of driver signal ($s_{drv}$), and using the signal component ($s_{sens1,II}$) of the second type of the at least one vibration signal ($s_{sens1}$), particularly based on a voltage ($U_{sens1,II}$) generated using the at least one vibration sensor and serving as a signal component ($s_{sens1,II}$) of the second type of the vibration signal ($s_{sens1}$) and/or based on a phase difference of the signal component of the second type of the vibration signal in relation to the signal component of the second type of the driver signal - whether and/or to what extent the measuring system is changed compared to a reference state determined for this purpose in advance, particularly determined during a calibration and/or during a commissioning of the measuring system, particularly as a result of aging and/or as a result of stress on the transducer, particularly changed in such a way that a system parameter measured value - which is determined during the operation of the measuring system using the signal component ($s_{drv,II}$) of the second type of the driver signal ($s_{drv}$) and/or using the signal component ($s_{sens1,II}$) of the second type of the at least one vibration signal ($s_{sens1}$) - for at least a system parameter characterizing the measuring system differs from a system parameter reference value determined in the reference state of the measuring system for said system parameter by more than a predefined tolerance value, particularly by more than 0.1 % of said reference value; and/or

- wherein the transmitter electronics unit (ME) is designed to generate a system status message (Sysfail), particularly declared as an alarm, using the signal component ($s_{sens1,II}$) of the second type of the at least one vibration signal ($s_{sens1}$), said message signaling, particularly in a visually and/or acoustically recognizable manner, a deviation of the measuring system from a reference state determined in advance for this purpose, particularly during a calibration and/or during a commissioning of the measuring system, said deviation being particularly due to the aging of the measuring system and/or due to stress on the transducer irreversibly changing a vibration behavior of the at least one measuring tube and/or due to thermal stress on the transducer changing an electrical impedance of the at least one vibration generator and/or due to thermal stress on the transducer changing an electromechanical converter constant of the at least one vibration sensor, said deviation exceeding a predefined tolerance value.

3. Measuring system as claimed in one of the previous claims, wherein the frequency ratio $f_{drv,II}/f_1 = f_{drv,II}/f_{drv,I} = \Omega$, of the signal frequency, $f_{drv,II}$, of the signal component of the second type of the driver signal to the current natural frequency, $f_1$, of the vibration mode of the first order or the current signal frequency of the signal component of the first type of the driver signal is maintained in a non-volatile data memory for measured values serving as reference values representing a reference state of the measuring system.

4. Measuring system as claimed in one of the previous claims, wherein the transmitter electronics unit is designed to determine, particularly intermittently determine - using the signal component ($s_{sens1,II}$) of the second type of the at least one vibration signal ($s_{sens1}$) and using the signal component ($s_{drv,II}$) of the second type of the driver signal ($s_{drv}$) - a system parameter measured value, $G_{ME,ti}$, for a system parameter, $g_{ME}$, characterizing a transducer transmission function that is inherent to the transducer, and therefore also characterizing the measuring system, wherein according to said transducer transmission function the transducer converts the driver signal or an individual signal component ($s_{drv,II}$) thereof, particularly a current ($i_{drv,II}$ -> $s_{drv,II}$) flowing through the at least one vibration generator and serving as the signal component ($s_{drv,II}$) of the second type of the driver signal (Sdrv) or a voltage ($u_{drv,II}$ -> $s_{drv,II}$) generating said current and serving as the signal component ($s_{drv,II}$) of the second type of the driver signal ($s_{drv}$), to the at least one vibration signal ($s_{sens1}$) or an individual signal component of said vibration signal, particularly a voltage ($u_{sens1,II}$) generated using the at least one vibration sensor and serving as the signal component ($s_{sens1,II}$) of the second type of the vibration signal ($s_{sens1}$).

5. Measuring system as claimed in Claim 4,

   - wherein the transmitter electronics unit (ME) is designed to detect - using said system parameter, $g_{ME}$, which characterizes the transducer transmission function
   - whether and/or to what extent the measuring system is changed compared to a reference state determined for this purpose in advance, particularly during a calibration and/or during a commissioning of the measuring system, particularly as a result of aging and/or as a result of stress on the transducer, particularly in such a way that the transmitter electronics unit (ME) generates a system status message, particularly a message declared as an alarm, using said system parameter, $g_{ME}$, which characterizes the transducer transmission function, said message signaling, particularly in a visually and/or acoustically recognizable manner, a deviation of the measuring system from a reference state - determined in advance for this purpose - that exceeds a predefined tolerance value; and/or
   - wherein the transmitter electronics unit (ME) is designed to determine - using the signal component of the first type of the at least one vibration signal and/or using the signal component of the first type of the driver signal, as well as using the system parameter measured value, $G_{ME,ti}$ - a medium parameter measured value, $X_M$, representing a parameter to be measured of the flowing medium, particularly a mass flow rate, a density and/or a viscosity, particularly in such a way that the transmitter electronics unit (ME) compensates for an influence of a deviation of the measuring system - determined using the system parameter measured value, $G_{ME,ti}$ - from a reference state determined in advance for this purpose, on a measuring accuracy of the measuring system with which the medium parameter measured values, $X_M$ are determined.

6. Measuring system as claimed in one of the previous claims, wherein the transmitter electronics unit has a data memory, particularly a volatile memory, for the measured values generated using the measuring system, wherein in said data memory at least one measurement data set representing, particularly provisionally, an operating state of the measuring system is retained, said data set being formed by measured values generated during the operation of the measuring system, and comprising system parameter measured values generated on the basis of the signal component of the second type of the driver signal and/or on the basis of the signal component of the second type of the at least one sensor signal, said measured values being for different system parameters characterizing the measuring system.

7. Measuring system as claimed in one of the previous claims, wherein the transmitter electronics unit has a data memory, particularly a non-volatile memory, for measured values serving as reference values representing a reference state of the measuring system, wherein said data memory contains at least one reference data set representing a reference state of the measuring system, particularly a system already installed in the pipe, wherein said data set comprises system parameter reference values for different system parameters characterizing the measuring system, said values being particularly generated within the framework of a calibration of the measuring system in the manufacturing factory and/or generated by the measuring system during the commissioning of said measuring system, particularly in such a way that said system parameter reference values are measured values generated using the measuring system itself when the system is in the reference state, and/or using the transducer conducting the medium of a known temperature, and/or in such a way that the reference data set comprises a system parameter reference value for a signal component of the second type of the driver signal supplied to the at least one vibration generator when the measuring system is in the reference state, and/or a system parameter reference value for a signal component of the second type of the at least one vibration signal delivered by the transducer when the measuring system is in the reference state, and/or a system parameter reference value derived from a signal component of the second type of the driver signal supplied to the exciter arrangement when the measuring system is in the reference state, and derived from a signal component of the second type of the at least one vibration signal supplied by the transducer when the measuring system is in the reference state.

8. Measuring system as claimed in Claims 6 and 7, wherein the transmitter electronics unit is designed to detect whether and to what extent the measuring system has changed compared to the reference state, determined in advance for this purpose, based on the reference data set and the measurement data set, particularly based on a

deviation, $\Delta G_{ME}$, determined between the reference data set and the measurement data set.

9. Measuring system as claimed in the previous Claim, wherein the transmitter electronics unit is designed to detect whether and to what extent the measuring system has changed compared to the reference state, determined in advance for this purpose, based on a deviation, $\Delta G_{ME}$, determined between the reference data set and the measurement data set, particularly in such a way that the transmitter electronics unit compares the reference data set against the measurement data set, particularly in a recurring manner.

10. Measuring system as claimed in one of the Claims 6 to 9,

    - wherein the measurement data set comprises a system parameter measured value for the signal component of the second type of the driver signal supplied to the at least one vibration generator when the measuring system is in operation and/or a system parameter measured value for the signal component of the second type of the at least one vibration signal supplied by the transducer when the measuring system is in operation and/or a system parameter measured value derived from the signal component of the second type of the driver signal supplied to the exciter arrangement when the measuring system is in operation, and derived from the signal component of the second type of the at least one vibration signal supplied by the transducer while the measuring system is in operation; and/or
    - wherein the data memory contains a measurement data set for measured values generated using the measuring system, said data set being formed by measured values generated while the measuring system is in operation and representing the medium conducted through the transducer, and wherein said data set comprises medium parameter measured values, $X_M$, generated based on the signal component of the first type of the at least one sensor signal, for different medium parameters characterizing the flowing medium, particularly a mass flow rate, a density and/or a viscosity.

11. Measuring system as claimed in one of the Claims 7 to 10,

    - wherein the reference data set comprises a system parameter reference value representing the natural frequency, $f_1$, of the vibration mode of the first order while the measuring system is in the reference state, as well as a system parameter reference value representing the signal frequency ($f_{drv,II}$) of the signal component of the second type of the driver signal supplied to the at least one vibration generator while the measuring system is in the reference state; and/or
    - wherein the reference data set comprises a system parameter reference value representing a ratio, $f_{drv,II} / f_1 | t_{Ref} = f_{drv,II} / f_{drv,I} | t_{Ref} = f_{drv,II} | t_{Ref} / f_{drv,I} | t_{Ref} = \Omega$, between the signal frequency ($f_{drv,II}$) of the signal component of the second type of the driver signal supplied to the at least one vibration generator while the measuring system is in the reference state and the natural frequency, $f_1$, of the vibration mode of the first order while the measuring system is in the reference state.

12. Measuring system as claimed in one of the Claims 8 to 11, wherein the transmitter electronics unit (ME) is designed to generate a system status message, declared as an alarm, based on a comparison between a reference data set and a measurement data set, said message signaling, particularly in a visually and/or acoustically recognizable manner, a deviation of the measuring system from a reference state determined in advance for this purpose, particularly during a calibration and/or during a commissioning of the measuring system, said deviation being particularly due to the aging of the measuring system and/or due to stress on the transducer irreversibly changing a vibration behavior of the at least one measuring tube.

13. Measuring system as claimed in one of the Claims 9 to 12, wherein the transmitter electronics unit is designed to generate a status message, particularly a status message declared as an alarm, on the basis of the deviation, $\Delta G_{ME}$, determined between the at least one system parameter measured value and the corresponding system parameter reference value, said message signaling, particularly in a visually and/or acoustically recognizable manner, a deviation of the measuring system from the reference state, determined in advance for this purpose, that exceeds a predefined tolerance value, said deviation being particularly due to the aging of the measuring system and/or due to stress on the transducer irreversibly changing a vibration behavior of the at least one measuring tube and/or due to thermal stress on the transducer changing an electrical impedance and/or an electromechanical transducer constant of the at least one vibration generator and/or due to thermal stress on the transducer changing an electrical impedance and/or an electromechanical converter constant of the at least one vibration sensor.

14. Measuring system as claimed in the previous claim, wherein the transmitter electronics unit is designed to generate said system status message if the determined deviation, $\Delta G_{ME}$, exceeds a threshold value representing a tolerance value predefined for this purpose, particularly in such a way that the determined deviation, $\Delta G_{ME}$, is more than 0.1 % of the corresponding system parameter reference value.

**15.** Measuring system as claimed in one of the previous claims,

- wherein the driver signal simultaneously presents the signal component of the first type and the signal component of the second type, whereby the at least one measuring tube, excited to vibrate by the at least one vibration generator (41), simultaneously produces, on a partial basis, both vibrations in resonance, specifically with a vibration frequency, $f_{drv,I} = f_1$, corresponding to a current natural frequency, $f_1$, of the vibration mode of the first order, and, on a partial basis, forces vibrations out of resonance; and/or
- wherein the signal frequency, $f_{drv,II}$ of the signal component ($s_{drv,II}$) of the second type of the driver signal ($s_{drv}$) is greater than 5 Hz, particularly greater than 10 Hz, and/or wherein the signal frequency, $f_{drv,II}$ of the signal component ($s_{drv,II}$) of the second type of the driver signal ($s_{drv}$) is greater than 0.1 times the current natural frequency of the vibration mode of the first order; and/or
- wherein the signal frequency ($f_{drv,II}$) of the signal component of the second type ($s_{drv,II}$) of the driver signal ($s_{drv}$) corresponds to more than 1.01 times, particularly to more than 1.15 times, and less than 2.7 times, particularly less than 2.4 times a current natural frequency, $f_1$, of the vibration mode of the first order, whereby

-- the at least one measuring tube, excited to vibrate by the at least one vibration generator (41), is designed to produce at least partially forced vibrations out of resonance with a vibration frequency located in a frequency range, $|\, 1{,}01 \cdot f_1 < f_{drv,II} < 2.7 \cdot f_1 \,|$, more than 1.01 times, particularly more than 1.15 times, and less than 2.7 times, particularly less than 2.4 times the current natural frequency, $f_1$, of the vibration mode of the first order, and

-- the signal frequency of the second signal component ($s_{sens1,II}$) of the vibration signal ($s_{sens1}$) is more than 1.01 times, particularly more than 1.15 times, and less than 2.7 times, particularly less than 2.4 times, the current natural frequency, $f_1$, of the vibration mode of the first order.

**16.** Measuring system as claimed in one of the previous claims,

- wherein the signal frequency ($f_{drv,II}$) of the signal component of the second type ($s_{drv,II}$) of the driver signal is less than a current natural frequency, $f_2$, of a vibration mode of the second order of the at least one measuring tube in which the at least one vibrating measuring tube can produce or does produce vibrations around a rest position, said vibrations each having a node in the area of the first and second end of the measuring tube, and having another node in the area of the useful vibration length and precisely two antinodes, whereby

-- the at least one measuring tube, excited to vibrate by the at least one vibration generator (41), produces at least partially forced vibrations out of resonance, specifically in a frequency range, $|\, f_{drv,II} < f_2 \,|$, that is below the current natural frequency of the vibration mode of the second order, and

-- the at least one vibration signal has at least temporarily a signal component of the second type with a signal frequency, that is below the current natural frequency of the vibration mode of the second order, particularly in such a way that

--- the least one measuring tube, excited to vibrate by the at least one vibration generator (41), produces at least partially forced vibrations out of resonance, specifically in a frequency range, $|\, f_1 < f_{drv,II} < f_2 \,|$, that is above the current natural frequency, $f_1$, of the vibration mode of the first order and is below the current natural frequency, $f_2$, of the vibration mode of the second order, and

--- the at least one vibration signal has at least temporarily a signal component of the second type with a signal frequency, which is above the current natural frequency of the vibration mode of the first order and below the current natural frequency of the vibration mode of the second order; and/or

- wherein the signal frequency of the signal component of the first type of the driver signal ($s_{drv}$) corresponds to a current natural frequency of a natural flexural vibration mode in which the at least one vibrating measuring tube produces flexural vibrations around the rest position, said vibrations each having a node in the area of the first and second end of the measuring tube, and precisely one antinode in the area of the useful vibration length (flexural vibration basic mode), whereby

-- the at least one measuring tube, excited to vibrate by the at least one vibration generator (41), produces at least partially, particularly primarily, flexural vibrations in resonance, particularly with a vibration frequency corresponding to the current natural frequency of said flexural vibration mode, and

- the signal frequency of the signal component of the first type of the at least one vibration signal corresponds to the current natural frequency of said flexural vibration mode.

## Revendications

1. Système de mesure destiné à des produits en écoulement, notamment dans des conduites, lequel système de mesure comprend
un transducteur (MW) du type à vibrations, parcouru par le produit en fonctionnement, lequel transducteur est destiné à générer des signaux de vibration correspondant à des paramètres du produit en écoulement,
ainsi qu'une unité de transmetteur (ME) couplée électriquement au transducteur, laquelle unité est destinée à commander le transducteur et à exploiter les signaux de vibration délivrés par le transducteur,

- système pour lequel le transducteur (MW) comporte

-- au moins un tube de mesure (10, 10') avec un grand nombre de modes de vibration naturels, lequel tube est destiné à guider le produit en écoulement et s'étend entre une première extrémité de tube côté entrée et une deuxième extrémité de tube côté sortie, lequel tube présente une longueur de vibration utile,
-- au moins un excitateur de vibrations (41) destiné à convertir la puissance d'excitation électrique en vibrations de l'au moins un tube de mesure, et
-- au moins un capteur de vibrations (51, 52) destiné à la mesure des vibrations de l'au moins un tube de mesure et destiné à la génération d'un signal de vibration ($s_{sens1}$) du transducteur, représentant les vibrations de l'au moins un tube de mesure ; et

- système pour lequel l'électronique de transmetteur (ME) est conçue de telle sorte à délivrer un signal d'attaque ($s_{drv}$) pour l'au moins un excitateur de vibrations (41), lequel signal d'attaque sert à acheminer une puissance d'excitation électrique à l'au moins un excitateur de vibrations (41), par conséquent à provoquer des vibrations de l'au moins un tube de mesure, de telle sorte

-- que le signal d'attaque ($s_{drv}$) présente au moins temporairement une composante de signal ($s_{drv,I}$) de premier type avec une fréquence de signal, $f_{drv,I}$, qui correspond à une fréquence propre momentanée, $f_1$, d'un mode de vibration naturel de premier ordre de l'au moins un tube de mesure, dans lequel l'au moins un tube de mesure peut exécuter ou exécute des vibrations propres autour d'une position de repos, lesquelles vibrations propres présentent, dans la zone de la première et de la deuxième extrémité de tube de mesure, respectivement un nœud de vibration et, dans la zone de la longueur de vibration utile, exactement un ventre de vibration, ce par quoi
--- l'au moins un tube de mesure, mis en vibrations par l'au moins un excitateur de vibrations (41), exécute au moins partiellement des vibrations en résonance, notamment avec une fréquence de vibration, $f_{drv,I} = f_1$, correspondant à une fréquence propre momentanée, $f_1$, du mode de vibration de premier ordre, et
--- l'au moins un signal de vibration ($s_{sens1}$) présente au moins temporairement une composante de signal sinusoïdale ($s_{sens1,I}$) de premier type avec une fréquence de signal, $f_{sens1,I}$, qui correspond à la fréquence de signal, $f_{drv,I}$, de la composante de signal, $s_{drv,I}$, de premier type du signal d'attaque ($s_{drv}$), par conséquent à la fréquence propre momentanée, $f_1$, du mode de vibration de premier ordre,
-- et que le signal d'attaque ($s_{drv}$) présente au moins temporairement une composante de signal sinusoïdale ($s_{drv,II}$) de second type avec une fréquence de signal, $f_{drv,II}$, qui diffère de toute fréquence propre momentanée de tout mode de vibration naturel de l'au moins un tube de mesure, respectivement de plus de 1 Hz, notamment de plus de 10 Hz, et/ou de plus de 1 %, notamment de plus de 10 % de la même fréquence propre, ce par quoi
--- l'au moins un tube de mesure, mis en vibrations par l'au moins un excitateur de vibrations (41), exécute au moins partiellement des vibrations forcées hors résonance, et
--- l'au moins un signal de vibration ($s_{sens1}$) présente au moins temporairement une composante de signal sinusoïdale ($s_{sens1,II}$) de second type avec une fréquence de signal, $f_{sens1,II}$, qui correspond à la fréquence de signal, $f_{drv,II}$, de la composante de signal, $s_{drv,II}$, de second type du signal d'attaque ($s_{drv}$), par conséquent à aucune fréquence propre momentanée d'un quelconque mode de vibration naturel de l'au moins un tube de mesure,

- et système pour lequel l'électronique de transmetteur est conçue de telle sorte à régler la fréquence, $f_{drv,II}$, de la composante de signal de second type du signal d'attaque en fonction de la composante de signal, $f_{drv,I}$, de premier type du signal de vibration, notamment selon un rapport de fréquence prédéfini, $f_{drv,II} / f_1 = f_{drv,II} / f_{drv,II} = \Omega$, par rapport à la fréquence propre momentanée, $f_1$, du mode de vibration de premier ordre ou par rapport à la fréquence de signal momentanée de la composante de signal de premier type du signal d'attaque.

2. Système de mesure selon l'une des revendications précédentes,

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système ($Sys_{fail}$), notamment déclaré en tant qu'alarme, notamment perceptible de façon visuelle et/ou acoustique, lequel message signale une usure du tube de mesure dépassant une valeur de tolérance prédéfinie ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale qu'une intégrité structurelle de l'au moins un tube de mesure n'est plus garantie, notamment suite à une abrasion de matière et/ou suite à une surcharge et/ou suite à une formation de craquelures et/ou suite à une fatigue du matériau ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale la formation d'un dépôt adhérent sur la face interne du tube de mesure, laquelle est, en fonctionnement, en contact avec le produit à mesurer ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale une abrasion du matériau du tube de mesure dépassant une valeur de tolérance prédéfinie ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale une formation de craquelures dans l'au moins un tube de mesure ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale une modification des propriétés de vibration de l'au moins un tube de mesure dépassant une valeur de tolérance prédéfinie, notamment suite à une déformation et/ou suite à une abrasion du matériau et/ou suite à la formation de craquelures et/ou suite à la fatigue du matériau ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale une modification d'une impédance électrique du transducteur dépassant une valeur de tolérance prédéfinie ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système, notamment déclaré en tant qu'alarme, notamment perceptible de façon visuelle et/ou acoustique, lequel message signale une modification d'une impédance électrique et/ou d'une constante de conversion électromécanique de l'au moins un excitateur de vibrations et/ou d'une impédance électrique et/ou d'une constante de conversion électromécanique de l'au moins un capteur de vibrations, laquelle modification dépasse une valeur de tolérance prédéfinie ; et/ou

- pour lequel l'électronique de transmetteur (ME) est conçue de telle sorte à détecter - au moyen de la composante de signal ($s_{drv,II}$) de second type du signal d'attaque ($s_{drv}$), notamment sur la base d'un courant ($i_{drv,II}$ -> $s_{drv,II}$) circulant dans l'au moins un excitateur de vibrations et servant de composante de signal ($s_{drv,II}$) de second type du signal d'attaque ($s_{drv}$), ou sur la base d'une tension ($u_{drv,II}$ -> $s_{drv,II}$) générant ce courant et servant de composante de signal ($s_{drv,II}$) de second type du signal d'attaque ($s_{drv}$), et au moyen de la composante de signal ($s_{sens1,II}$) de second type de l'au moins un signal de vibration ($s_{sens1}$), notamment sur la base d'une tension ($U_{sens1,II}$) générée au moyen de l'au moins un capteur de vibrations et servant de composante de signal ($s_{sens1,II}$) de second type du signal de vibration ($s_{sens1}$) et/ou sur la base d'une différence de phase de la composante de signal de second type du signal de vibration par rapport à la composante de signal de second type du signal d'attaque - si et/ou dans quelle mesure le système de mesure s'est modifié comparé à un état de référence déterminé au préalable à cette fin, notamment lors d'un étalonnage et/ou lors d'une mise en service du système de mesure, notamment suite à un vieillissement et/ou suite à une charge du transducteur, notamment de telle sorte que, pendant le fonctionnement du système de mesure, une valeur mesurée, déterminée au moyen de la composante de signal ($s_{drv,II}$) de second type du signal d'attaque ($s_{drv}$) et/ou au moyen de la composante de signal ($s_{sens1,II}$) de second type de l'au moins un signal de vibration ($s_{sens1}$), valeur mesurée pour au moins un paramètre système caractérisant le système de mesure, diffère d'une valeur de référence déterminée dans l'état de référence du système de mesure pour le même paramètre système, de plus d'une valeur de tolérance prédéfinie, notamment de plus de 0,1 % de la valeur de référence ; et/ou

- pour lequel l'électronique de transmetteur (ME) est conçue de telle sorte à générer, au moyen de la composante de signal ($s_{sens1,II}$) de second type de l'au moins un signal de vibration ($s_{sens1}$), un message d'état du système (Sysfail), notamment déclaré en tant qu'alarme, notamment perceptible de façon visuelle et/ou acoustique, lequel message signale un écart du système de mesure par rapport à un état de référence déterminé au préalable à cette fin, notamment lors d'un étalonnage et/ou lors d'une mise en service du système de mesure, lequel écart est notamment dû à un vieillissement du système de mesure et/ou dû à des fluctuations irréversibles des charges du transducteur en raison d'un comportement de vibration de l'au moins un tube de mesure et/ou dû à des fluctuations des charges thermiques en raison d'une impédance électrique de l'au moins un excitateur de vibrations et/ou dû à des fluctuations des charges thermiques en raison d'une constante de conversion électromécanique de l'au moins un capteur de vibrations, et lequel écart dépasse une valeur de tolérance prédéfinie.

3. Système de mesure selon l'une des revendications précédentes, pour lequel le rapport de fréquence $f_{drv,II}$ / $f_1$ = $f_{drv,II}$ / $f_{drv,I}$ = $\Omega$, entre la fréquence de signal, $f_{drv,II}$, de la composante de signal de second type du signal d'attaque et la fréquence propre momentanée, $f_1$, du mode de vibration de premier ordre ou la fréquence de signal momentanée de la composante de signal de premier type du signal d'attaque est enregistré dans une mémoire de données non volatile pour des valeurs mesurées servant de valeurs de référence représentant un état de référence du système de mesure.

4. Système de mesure selon l'une des revendications précédentes, pour lequel l'électronique de transmetteur est conçue de telle sorte à déterminer, au moyen de la composante de signal ($s_{sens1,II}$) de second type de l'au moins un signal de vibration ($s_{sens1}$) ainsi qu'au moyen de la composante de signal ($s_{drv,II}$) de second type du signal d'attaque ($s_{drv}$), notamment de façon récurrente, une valeur mesurée de paramètre système, $G_{ME,ti,}$, pour un paramètre système, $g_{ME}$, caractérisant une fonction de transmission de transducteur, immanente au transducteur, et donc le système de mesure, fonction de transmission de transducteur selon laquelle le transducteur convertit le signal d'attaque ou une composante de signal ($s_{drv,II}$) isolée du signal d'attaque, notamment un courant ($i_{drv,II}$ -> $s_{drv,II}$) circulant dans l'au moins un excitateur de vibrations et servant de composante de signal ($s_{drv,II}$) de second type du signal d'attaque ($s_{drv}$) ou une tension ($u_{drv,II}$ -> $s_{drv,II}$) générant ce courant et servant de composante de signal ($s_{drv,II}$) de second type du signal d'attaque ($s_{drv}$), en l'au moins un signal de vibration ($s_{sens1}$) ou une composante de signal isolée de ce signal de vibration, notamment une tension ($u_{sens1,II}$) générée au moyen de l'au moins un capteur de vibration et servant de composante de signal ($s_{sens1,II}$) de second type du signal de vibration ($s_{sens1}$).

5. Système de mesure selon la revendication 4,

- pour lequel l'électronique de transmetteur (ME) est conçue de telle sorte à détecter, au moyen du paramètre système, $g_{ME}$, caractérisant la fonction de transmission du transducteur, si et/ou dans quelle mesure le système de mesure s'est modifié comparé à un état de référence déterminé au préalable à cette fin, notamment lors d'un étalonnage et/ou lors d'une mise en service du système de mesure, notamment suite à un vieillissement et/ou suite à une charge du transducteur, notamment de telle sorte que l'électronique de transmetteur (ME) génère, au moyen du même paramètre système, $g_{ME}$, caractérisant la fonction de transmission du transducteur, le cas échéant un message d'état du système, notamment déclaré en tant qu'alarme, notamment perceptible de façon visuelle et/ou acoustique, lequel message signale un écart du système de mesure par rapport à un état de référence déterminé au préalable à cette fin, lequel écart dépasse une valeur de tolérance prédéfinie ; et/ou

- pour lequel l'électronique de transmetteur (ME) est conçue de telle à déterminer, au moyen de la composante de signal de premier type de l'au moins un signal de vibration et/ou au moyen de la composante de signal de premier type du signal d'attaque, ainsi qu'en utilisant la valeur mesurée de paramètre système, $G_{ME,ti}$, une valeur mesurée de paramètre de produit, $X_M$, représentant un paramètre à mesurer du produit en écoulement, notamment un débit massique, une densité et/ou une viscosité, notamment de telle sorte que l'électronique de transmetteur (ME) compense une influence d'un écart du système de mesure, déterminé en utilisant la valeur mesurée de paramètre système, $G_{ME,ti}$, par rapport à un état de référence déterminé au préalable à cette fin, sur une précision de mesure du système de mesure, avec laquelle les valeurs mesurées de paramètre de produit, $X_M$, sont déterminées.

**6.** Système de mesure selon l'une des revendications précédentes, pour lequel l'électronique de transmetteur comporte une mémoire de données, notamment volatile, pour les valeurs mesurées générées au moyen du système de mesure, mémoire de données dans laquelle est enregistré au moins un jeu de données de mesure représentant, notamment provisoirement, un état de fonctionnement du système de mesure, lequel jeu de données est formé par les valeurs mesurées générées pendant le fonctionnement du système de mesure, et qui comprend des valeurs mesurées de paramètres système générées sur la base de la composante de signal de second type du signal d'attaque et/ou sur la base de la composante de signal de second type de l'au moins un signal de capteur, pour différents paramètres système caractérisant le système de mesure.

**7.** Système de mesure selon l'une des revendications précédentes, pour lequel l'électronique de transmetteur comporte une mémoire de données, notamment non volatile, pour les valeurs mesurées servant de valeurs de référence représentant un état de référence du système de mesure, mémoire de données dans laquelle est enregistré au moins un jeu de données de référence représentant un système de mesure, notamment déjà installé dans la conduite, lequel jeu de données comprend des valeurs de référence pour différents paramètres système caractérisant le système de mesure, lesquelles valeurs sont notamment générées dans le cadre d'un étalonnage du système de mesure dans l'usine du fabricant et/ou générées par le système de mesure pendant la mise en service de ce même système de mesure, notamment de telle sorte que les valeurs de référence de paramètres système sont des valeurs mesurées générées au moyen du système de mesure lui-même, lequel système est dans l'état de référence, et/ou au moyen du transducteur guidant le produit dont la température est connue, et/ou de telle sorte que le jeu de données de référence comprend une valeur de référence de paramètre système pour une composante de signal de second type du signal d'attaque acheminé à l'au moins un excitateur de vibrations lorsque le système de mesure est dans l'état de référence, et/ou une valeur de référence de paramètre système pour une composante de signal de second type de l'au moins un signal de vibration délivré par le transducteur lorsque le système de mesure est dans l'état de référence, et/ou une valeur mesurée de paramètre système dérivée de la composante de signal de second type du signal d'attaque acheminé au circuit d'excitation pendant que le système de mesure est dans l'état de référence, et dérivée de la composante de signal de second type de l'au moins un signal de vibration délivré par le transducteur pendant que le système de mesure est dans l'état de référence.

**8.** Système de mesure selon les revendications 6 et 7, pour lequel l'électronique de transmetteur est conçue, sur la base du jeu de données de référence et du jeu de données de mesure, notamment sur la base d'un écart, $\Delta G_{ME}$, déterminé entre le jeu de données de référence et le jeu de données de mesure, de telle sorte à détecter si et/ou dans quelle mesure le système de mesure s'est modifié comparé à l'état de référence déterminé au préalable à cette fin.

**9.** Système de mesure selon la revendication précédente, pour lequel l'électronique de transmetteur est conçue, sur la base d'un écart, $\Delta G_{ME}$, déterminé entre le jeu de données de référence et le jeu de données de mesure, de telle sorte à détecter si et/ou dans quelle mesure le système de mesure s'est modifié comparé à l'état de référence déterminé au préalable à cette fin, notamment de telle sorte que l'électronique de transmetteur compare, notamment de façon récurrente, le jeu de données de référence avec le jeu de données de mesure.

**10.** Système de mesure selon l'une des revendications 6 à 9,

- pour lequel le jeu de données de référence comprend une valeur mesurée de paramètre système pour la composante de signal de second type du signal d'attaque acheminé à l'au moins un excitateur de vibrations pendant le fonctionnement du système de mesure et/ou une valeur mesurée de paramètre système pour la composante de signal de second type de l'au moins un signal de vibration délivré par le transducteur pendant le fonctionnement du système de mesure et/ou une valeur mesurée de paramètre système dérivée de la composante de signal de second type du signal d'attaque acheminé au circuit d'excitation pendant le fonctionnement du système de mesure, et dérivée de la composante de signal de second type de l'au moins un signal de vibration délivré par le transducteur pendant le fonctionnement du système de mesure ; et/ou
- pour lequel est enregistré, dans la mémoire de données pour les valeurs mesurées générées au moyen du système de mesure, un jeu de données de mesure représentant le produit guidé dans le transducteur, lequel jeu est constitué des valeurs mesurées générées pendant le fonctionnement du système de mesure et lequel jeu comprend des valeurs mesurées de paramètre de produit, $X_M$, générées sur la base de la composante de signal de premier type de l'au moins un signal de capteur, pour différents paramètres de produit caractérisant le produit en écoulement, notamment un débit massique, une densité et/ou une viscosité.

**11.** Système de mesure selon l'une des revendications 7 à 10,

- pour lequel le jeu de données de référence comprend une valeur de référence de paramètre système représentant la fréquence propre, $f_1$, du mode de vibration de premier ordre lorsque le système de mesure est dans l'état de référence, ainsi qu'une valeur de référence de paramètre système représentant la fréquence de signal ($f_{drv,II}$) de la composante de signal de second type du signal d'attaque acheminé à l'au moins un excitateur de vibrations lorsque le système de mesure est dans l'état de référence ; et/ou
- pour lequel le jeu de données de référence comprend une valeur de référence de paramètre système représentant un rapport, $f_{drv,II} / f_1 |_{tRef} = f_{drv,II} / f_{drv,I} |_{tRef} = f_{drv,II} |_{tRef} / f_{drv,I} |_{tRef} = \Omega$, entre la fréquence de signal ($f_{drv,II}$) de la composante de signal de second type du signal d'attaque acheminé à l'au moins un excitateur de vibrations lorsque le système de mesure est dans l'état de référence, et la fréquence propre, $f_1$, du mode de vibration de premier ordre lorsque le système de mesure est dans l'état de référence.

**12.** Système de mesure selon l'une des revendications 8 à 11, pour lequel l'électronique de transmetteur (ME) est conçue, sur la base d'une comparaison entre un jeu de données de référence et un jeu de données de mesure, de telle sorte à générer un message d'état du système, notamment déclaré en tant qu'alarme, notamment perceptible de façon visuelle et/ou acoustique, qui signale un écart du système de mesure par rapport à un état de référence déterminé au préalable à cette fin, notamment lors d'un étalonnage et/ou lors de la mise en service du système de mesure, lequel écart est dû notamment à un vieillissement du système de mesure et/ou dû à des fluctuations irréversibles des charges du transducteur en raison d'un comportement de vibration de l'au moins un tube de mesure.

**13.** Système de mesure selon l'une des revendications 9 à 12, pour lequel l'électronique de transmetteur est conçue de telle sorte à générer, au moyen de l'écart, $\Delta G_{ME}$, déterminé entre l'au moins une valeur mesurée de paramètre système et la valeur de référence de paramètre système correspondante, un message d'état du système, notamment déclaré en tant qu'alarme, notamment perceptible de façon visuelle et/ou acoustique, qui signale un écart du système de mesure dépassant une valeur de tolérance prédéfinie, par rapport à l'état de référence déterminé au préalable à cette fin, lequel écart est dû notamment à un vieillissement du système de mesure et/ou dû à des fluctuations irréversibles des charges du transducteur en raison d'un comportement de vibration de l'au moins un tube de mesure et/ou dû à des fluctuations des charges thermiques du transducteur en raison d'une impédance électrique et/ou d'une constante de conversion électromécanique de l'au moins un excitateur de vibrations et/ou dû à des fluctuations des charges thermiques du transducteur en raison d'une impédance électrique et/ou d'une constante de conversion électromécanique de l'au moins un capteur de vibrations.

**14.** Système de mesure selon la revendication précédente, pour lequel l'électronique de transmetteur est conçue de telle sorte à générer un message d'état du système, dans la mesure où l'écart, $\Delta G_{ME}$, déterminé dépasse un seuil représentant une valeur de tolérance prédéfinie à cette fin, notamment de telle sorte que l'écart, $\Delta G_{ME}$, déterminé représente plus de 0,1 % de la valeur de référence de paramètre système correspondante.

**15.** Système de mesure selon l'une des revendications précédentes,

- pour lequel le signal d'attaque présente simultanément la composante de signal de premier type et la composante de signal de second type, ce par quoi l'au moins un tube de mesure, mis en vibrations par l'au moins un excitateur de vibrations (41), exécute simultanément à la fois partiellement des vibrations en résonance, notamment avec une fréquence de vibration, $f_{drv,I} = f_1$, correspondant à une fréquence propre momentanée, $f_1$, du mode de vibration de premier ordre, et également des vibrations partiellement forcées hors résonance ; et/ou
- pour lequel la fréquence de signal, $f_{drv,II}$ de la composante de signal ($s_{drv,II}$) de second type du signal d'attaque ($s_{drv}$) est supérieure à 5 Hz, notamment supérieure à 10 Hz, et/ou pour lequel la fréquence de signal, $f_{drv,II}$ de la composante de signal ($s_{drv,II}$) de second type du signal d'attaque ($s_{drv}$) est supérieure à 0,1 fois la fréquence propre momentanée du mode de vibration de premier ordre ; et/ou
- pour lequel la fréquence de signal ($f_{drv,II}$) de la composante de signal de second type ($s_{drv,II}$) du signal d'attaque ($s_{drv}$) correspond à plus de 1,01 fois, notamment à plus de 1,15 fois, et à moins de 2,7 fois, notamment à moins de 2,4 fois, à une fréquence propre momentanée, $f_1$, du mode de vibration de premier ordre, ce par quoi
-- l'au moins un tube de mesure, mis en vibrations par l'au moins un excitateur de vibrations (41), est conçu de manière à exécuter partiellement des vibrations forcées hors résonance avec une fréquence de vibration située dans une gamme de fréquences, $| 1,01 \cdot f_1 < f_{drv,II} < 2,7 \cdot f_1 |$, au-delà de 1,01 fois, notamment au-delà de 1,15 fois, et en deçà de 2,7 fois, notamment en deçà de 2,4 fois la fréquence propre momentanée, $f_1$, du mode de vibration de premier ordre, et

-- la fréquence de signal de la deuxième composante de signal ($s_{sens1,II}$) du signal de vibration ($s_{sens1}$) se situe au-delà de 1,01 fois, notamment au-delà de 1,15 fois, et en deçà de 2,7 fois, notamment en deçà de 2,4 fois, la fréquence propre momentanée, $f_1$, du mode de vibration de premier ordre.

16. Système de mesure selon l'une des revendications précédentes,

- pour lequel la fréquence de signal ($f_{drv,II}$) de la composante de signal de second type ($s_{drv,\ II}$) du signal d'attaque est inférieure à la fréquence propre momentanée, $f_2$, d'un mode de vibration de second ordre de l'au moins un tube de mesure, dans lequel l'au moins un tube de mesure peut exécuter ou exécute des vibrations autour d'une position de repos, lesquelles vibrations présentent, dans la zone de la première et de la deuxième extrémité de tube, respectivement un nœud de vibration et, dans la zone de la longueur de vibration utile, un autre nœud de vibration ainsi qu'exactement deux ventres de vibration, ce par quoi

-- l'au moins un tube de mesure, mis en vibrations par l'au moins un excitateur de vibrations (41), exécute au moins partiellement des vibrations forcées hors résonance, notamment dans une gamme de fréquences, $I f_{drv,II} < f_2 I$, qui se situe en deçà de la fréquence propre momentanée du mode de vibration de second ordre, et

-- l'au moins un signal de vibration présente au moins temporairement une composante de signal de second type avec une fréquence de signal, qui se situe en deçà de la fréquence propre momentanée du mode de vibration de second type, notamment de telle sorte que

--- l'au moins un tube de mesure, mis en vibrations par l'au moins un excitateur de vibrations (41), exécute au moins partiellement des vibrations forcées hors résonance, notamment dans une gamme de fréquences, $I f_1 < f_{drv,II} < f_2 I$, qui se situe au-delà de la fréquence propre momentanée, $f_1$, du mode de vibration de premier ordre et en deçà de la fréquence propre momentanée, $f_2$, du mode de vibration de second ordre, et

--- l'au moins un signal de vibration présente au moins temporairement une composante de signal de second type avec une fréquence de signal, qui se situe au-delà de la fréquence propre momentanée du mode de vibration de premier ordre et en deçà de la fréquence propre momentanée du mode de vibration de second ordre ; et/ou

- pour lequel la fréquence de signal de la composante de signal de premier type du signal d'attaque ($s_{drv}$) correspond à une fréquence propre momentanée d'un mode de vibration de flexion naturel, dans lequel l'au moins un tube de mesure vibrant exécute des vibrations de flexion autour de la position de repos, lesquelles vibrations présentent, dans la zone de la première et de la deuxième extrémité de tube, respectivement un nœud de vibration et, dans la zone de la longueur de vibration utile, exactement un ventre de vibration (mode de vibration de flexion fondamental), ce par quoi

-- l'au moins un tube de mesure, mis en vibrations par l'au moins un excitateur de vibrations (41), exécute au moins partiellement, notamment essentiellement, des vibrations de flexion en résonance, notamment avec une fréquence de vibration correspondant à une fréquence propre momentanée du mode de vibration de flexion, et

- la fréquence de signal de la composante de signal de premier type de l'au moins un signal de vibration correspond à la fréquence propre momentanée du mode de vibration de flexion.

Fig. 1b

Fig. 1a

Fig. 2b

Fig. 2a

Fig. 3

Fig. 4

Fig. 5

Fig. 6

Fig. 7

Fig. 8

EP 2 638 367 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- EP 816807 A
- JP 8136311 A
- JP 9015015 A
- US 20060112774 A
- US 20070062308 A
- US 20070113678 A
- US 20070119264 A
- US 20070119265 A
- US 20070151370 A
- US 20070151371 A
- US 20070186685 A
- US 20080034893 A
- US 20080041168 A
- US 20080141789 A
- US 20100050783 A
- US 0100139416 A2
- US 20100139417 A
- US 20100236338 A
- US 20100242623 A
- US 20100242624 A
- US 0100011882 A2
- US 20100251830 A
- US 4680974 A
- US 4738144 A
- US 4777833 A
- US 4801897 A
- US 4823614 A
- US 4879911 A
- US 5009109 A
- US 5024104 A
- US 5050439 A
- US 5291792 A
- US 5359881 A
- US 5398554 A
- US 5476013 A
- US 5531126 A
- US 5602345 A
- US 5691485 A
- US 5734112 A
- US 5796010 A
- US 5796011 A
- US 5796012 A
- US 5804741 A
- US 5861561 A
- US 5869770 A
- US 5945609 A
- US 5979246 A
- US 6047457 A

- US 6092429 A
- US 6073495 A
- US 6311136 A
- US 6223605 B
- US 6330832 B
- US 6397685 B
- US 6513393 B
- US 6557422 B
- US 6651513 B
- US 6666098 B
- US 6691583 B
- US 6840109 B
- US 6868740 B
- US 6883387 B
- US 7017424 B
- US 7040179 B
- US 7073396 B
- US 7077014 B
- US 7080564 B
- US 7134348 B
- US 7216550 B
- US 7299699 B
- US 7305892 B
- US 7360451 B
- US 7392709 B
- US 7406878 B
- US 7562586 B
- WO 0014485 A
- WO 0102816 A
- WO 03021205 A
- WO 2004072588 A
- WO 2005040734 A
- WO 2005050145 A
- WO 2007097760 A
- WO 2008013545 A
- WO 2008077574 A
- WO 9529386 A
- WO 9516897 A
- WO 9605484 A
- WO 9940394 A
- DE 102009055069
- DE 102010039627
- WO 9939164 A
- WO 2009134830 A
- US 6711958 B
- US 5349872 A
- US 6006609 A
- US 6920798 B
- US 5731527 A

- US 6311136 B
- US 7284449 B
- US 6910366 B
- US 5576500 A